# EUROPÄISCHE PATENTSCHRIFT

(11) **EP 2 881 383 B1**
(45) Veröffentlichungstag und Bekanntmachung des Hinweises auf die Patenterteilung: **24.06.2020**
(21) Anmeldenummer: 14004022.1
(22) Anmeldetag: 28.11.2014
(51) Int. Cl.: B01F 7/16, B01F 13/08, B01F 13/00, B01F 15/00, B01F 15/06, C09K 19/06, C09K 19/30

(54) **Mischvorrichtung und deren Verwendung**
Mixing device and its use
Dispositif de mélange et son utilisation

(30) Priorität: 03.12.2013 DE 102013018094
(43) Veröffentlichungstag der Anmeldung: 10.06.2015
(73) Patentinhaber: Merck Patent GmbH, 64293 Darmstadt (DE)
(72) Erfinder: Gensert, Thomas, 64859 Eppertshausen (DE); Haeberl, Michael, 64807 Dieburg (DE); Hauke, Guenter, 64367 Muehltal (DE)

(56) Entgegenhaltungen:
- EP-A1- 0 069 909
- EP-A1- 2 033 707
- CH-A- 228 208
- DE-A1- 4 002 527
- DE-A1-102010 028 774
- DE-T5-112004 001 671
- GB-A- 2 116 059
- JP-A- S57 127 431
- US-A1- 2001 024 400
- US-A1- 2008 245 265

## Beschreibung

Die Erfindung betrifft eine Mischvorrichtung und deren Verwendung.

Im Stand der Technik sind eine Vielzahl von Mischverfahren und Mischbehälter bekannt. Es kann zwischen invasiven und nichtinvasiven Mischverfahren unterschieden werden.

Bei den invasiven Mischverfahren wird eine mechanische Rührvorrichtung wie beispielsweise ein Rührer in ein Gefäß mit den zu mischenden Substanzen eingetaucht und durch eine Bewegung der Rührvorrichtung in dem Gefäß eine Vermischung des Mischguts erzwungen. Die Rührvorrichtung kann dabei mehrere Mischarme aufweisen.

Im Gegensatz zu invasiven Verfahren wird bei nichtinvasiven Mischverfahren ein Behälter mit dem darin befindlichen Inhalt in Bewegung versetzt. In der einfachsten Form besteht die Bewegung in einem Hin- und Herschwenken des Gefäßes. Nachteilig hierbei sind die starken Vibrationen, die durch die beweglichen Gelenke und Teile bei der mechanischen Bewegungserzeugung entstehen, wodurch eine eventuelle Aerosolbildung des flüssigen Mischgutes möglich ist. Zudem können einzelne Komponenten des Mischgutes durch die starken mechanischen Mikroerschütterungen in ihrer Substanz verändert oder zerstört werden können.

Um eine möglichst sanfte Durchmischung zu erreichen kann ein Mischbehälter mit den zu mischenden Flüssigkeiten in einen größeren Außenbehälter, der mit einer Flüssigkeit gefüllt ist, schwimmend eingebracht werden. Der äußere Behälter kann so konstruiert sein, dass er an seiner Unterseite einen Wassereinfüllstutzen besitzt, der so gebogen ist, dass einströmendes Wasser die Wassersäule im Außenbehälter in eine Drehbewegung versetzt. Aufgrund der Reibung zwischen der sich drehenden Wassersäule und der Außenwand des schwimmenden Mischbehälters beginnt dieser sich ebenfalls zu drehen, wodurch die im Mischbehälter angeordneten Flüssigkeiten sanft durchmischt werden. Nachteilig ist hierbei jedoch eine nur langsame und möglicherweise unzureichende Durchmischung, da sich die Drehrichtung der Wassersäule im Außenbehälter und damit einhergehend eine Drehbewegung des Mischbehälters nur langsam beeinflussen und verändern lässt.
In der Regel weisen industriell genutzte Mischbehälter einen vorzugsweise druckdichten Tankbehälter aus Metall oder Kunststoff auf, in welchem eine Reihe von Ausrüstungsgegenständen und Vorrichtungen zur Verarbeitung der darin enthaltenen Stoffe sowie zur Überwachung und Steuerung des Mischungsprozesses installiert sind. Solche Vorrichtungen umfassen typischerweise einen Rührer, der innerhalb des Behälters in verschiedenen Lagen montiert sein kann, zum Beispiel mit senkrechter oder geneigter Achse, gleichachsig mit dem Behälter oder exzentrisch. Außerdem kann die Vorrichtung eine oder mehrere Schwallwände aufweisen, die an den Behälterwänden zur Erhöhung der Vermischung der Stoffe während des Rührens befestigt sind. Zum Befüllen oder Entleeren sowie zur Kontrolle während eines Mischvorgangs kann die Vorrichtung weiterhin beispielsweise Tauchröhren zur Eingabe von Prozessstoffen, zur Inertisierung des homogenisierten Produktes oder zur Produktentnahme, Temperaturmessgeräte für das Mischgut oder Druckmessgeräte für den Tankinnendruck aufweisen. Bei einer Anwendungen mit chemisch sehr aggressiven Stoffen können der Behälter oder die Vorrichtungen außerdem mit einem säurebeständigen Material (wie z. B. Glas-, Keramikemail oder ähnlichem) ausgekleidet bzw. überzogen sein. Die einzelnen Mischbehälter werden oftmals auf die speziellen Anforderungen eines vorgegebenen Mischguts angepasst und optimiert, wie z.B. aus der EP 0 060 909 A1 bekannt, wo ein Misch- oder Reaktionsbehälter zur Herstellung eines Massivstoffs oder Schaumstoff bildendes Reaktionsgemisches beschrieben wird. Die US 2008/0245265 A1 offenbart eine Mischvorrichtung entsprechend dem Oberbegriff des Anspruchs 1.

Es wird als nachteilig empfunden, dass keine Mischvorrichtung bekannt ist, die mit einfachen Mitteln eine homogene Mischung von möglichst vielfältigen viskosen Fluiden, bzw. pulverförmigen, flüssigen, sowie smektischen oder isotropen Materialien ermöglicht.
Aufgabe der Erfindung ist es, eine Mischvorrichtung bereitzustellen, die nicht die Nachteile der bekannten Behälter aufweist und zum Mischen von unterschiedlichen Flüssigkeiten bzw. zum Mischen von mesogenen Verbindungen und ggf. Additiven zur Herstellung von Flüssigkristallmischungen, genutzt werden kann.

Diese Aufgabe wird erfindungsgemäß durch eine Mischvorrichtung entsprechend Anspruch 1 gelöst.

Es hat sich überaschenderweise herausgestellt, dass mit der erfindungsgemäßen Mischvorrichtung bzw. mit einer Mischvorrichtung mit den vorangehend aufgeführten Merkmalen pulverförmige, flüssige sowie smektische Materialien oder Produkte homogen und schonend gemischt werden können, wobei die jeweiligen Mischzeiten erheblich reduziert werden konnten. Es war zudem überraschend, dass die Mischvorrichtung dazu verwendet werden kann, viele verschiedene Fluide mit unterschiedlichen Viskositäten sehr effektiv zu mischen. Ferner war es überraschend, dass eine hohe Skalierbarkeit der Mischvorrichtung gegeben ist und unterschiedliche Mischvolumina zwischen einigen wenigen Litern oder weniger bis zu mehrere Hunderten von Litern keine nachteiligen Einflüsse auf den Mischerfolg ausüben. Die Mischvorrichtung kann eine beliebige Füllhöhe mit dem zu mischenden Fluid aufweisen.
Im Rahmen der vorliegenden Erfindung werden unter dem Begriff Fluide alle fließfähigen anorganischen, organischen oder biologischen Systeme oder Gemische, beispielsweise echte oder kolloidale Lösungen, Suspensionen, Emulsionen, Schmelzen, Dispersionen, Flüssig/Gas-Dispersionen oder Mischungen daraus, verstanden. Auch flüssigkristalline Mischungen mit positiver oder dielektrisch negativer Anisotropie Δε, z.B. für TN-, TN-TFT-, VA-, polymer stabilised (PS)-VA-, IPS-, PS-IPS, FFS-, PS-FFS-Anwendungen, sowie isotrop flüssige Mischungen sind im Sinne der vorliegenden Erfindung als Flüssigkeiten zu verstehen. Die erfindungsgemäße Vorrichtung soll insbesondere auch für Flüssigkeiten mit höheren Viskositäten sowie für Flüssigkeiten mit nicht-Newton'schem Fließverhalten, beispielsweise mit strukturviskosem Fließverhalten oder für Bingham-Körper, eine gleichmäßige Vermischung ohne Ausbildung von stagnanten Zonen gewährleisten.
Es ist allgemein bekannt, für Mischaufgaben Rührbehälter einzusetzen, die mit Rührern, beziehungsweise mit einem Rührwerk versehen sind, wobei der Rührer im Boden zentrisch angeordnet wird. Bei zentrisch in unbewegten Rührbehältern angeordneten Rührern wird die Flüssigkeit in Rotation versetzt, wobei sich eine sogenannte Flüssigkeitstrombe ausbildet. Solange die Trombe nicht so groß ist, dass der Rührer Luft in die Flüssigkeit einschlagen kann, hat die Trombenform sowohl auf die Rührleistung als auch auf die Mischwirkung keinen Einfluss. Die Form und Tiefe von Tromben in gerührten Behältern hängen unter anderem von der Rührerdrehzahl, dem Rührertyp und der Rührergeometrie, von den Stoffeigenschaften der Flüssigkeit, von der Füllstandshöhe sowie vom Behälterdurchmesser ab. Erfindungsgemäß ist vorgesehen, den Rührer unten seitlich in den Innenraum einzubringen, wodurch effizient eine Partikelgenerierung reduziert werden kann. Außerdem kann durch den unten seitlich eingebrachten Rührer sichergestellt werden, dass auch niedrige Füllhöhen der Mischvorrichtung eine effiziente Durchmischung erfahren. Versuchsreihen haben zudem gezeigt, dass durch die Anordnung des Rührers eine besonders kompakte Bauform der Mischvorrichtung realisiert werden kann, was sich wiederum in geringeren Herstellungskosten und Wartungskosten niederschlägt.

Zudem kann durch die kompakte Bauform und die seitliche Anbringung des Rührers eine Transportvorrichtung insbesondere mit Bewegungsmitteln, wie z. B. Rollen unter der Mischvorrichtung angeordnet werden, so dass ein einfaches Bewegen der Mischvorrichtung ohne weiteres möglich ist.

Dadurch, dass der Rührer bevorzugt nicht zentrisch im Boden angeordnet ist, kann hier eine Entnahmeöffnung mit einem Bodenablaufventil eingebracht werden. In Kombination mit der nach außen gewölbten Ausgestaltung des Bodens hat dies zur Folge, dass eine vollständige Entleerung des Mischbehälters erreicht werden kann. Dies kann zusätzlich noch dadurch begünstigt werden, dass das Bodenablaufventil in einem bevorzugt konisch zulaufenden Boden angeordnet ist. Als Bodenablauf sind insbesondere Membranventile oder Ventile mit Kugelhahn bevorzugt.

Es ist ebenfalls möglich, den Rührer von oben durch den Deckel in den Innenraum einzubringen. Dabei kann der Rührer mittig oder seitlich im Deckel angeordnet sein und entweder vertikal oder in einem Winkel zur Lotrechten schräg in den Behälter hineinragen. Auf diese Weise können nahezu beliebige Anordnungen eines Rührers in dem Innenraum des Behälters realisiert werden.

Deckel und Boden der Mischvorrichtung können bezüglich der Mischbehälterhauptachse rotationssymmetrische Bauformen aufweisen. Der Deckel kann auch flach oder gewölbt ausgestaltet sein. Besonders bevorzugt ist eine Ausgestaltung des Bodens als Klöpperboden nach DIN 28011 oder als Korbbogenboden nach DIN 28013.

Der bevorzugte Rührer besteht vorzugsweise aus einer Rührwelle und einem daran angeordneten Rührorgan oder Rührwerk. Die Drehbewegung der Rührwelle wird in bekannter Weise durch Ankopplung an einen außerhalb der Mischvorrichtung befindlichen Motor mit Getriebe bewirkt. Hierbei ist es bevorzugt, dass das Rührwerk mechanisch oder magnetisch betrieben ist. Der Antrieb befindet sich dabei in Abhängigkeit von der Anordnung des Rührers vorteilhafterweise unterhalb der Mischvorrichtung mit einer Wellendurchführung durch den Boden, oder oberhalb der Mischvorrichtung mit einer Wellendurchführung durch den Deckel. Versuche haben gezeigt, dass hierdurch eine optimale Mischung auch bei niedrigen Drehzahlen des Rührers erreicht werden kann. Als Wellendurchführungen kommen insbesondere die dem Fachmann bekannten Vorrichtungen, beispielsweise Stopfpackungen, Gleitringdichtungen oder doppelwirkende Gleichringdichtungen in Frage. Möglich ist aber auch ein magnetgekoppelter Antrieb des Rührers ohne Wellendurchführung.

Als an der Welle befestigten Rührorgane, welche die Bewegungsenergie des Rührers auf die Flüssigkeit übertragen, sind alle dem Fachmann bekannten handelsüblichen Ausführungen geeignet, die in der Lage sind, eine in der Mischvorrichtung rotierende Flüssigkeitsströmung mit Trombe zu erzeugen. Als Rührer können beispielsweise verwendet werden: Propellerrührer, Scheibenrührer, Schrägblattrührer, Impellerrührer, Blattrührer, Kreuzbalkenrührer, Mehrphasen-Gegenstromrührer, Mehrphasen-Interferenz-Gegenstromrührer, Fingerrührer, Ankerrührer oder Wendelrührer. Es kann auch in bestimmten Anwendungsfällen vorteilhaft sein, einen oder mehrere Rührorgane von gleicher oder unterschiedlicher Bauart an der Rührerwelle zu befestigen, wobei die Einbautiefe, bezogen auf den Flüssigkeitsstand, beliebig ist.

Die Mischvorrichtung weist vorzugsweise einen Mischbehälter mit einem Innenraum auf, der möglichst glattwandige Innenflächen aufweist, die zum Beispiel durch Schleifen, Passivieren und Beizen, sowie Elektropolieren von Edelstählen erreicht werden können. Hierdurch wird eine schnelle und zuverlässige Befüllung beziehungsweise Entleerung der Mischvorrichtung gefördert.

Der Deckel des Mischbehälters weist mindestens eine Behälteröffnung mit einer Schnellanschlusseinrichtung auf, die insbesondere für eine Inertisierung bzw. eine Inertisierungslanze, für Stromstörer, für Mittel zur Druckbeaufschlagung, für Mittel zur Bereitstellung eines Vakuums, als Mannloch zur Befüllung, als Schauglas und für Leuchten und/oder für Mittel zur Probenentnahme genutzt werden kann. Vorteilhafterweise weist die Mischvorrichtung weitere Behälteröffnungen mit Schnellanschlusseinrichtungen beispielsweise für Filter, für Aufreinigungssysteme, für Mittel zur Probeentnahme, für Sicherheitsvorrichtungen und für Inertisierungsmittel im Mantel und/oder im Boden auf. Diesbezüglich kann es vorteilhaft sein, dass bei großen Mischbehältern im Deckel ein Mannloch mit einer Sichtscheibe vorgesehen ist. Hierdurch kann eine einfache Beobachtung des Mischvorganges erfolgen.

Eine bevorzugte und vorteilhafte Schnellanschlusseinrichtung ist insbesondere ein standardisierter Clamp-Anschluss. Selbstverständlich kann der Deckel eine Vielzahl von Schnellanschlusseinrichtungen, insbesondere Clamp-Anschlüsse aufweisen. Clamp-Anschlüsse haben insbesondere den Vorteil, dass diese schnell und sicher gewechselt und gereinigt werden können. Besonders bevorzugt sind Clamp-Anschlüsse gemäß den DIN Normen 32676, 11851, 11864 und 11853. Zudem wird eine universelle Einsetzbarkeit der erfindungsgemäßen Mischvorrichtung garantiert, da über die Schnellanschlusseinrichtungen unterschiedliche funktionelle Mittel in den Behälter eingebracht, aber auch Proben entnommen oder Beobachtungen durchgeführt werden können. Neben dem Deckel kann in einer bevorzugten Ausführungsform der Erfindung der Behälter Öffnungen und Anschlüsse aufweisen, wobei Clamp-Anschlüsse, Flansche und Rohrverschraubungen bevorzugt sind.

Öffnungen in dem Mantel der Mischvorrichtung, in dem Boden oder in dem Deckel können zum Einbringen von handelsüblichen Instrumenten, Apparaturen oder Sonden zur Überwachung relevanter Prozessgrößen wie zum Beispiel Temperatur, Druck, Füllstand, Konzentrationen, pH-Wert oder andere qualitätsrelevante Größen genutzt werden. Vorzugsweise sind in der Mischvorrichtung mindestens Mittel zur Temperatur- und/oder Druckmessung eingebracht. Die Temperatur- und Druckmessung erfolgt vorzugsweise mittels Messfühler, die in einer Probensonde, in einem Stromstörer oder in einer Wand des Mischbehälters, insbesondere in dem Mantel eingebracht sind. Ebenso können eine oder mehrere Öffnungen zur qualitätskontrollrelevanten Probenentnahme genutzt werden. Auch können Öffnungen zur visuellen Beobachtung des Mischprozesses mittels Schaugläsern verwendet werden.

Des Weiteren kann erfindungsgemäß vorgesehen sein, eine Inspektionsöffnung oder ein Handloch im Deckel vorzusehen. Zur Zuführung von gasförmigen Komponenten kann der Behälter mit einer dem Fachmann bekannten Form einer Gaszuführung, beispielsweise mit Rohrverteilern, Ringverteilern oder Fritten ausgerüstet sein.

Die Mischvorrichtung kann beliebig an dem Mantel wie auch am Deckel und am Boden des Mischbehälters mit Öffnungen und Stutzen für Zu- und Abläufe versehen sein. Vorzugsweise erfolgen die Zuläufe durch Öffnungen oder Stutzen im Behälterdeckel derart, dass die zulaufenden Stoffe möglichst schnell mit dem Mischbehälterinhalt gemischt werden. Dies kann zum Beispiel durch Zulauf in die Trombe erfolgen. Jedoch können Einlaufrohre mit beliebiger Länge und Form zum Zuführen von Stoffen im Wesentlichen an jedem beliebigen Ort des Behälters angeordnet sein und an beliebigen Positionen innerhalb des Innenraums des Behälters münden.

Abläufe können durch Einsteckrohre jeder beliebigen Länge und Form oder auch nur durch Ablauföffnungen realisiert werden.

Die Mischvorrichtung bzw. der Mischbehälter ist bevorzugt aus Edelstahl gefertigt. Edelstahl ist gegen Wasser, Wasserdampf, Luftfeuchtigkeit sowie schwache anorganische und organische Säuren beständig und garantiert somit eine dauerhafte Einsetzbarkeit und lange Wartungsintervalle der Mischvorrichtung. Generell können als Werkstoff zur Herstellung der Mischvorrichtung sowie des Deckels und des Bodens alle metallischen oder nichtmetallischen Materialien verwendet werden, die der Mischvorrichtung eine ausreichende Festigkeit, Härte und Resistenz gegenüber den im Inneren gehandhabten chemischen Stoffen und physikalischen Bedingungen wie Über- oder Unterdruck und Temperatur verleihen. Weiterhin bevorzugt sind zum Beispiel legierte oder nicht legierte Stähle, Zirkon, Titan, Glas, Emaille oder Kunststoffe. Möglich sind auch mit Kunststoffen oder Emaille beschichtete Eisen- oder Stahlkonstruktionen.

In einer bevorzugten Ausführungsform weist die Mischvorrichtung eine haftungsmindernde Innenbeschichtung auf. Hierdurch kann eine vollständige Entleerung des Behälters unterstützt werden. Außerdem haben Versuchsreihen gezeigt, dass durch ein geeignetes unbeschichtetes Behältermaterial insbesondere bei den Innenflächen oder ein mit einer geeigneten Beschichtung überzogenes Behältermaterial eine Beeinträchtigung des zu mischenden Produkts, beziehungsweise der Produktqualität nahezu ausgeschlossen werden kann. Die Mischvorrichtung kann hierdurch überraschenderweise rückstandsfrei gereinigt werden, zum Beispiel mittels eines manuellen Verfahrens beziehungsweise mittels eines CIP-Reinigungsverfahrens. Zur Verbesserung der Reinigung der Mischvorrichtung können in einer bevorzugten Ausführungsform der Erfindung im Innenraum Reinigungsdüsen angeordnet sein, die mit Wasser, nach Bedarf auch mit Reinigungs- oder Desinfektionsmitteln, beschickt werden.
Gemäß einer Ausgestaltung des Erfindungsgedankens ist vorgesehen, dass zusätzlich am Mantel und/oder Deckel mindestens ein Stromstörer angebracht ist. Die Stromstörer sind vorzugsweise nach innen in den

Innenraum ragende Ausformungen wie zum Beispiel Lamellen oder gelochte Flächenelemente aus Metall oder Kunststoff. Die Stromstörer werden insbesondere dazu verwendet, eine verbesserte Vermischung von den im Behälter befindlichen Inhaltsstoffen zu gewährleisten. Dies wird vorzugsweise dadurch bewirkt, dass die Stromstörer eine Mitbewegung der in dem Behälter befindlichen Flüssigkeit mit etwa gleicher Geschwindigkeit wie der Rührer im Behälter verhindern. Die Stromstörer bewirken eine Umwandlung von Tangential- in Axialströmung. Durch die Stromstörer werden insbesondere Verwirbelungen erzwungen, die die Vermischung der zu mischenden Materialien, wie z.B. mesogene Verbindungen zur Herstellung von Flüssigkristallmischungen, begünstigen.

Die Stromstörer können vorteilhafterweise auch beweglich, insbesondere drehbar ausgestaltet sein. Um ein Abfließen von Flüssigkeit zu ermöglichen, sind die Stromstörer im eingebauten Zustand vorzugsweise geringfügig relativ zur Vertikalen der Mischvorrichtung geneigt. Eine Neigung nach innen oder außen ist ebenso denkbar wie ein Verkippen in tangentialer Richtung. Der Querschnitt der Stromstörer kann vorzugsweise stabförmig, paddelförmig, löffelförmig, schaufelförmig, C- oder sichelförmig ausgestaltet sein. Es sind jedoch jegliche Geometrien der Stromstörer geeignet. Auch können die Stromstörer hohl ausgebildet sein, damit sie Mittel zur Erfassung von Prozessparametern behausen. Des Weiteren können hohle Stromstörer für die Zu- und/oder Abführung von Stoffen in und/oder aus dem Behälter verwendet werden. Es können auch dem Fachmann bekannte Wandbewehrungen eingesetzt werden, die im Wesentlichen an dem Mantel des Behälters im Innenraum angebracht werden.

Des Weiteren ist es erfindungsgemäß möglich, dass im Innenraum der Mischvorrichtung Heiz- und/oder Kühlelemente angeordnet sind, wobei bevorzugt das Gehäuse einen Thermostatisierungsmantel aufweist. Die Mischvorrichtung kann mit üblichen Temperierungsmöglichkeiten für die zu mischenden Flüssigkeiten, beispielsweise einem äußeren Doppelmantel, mit außerhalb auf der Rührbehälterwand anliegenden Rohren oder mit aufgeschweißten Halbrohrprofilen ausgerüstet sein. Wärmetauscherrohre oder aufgeschweißte Halbrohrprofile können sich auch in jeder beliebigen Ausführungsform und Länge innerhalb des Behälters befinden. Die Heiz- bzw. Kühlmedien können flüssig oder gasförmig sein. Möglich ist auch jede Ausführung einer elektrischen Beheizung auf der Behälteraußenwand. Insbesondere durch die Benutzung eines Thermostatisierungsmantels kann zusätzlich durch auf das zu fertigende Produkt abgestimmte Heiz- und Kühlrampen die Güte der Homogenisierung sowie nachfolgender Prozessschritte positiv beeinflusst werden. Bevorzugt sind dabei Heizmäntel mit einer Isolation sowie dem Fachmann bekannte "pillow plates"-Heizmäntel mit Isolation. Die Thermostatisierungsmäntel können in vorteilhafter Weise den Boden, den seitlichen und den oberen Bereich des Behälters umgeben. Hierdurch kann überraschenderweise erreicht werden, dass noch nicht homogenisierte Produktreste kaum oder nicht mehr an der Wand des Innenraums hängen bleiben.

Vorzugsweise sind an den Seiten der Mischvorrichtung Griffe und Rollen zum Transport angebracht. Diese können zum Verfahren der Mischvorrichtung zu einzelnen Verfahrens- beziehungsweise Produktionsschritten genutzt werden.

Gemäß einem Aspekt der Erfindung kann die zuvor beschriebene Mischvorrichtung zum Mischen von Fluiden, Fluiden mit Flüssigkeiten, Feststoffen und/oder Gasen verwendet werden, wobei insbesondere die zu mischenden Fluide verschiedene Viskositäten besitzen können. Insbesondere wird die Mischvorrichtung zur Herstellung von Flüssigkristallmischungen verwendet, wobei auch eine Verwendung im pharmazeutischen Bereich (zum Beispiel zur Herstellung von Fertignährböden) oder Lebensmittelbereich (zum Beispiel zum Mischen von nichtalkoholischen oder alkoholischen Getränken) möglich ist.

Weitere vorteilhafte Ausgestaltungen werden anhand eines in der Zeichnung dargestellten Ausführungsbeispiels näher erläutert.

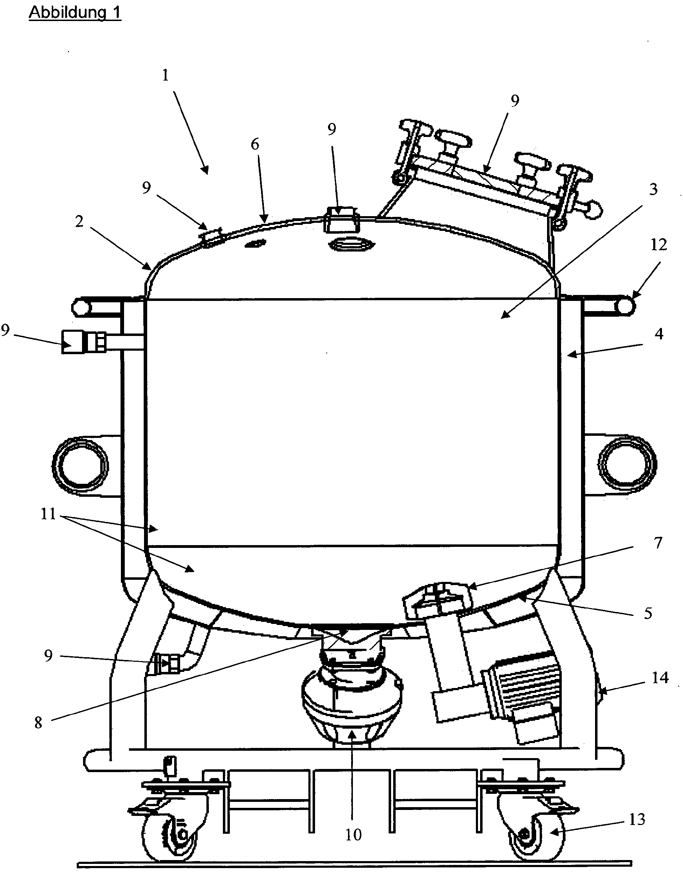

Die Abbildung 1 zeigt eine schematische Darstellung einer erfindungsgemäßen Mischvorrichtung 1. Die Mischvorrichtung 1 weist eine Mischbehälter 2 mit einem Gehäuse aus einem einen Innenraum 3 umgebenden Mantel 4, einem nach außen gewölbten Boden 5 und einem Deckel 6 auf. In dem Mischbehälter 2 ist ein Rührwerk 7 angeordnet. Der Mischbehälter weist in dem Boden 5 eine Entnahmeöffnung 8 auf. In dem dem Boden 5 gegenüberliegend angeordneten Deckel 6 ist eine Behälteröffnung 9 mit einer nicht näher dargestellten Schnellanschlusseinrichtung eingebracht. Die Behälteröffnung 9 im Deckel 6 ermöglicht es zum Beispiel durch den Einsatz eines Mannloches mit einer Glasscheibe, dass zunächst das zu mischende Gut durch die geöffnete Behälteröffnung 9 in den Behälter 2 eingebracht werden und anschließend durch die Glasscheibe der geschlossenen Behälteröffnung 9 hindurch der Prozessfortschritt beobachtet werden kann.

Weiterhin kann die Behälteröffnung 9 für eine Inertisierung bzw. für eine Inertisierungslanze, für Stromstörer, für Mittel zur Druckbeaufschlagung, für Mittel zur Bereitstellung eines Vakuums, für eine Leuchte und/oder für die Einbringung von Mitteln zur Probenentnahme, von Filtern, von Aufreinigungssystemen und/oder von Sicherheitsvorrichtungen genutzt werden. Weitere Behälteröffnungen mit Schnellanschlusseinrichtungen können insbesondere im Mantel 4, im Deckel 6 oder in dem Boden 5 vorgesehen sein.

Das Rührwerk 7 ist unten seitlich in den Innenraum 3 eingeführt. Insbesondere die seitliche Einbringung des Rührwerks 7 hat sich als vorteilhaft erwiesen, da hierdurch eine unerwünschte Partikelgenerierung während des Mischvorgangs effizient verhindert werden kann.

Die Entnahmeöffnung 8 ist zentrisch im Boden 5 angeordnet und weist ein Bodenablaufventil 10, zum Ablassen der Mischung auf. Die zentrische Anordnung des Ventils 10 garantiert hierbei eine im Wesentlichen vollständige Entleerung der Mischvorrichtung 1.

Zusätzlich kann das Vermischen noch durch in dem Innenraum 3 integrierte Stromstörer 11 verbessert werden. Die Stromstörer 11 sind am Mantel 4 und an dem Boden 5 angebracht. Auch dem Fachmann bekannte Wandbewehrungen (nicht dargestellt) können im Innenraum der Mischvorrichtung 1 verbaut sein.

Vorteilhafterweise sind Anschweißstutzen (z. B. der Stromstörer) in der Mischvorrichtung 1 derart ausgestaltet, dass eine rückstandsfreie Reinigung möglich ist.

An der Seite des Mischbehälters 2 können Griffe 12 für den Transport, Mittel zur Probenentnahme, Halterungen für einen Lifter, Anschlüsse für Heiz- und Kühlmittel, ein Antrieb 14 für den Rührer, eine Wellendurchführung und/oder Mittel zur Temperatur- und Druckmessung vorliegen. An der Unterseite des Mischbehälters 2 sind Mittel zum Transport des Behälters (zum Beispiel Rollen 13) angebracht, so dass ein einfacher Transport der Mischvorrichtung 1 möglich ist.

Die erfindungsgemäße Mischvorrichtung ist insbesondere geeignet zur Herstellung von Flüssigkristallmischungen. Das Mischen der Einzelkomponenten zur Herstellung der Flüssigkristallmischungen wird besonders vorteilhaft und schonend durchgeführt. Besonders bevorzugt lassen sich in der erfindungsgemäßen Mischvorrichtung zwei oder mehrere organische Substanzen, vorzugsweise mesogene, insbesondere flüssigkristalline Substanzen, miteinander mischen, die ausgewählt sind aus den Verbindungen der allgemeinen Formel I, 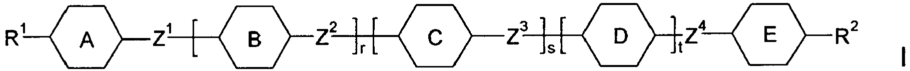 worin
R¹ und R² jeweils unabhängig voneinander H, einen unsubstituierten, einen einfach durch CN oder CF₃ oder mindestens einfach durch Halogen substituierten Alkylrest mit bis zu 15 C-Atomen, wobei in diesen Resten auch eine oder mehrere CH₂-Gruppen durch -O-, -S-, 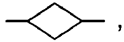 -C≡C-, -CH=CH-, -CF₂O-, -OCF₂-, -OC-O- oder -O-CO- so ersetzt sein können, dass O-Atome nicht direkt miteinander verknüpft sind, und einer der Reste R¹, R² auch F, Cl, CN, SF₅, NCS, SCN, OCN
Ringe A, B, C, D, E jeweils unabhängig voneinander 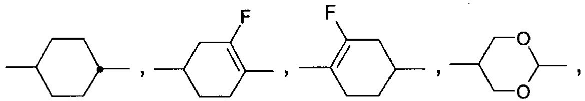 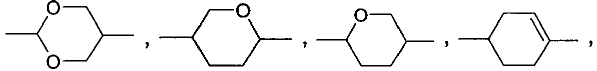 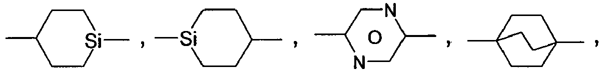 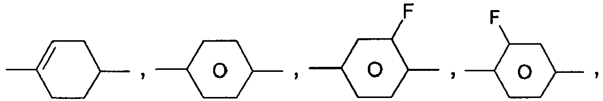 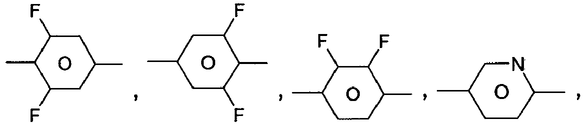 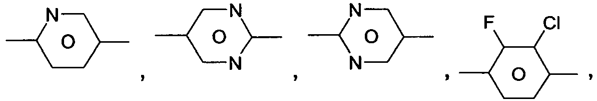 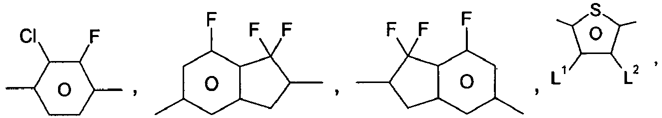 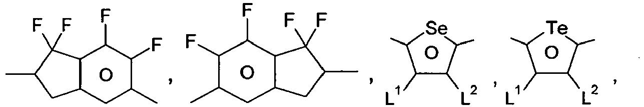 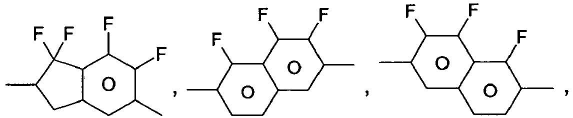 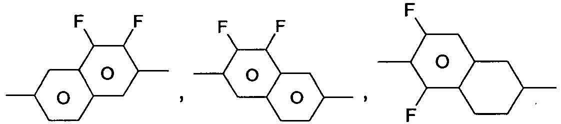 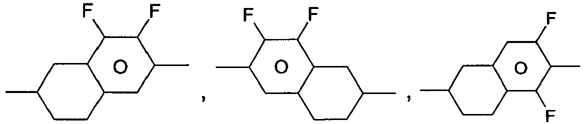 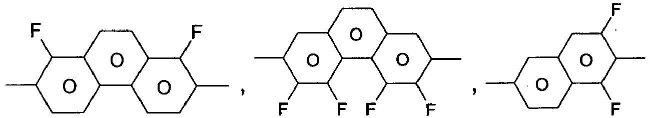 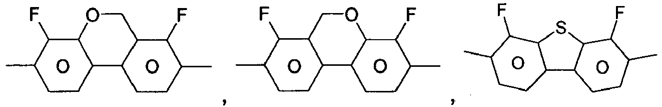 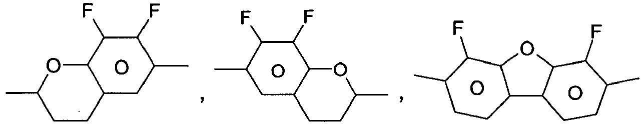
r, s und t jeweils unabhängig voneinander 0, 1, 2 oder 3, wobei r + s+ t ≤ 3 ist,
Z¹⁻⁴ jeweils unabhängig voneinander -CO-O-, -O-CO-, -CF₂O-, -OCF₂-, -CH₂O-, -OCH₂-, -CH₂CH₂-, -(CH₂)₄-, -CH=CH-CH₂O-, -C₂F₄-, -CH₂CF₂-, -CF₂CH₂-, -CF=CF-, -CH=CF-, -CF=CH-, -CH=CH-, -C≡C- oder eine Einfachbindung, und
L¹ und L² jeweils unabhängig voneinander H oder F,
bedeuten.

Für den Fall, dass r + s + t = 0 ist, so sind Z¹ und Z⁴ bevorzugt derart ausgewählt, dass sie, wenn sie keine Einfachbindung bedeuten, nicht über zwei O-Atome miteinander verknüpft sind.

Bei der Herstellung von Flüssigkristallmischungen aus den mesogenen Einzelsubstanzen ausgewählt vorzugsweise aus den Verbindungen der Formel I können auch polymerisierbare Verbindungen, sogenannte reaktive Mesogene (RMs), beispielsweise wie in U.S. 6,861,107 offenbart, in Konzentrationen von bevorzugt 0,12 - 5 Gew.%, besonders bevorzugt 0,2 - 2 %, bezogen auf die Mischung eingesetzt werden. Derartige Mischungen können für sogenannte Polymer Stabilized VA (PS-VA)-Modes, negativ IPS (PS-IPS)- oder negativ FFS (PS-FFS)-Modes, bei denen eine Polymerisierung der reaktiven Mesogene in der flüssigkristallinen Mischung erfolgen soll, verwendet werden. Voraussetzung hierfür ist, dass die Flüssigkristallmischung selbst keine polymerisierbaren Einzelsubstanzen, enthält.

Die polymerisierbaren mesogenen oder flüssigkristallinen Verbindungen, auch als "reaktive Mesogene" (RM) bezeichnet, sind vorzugsweise ausgewählt aus den Verbindungen der Formel II,

R^{a}-A¹-(Z¹-A²)ₘ-R^{b} II

worin die einzelnen Reste folgende Bedeutung haben:
- A¹ und A²: jeweils unabhängig voneinander eine aromatische, heteroaromatische, alicyclische oder heterocyclische Gruppe, vorzugsweise mit 4 bis 25 C-Atomen, welche auch annellierte Ringe enthalten kann, und welche optional durch L ein- oder mehrfach substituiert ist,
- Z¹: bei jedem Auftreten gleich oder verschieden -O-, -S-, -CO-,-CO-O-, -OCO-, -O-CO-O-, -OCH₂-, -CH₂O-, -SCH₂-, -CH₂S-,-CF₂O-, -OCF₂-, -CF₂S-, -SCF₂-, -(CH₂)n-, -CF₂CH₂-,-CH₂CF₂-, -(CF₂)ₙ-, -CH=CH-, -CF=CF-, -C≡C-, -CH=CH-COO-, -OCO-CH=CH-, CR⁰R⁰⁰ oder eine Einfachbindung,
- L, R^{a} und R^{b}: jeweils unabhängig voneinander H, Halogen, SF₅, NO₂, eine Kohlenstoffgruppe oder Kohlenwasserstoffgruppe, wobei die Verbindungen mindestens einen Rest L, R^{a} und R^{b} enthalten, der eine Gruppe P-Sp- bedeutet oder enthält,
- R⁰ und R⁰⁰: jeweils unabhängig voneinander H oder Alkyl mit 1 bis 12 C-Atomen,
- P: eine polymerisierbare Gruppe,
- Sp: eine Abstandsgruppe oder eine Einfachbindung,
- m: 0, 1, 2, 3 oder 4,
- n: 1, 2, 3 oder 4.

Die polymerisierbaren Verbindungen können eine polymerisierbare Gruppe (monoreaktiv) oder zwei oder mehr (di- oder multireaktiv), vorzugsweise zwei polymerisierbare Gruppen aufweisen.

Vor- und nachstehend gelten folgende Bedeutungen:
Der Begriff "mesogene Gruppe" ist dem Fachmann bekannt und in der Literatur beschrieben, und bedeutet eine Gruppe, die durch die Anisotropie ihrer anziehenden und abstoßenden Wechselwirkungen wesentlich dazu beiträgt, in niedermolekularen oder polymeren Substanzen eine Flüssigkristall(FK-)Phase hervorzurufen. Verbindungen enthaltend mesogene Gruppen (mesogene Verbindungen) müssen nicht unbedingt selbst eine FK-Phase aufweisen. Es ist auch möglich, dass mesogene Verbindungen FK-Phasenverhalten nur nach Vermischung mit anderen Verbindungen und/oder nach Polymerisation zeigen. Typische mesogene Gruppen sind beispielsweise starre stäbchen- oder scheibchenförmige Einheiten. Ein Überblick über die im Zusammenhang mit mesogenen bzw. FK-Verbindungen verwendeten Begriffe und Definitionen findet sich in Pure Appl. Chem. 73(5), 888 (2001) und C. Tschierske, G. Pelzl, S. Diele, Angew. Chem. 2004, 116, 6340-6368.
Der Begriff "Abstandsgruppe" (engl. "spacer" oder "spacer group"), vor- und nachstehend auch als "Sp" bezeichnet, ist dem Fachmann bekannt und in der Literatur beschrieben, siehe beispielsweise Pure Appl. Chem. 73(5), 888 (2001) und C. Tschierske, G. Pelzl, S. Diele, Angew. Chem. 2004, 116, 6340-6368. Falls nicht anders angegeben, bezeichnet der Begriff "Abstandsgruppe" bzw. "Spacer" vor- und nachstehend eine flexible Gruppe, die in einer polymerisierbaren mesogenen Verbindung ("RM") die mesogene Gruppe und die polymerisierbare(n) Gruppe(n) miteinander verbindet. Bevorzugt bedeutet Sp eine Einfachbindung oder ein 1-16 C Alkylen, worin ein oder mehrere CH₂-Gruppen durch -O-, -CO-, -COO- oder -OCO- so ersetzt sein können, so dass nicht zwei O-Atome direkt miteinander verbunden sind.

Der Begriff "organische Gruppe" bedeutet eine Kohlenstoff- oder Kohlenwasserstoffgruppe.

Der Begriff "Kohlenstoffgruppe" bedeutet eine ein- oder mehrbindige organische Gruppe enthaltend mindestens ein Kohlenstoffatom, wobei diese entweder keine weiteren Atome enthält (wie z.B. -C≡C-), oder gegebenenfalls ein oder mehrere weitere Atome wie beispielsweise N, O, S, P, Si, Se, As, Te oder Ge enthält (z.B. Carbonyl etc.). Der Begriff "Kohlenwasserstoffgruppe" bedeutet eine Kohlenstoffgruppe, die zusätzlich ein oder mehrere H-Atome und gegebenenfalls ein oder mehrere Heteroatome wie beispielsweise N, O, S, P, Si, Se, As, Te oder Ge enthält.

"Halogen" bedeutet F, Cl, Br oder I.

Die Begriffe "Alkyl", "Aryl", "Heteroaryl" etc. umfassen auch mehrbindige Gruppen, beispielsweise Alkylen, Arylen, Heteroarylen etc.
Der Ausdruck "Alkyl" umfasst in dieser Anmeldung geradkettige und verzweigte Alkylgruppen mit 1-7 Kohlenstoffatomen, insbesondere die geradkettigen Gruppen Methyl, Ethyl, Propyl, Butyl, Pentyl, Hexyl und Heptyl. Gruppen mit 1-6 Kohlenstoffatomen sind im allgemeinen bevorzugt.

Der Ausdruck "Alkenyl" umfasst in dieser Anmeldung geradkettige und verzweigte Alkenylgruppen mit 2-7 Kohlenstoffatomen, insbesondere die geradkettigen Gruppen. Bevorzugte Alkenylgruppen sind C₂-C₇-1E-Alkenyl, C₄-C₇-3E-Alkenyl, C₅-C₇-4-Alkenyl, C₆-C₇-5-Alkenyl und C₇-6-Alkenyl, insbesondere C₂-C₇-1E-Alkenyl, C₄-C₇-3E-Alkenyl und C₅-C₇-4-Alkenyl. Beispiele besonders bevorzugter Alkenylgruppen sind Vinyl, 1 E-Propenyl, 1E-Butenyl, 1 E-Pentenyl, 1E-Hexenyl, 1E-Heptenyl, 3-Butenyl, 3E-Pentenyl, 3E-Hexenyl, 3E-Heptenyl, 4-Pentenyl, 4Z-Hexenyl, 4E-Hexenyl, 4Z-Heptenyl, 5-Hexenyl, 6-Heptenyl und dergleichen. Gruppen mit bis zu 5 Kohlenstoffatomen sind im allgemeinen bevorzugt.

Der Ausdruck "Fluoralkyl" umfasst in dieser Anmeldung geradkettige Gruppen mit mindestens einem Fluoratom, vorzugsweise einem endständigem Fluor, d.h. Fluormethyl, 2-Fluorethyl, 3-Fluorpropyl, 4-Fluorbutyl, 5-Fluorpentyl, 6-Fluorhexyl und 7-Fluorheptyl. Andere Positionen des Fluors sind jedoch nicht ausgeschlossen.

Der Ausdruck "Oxaalkyl" bzw. "Alkoxy" umfasst in dieser Anmeldung geradkettige Reste der Formel CₙH₂ₙ₊₁-O-(CH₂)ₘ, worin n und m jeweils unabhängig voneinander 1 bis 6 bedeuten. m kann auch 0 bedeuten. Vorzugsweise ist n = 1 und m 1-6 oder m = 0 und n = 1-3.

Der Begriff "Aryl" bedeutet eine aromatische Kohlenstoffgruppe oder eine davon abgeleitete Gruppe. Der Begriff "Heteroaryl" bedeutet "Aryl" gemäß vorstehender Definition, enthaltend ein oder mehrere Heteroatome.

Die polymerisierbare Gruppe P ist eine Gruppe, die für eine Polymerisationsreaktion, wie beispielsweise die radikalische oder ionische Kettenpolymerisation, Polyaddition oder Polykondensation, oder für eine polymeranaloge Umsetzung, beispielsweise die Addition oder Kondensation an eine Polymerhauptkette, geeignet ist. Besonders bevorzugt sind Gruppen für die Kettenpolymerisation, insbesondere solche enthaltend eine C=C-Doppelbindung oder -C≡C-Dreifachbindung, sowie zur Polymerisation unter Ringöffnung geeignete Gruppen wie beispielsweise Oxetan- oder Epoxygruppen

Die Herstellung der polymerisierbaren Verbindungen erfolgt in Analogie zu dem Fachmann bekannten und in Standardwerken der organischen Chemie beschriebenen Verfahren, wie beispielsweise in Houben-Weyl, Methoden der organischen Chemie, Thieme-Verlag, Stuttgart.

Typische und bevorzugte reaktive Mesogene (RMs) sind beispielsweise in WO 93/22397, EP 0 261 712, DE 195 04 224, WO 95/22586, WO 97/00600, US 5,518,652, US 5,750,051, US 5,770,107 und US 6,514,578 beschrieben Ganz besonders bevorzugte reaktive Mesogene werden in der Tabelle E genannt.

Das Verfahren wird zur Herstellung einer Mischung bestehend aus organischen Verbindungen angewandt, von denen vorzugsweise eine oder mehrere für sich mesogen, bevorzugt flüssigkristallin sind. Die mesogenen Verbindungen umfassen vorzugsweise eine oder mehrere flüssigkristalline Verbindungen. Vorzugsweise ist das Verfahrensprodukt eine homogene, flüssigkristalline Mischung. Das Verfahren umfasst im weiteren Sinn auch die Herstellung von Mischungen, die in der homogenen flüssigen Phase aus organischen Substanzen bestehen und darin unlösliche Zusätze (z. B. kleine Partikel) enthalten. Das Verfahren kann somit auch für die Herstellung von suspensionsartigen oder emulsionsartigen Mischungen basierend auf einer kontinuierlichen homogenen organischen Phase angewendet werden. Solche Verfahrensvarianten sind jedoch in der Regel weniger bevorzugt.

Mittels geeigneter Zusatzstoffe können die erfindungsgemäßen Flüssigkristallphasen derart modifiziert werden, dass sie in jeder bisher bekannt gewordenen Art von LCD-Anzeigen, z. B. von ECB-, VAN-, IPS-, FFS-, TN-, TN-TFT-, STN-, OCB-, GH-, PS-IPS, PS-FFS, PS-VA- oder ASM-VA-Anzeigen einsetzbar sind.

Die Flüssigkristallmischungen können auch weitere, dem Fachmann bekannte und in der Literatur beschriebene Additive, wie z. B. UV-Stabilisatoren, wie z.B. Tinuvin® der Fa. Ciba, insbesondere Tinuvin® 770, Antioxidantien, Radikalfänger, Nanopartikel, Mikropartikel, ein oder mehrere Dotierstoffe, etc. enthalten. Beispielsweise können 0-15 % pleochroitische Farbstoffe zugesetzt werden, ferner Leitsalze, vorzugsweise Ethyldimethyldodecyl-ammonium-4-hexoxybenzoat, Tetrabutylammoniumtetraphenylboranat oder Komplexsalze von Kronenethern (vgl. z.B. Haller et al., Mol. Cryst. Liq. Cryst. Band 24, Seiten 249- 258 (1973)) zur Verbesserung der Leitfähigkeit oder Substanzen zur Veränderung der dielektrischen Anisotropie, der Viskosität und/oder der Orientierung der nematischen Phasen. Derartige Substanzen sind z. B. in den DE-OS 22 09 127, 22 40 864, 23 21 632, 23 38 281, 24 50 088, 26 37 430 und 28 53 728 beschrieben.

Geeignete Stabilisatoren und Dotierstoffe, die bei der Herstellung der Flüssigkristallmischungen mit den Verbindungen der Formel I zusammen in den Mischbehälter gegebenen werden können, werden nachfolgend in den Tabellen C und D genannt.

In der gesamten Patentanmeldung werden 1,4-Cyclohexylenringe und 1,4-Phenylenringe wie folgt dargestellt: 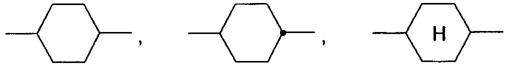 oder 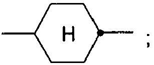 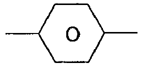 oder

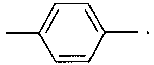

Bei den Cyclohexylenringen handelt es sich um trans-1,4-Cyclohexylenringe.

In der vorliegenden Anmeldung und in den folgenden Beispielen sind die Strukturen der Flüssigkristallverbindungen durch Akronyme angegeben, wobei die Transformation in chemische Formeln gemäß folgender Tabellen A und B erfolgt. Alle Reste CₙH₂ₙ₊₁ und CₘH₂ₘ₊₁ sind geradkettige Alkylreste mit n bzw. m C-Atomen; n, m, k und z sind ganze Zahlen und bedeuten vorzugsweise 0, 1, 2, 3, 4, 5, 6, 7, 8, 9, 10, 11 oder 12. Der Ausdruck" (O)CₘH₂ₘ₊₁ " bedeutet OCₘH₂ₘ₊₁ oder CₘH₂ₘ₊₁. Die Codierung gemäß Tabelle B versteht sich von selbst.

In Tabelle A ist nur das Akronym für den Grundkörper angegeben. Im Einzelfall folgt getrennt von Akronym für den Grundkörper mit einem Strich ein Code für die Substituenten R^{1*}, R^{2*}, L^{1*} und L^{2*}:

| Code für R^{1*}, R^{2*}, L^{1*}, L^{2*}, L^{3*} | R^{1*} | R^{2*} | L^{1*} | L^{2*} |
|---|---|---|---|---|
| nm | CₙH₂ₙ₊₁ | CₘH₂ₘ₊₁ | H | H |
| nOm | CₙH₂ₙ₊₁ | OCₘH₂ₘ₊₁ | H | H |
| nO.m | OCₙH₂ₙ₊₁ | CₘH₂ₘ₊₁ | H | H |
| n | CₙH₂ₙ₊₁ | CN | H | H |
| nN.F | CₙH₂ₙ₊₁ | CN | F | H |
| nN.F.F | CₙH₂ₙ₊₁ | CN | F | F |
| nF | CₙH₂ₙ₊₁ | F | H | H |
| nCl | CₙH₂ₙ₊₁ | Cl | H | H |
| nOF | OCₙH₂ₙ₊₁ | F | H | H |
| nF.F | CₙH₂ₙ₊₁ | F | F | H |
| nF.F.F | CₙH₂ₙ₊₁ | F | F | F |
| nOCF₃ | CₙH₂ₙ₊₁ | OCF₃ | H | H |
| nOCF₃.F | CₙH₂ₙ₊₁ | OCF₃ | F | H |
| n-Vm | CₙH₂ₙ₊₁ | -CH=CH-CₘH₂ₘ₊₁ | H | H |
| nV-Vm | CₙH₂ₙ₊₁-CH=CH- | -CH=CH-CₘH₂ₘ₊₁ | H | H |

Bevorzugte mesogene oder flüssigkristalline Substanzen, die für die Herstellung von Flüssigkristallmischungen geeignet sind und bei dem erfindungsgemäßen Verfahren Anwendung finden können, sind insbesondere in den Tabellen A und B gelistet:

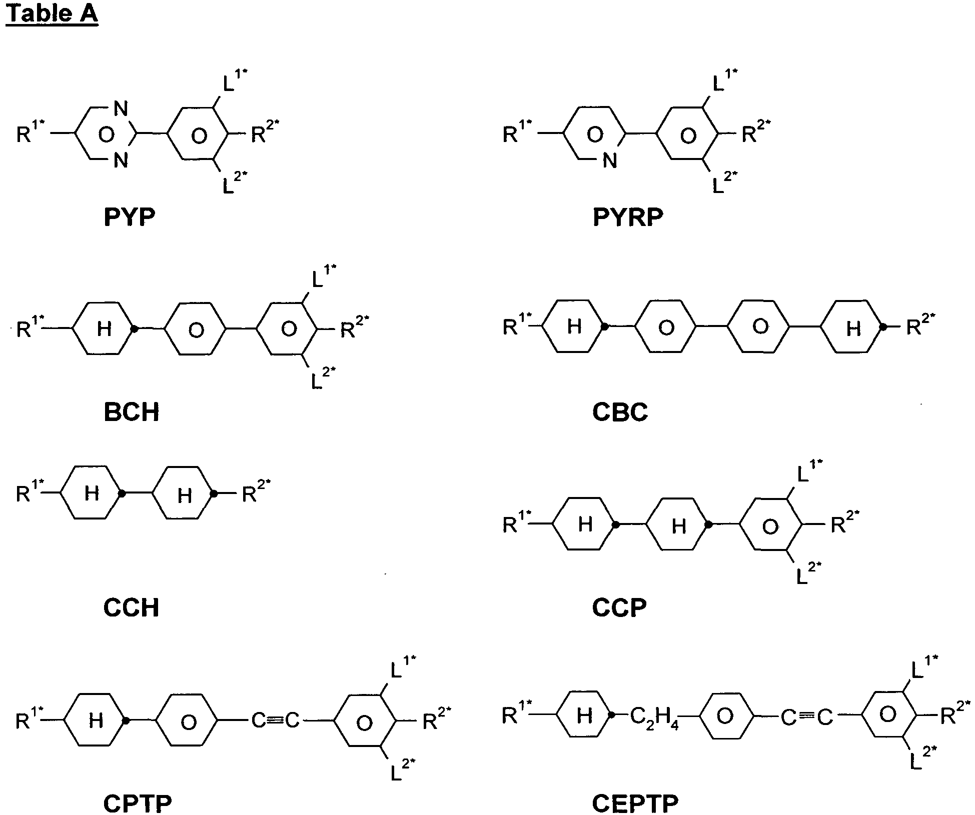

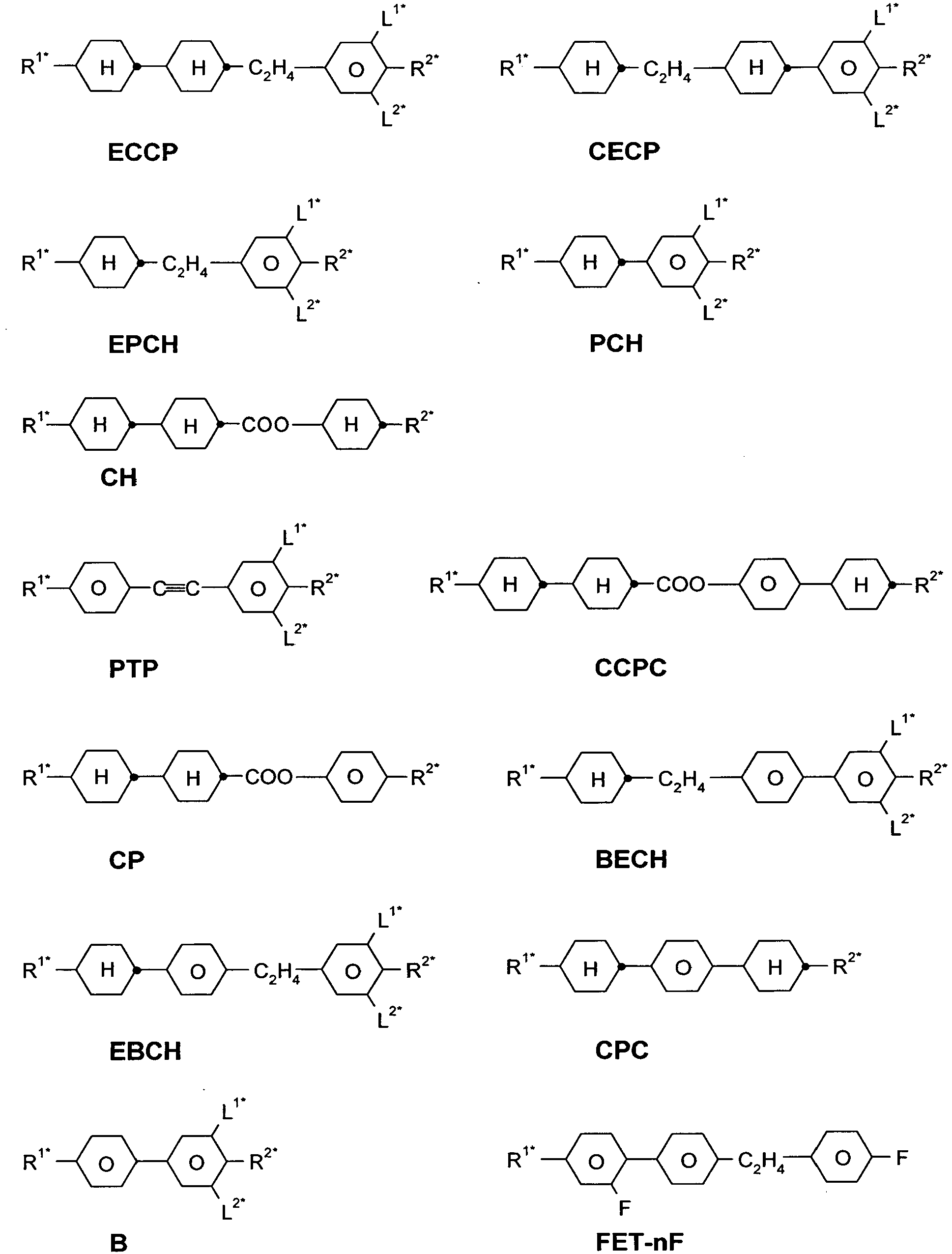

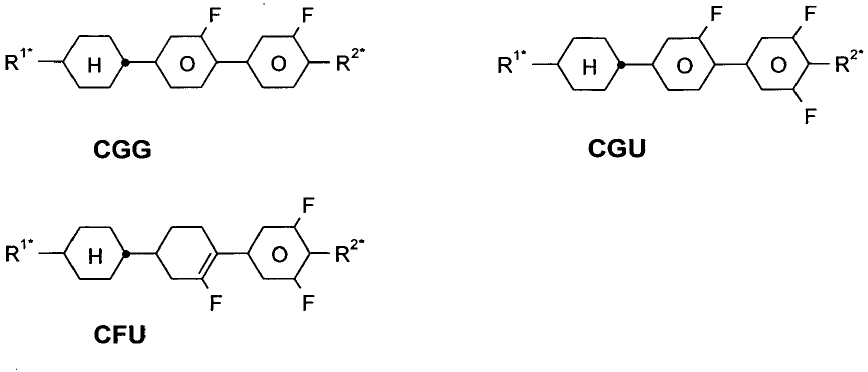

**Tabelle B**

| | |
|---|---|
| (n = 1-15; (O)CₙH₂ₙ₊₁ bedeutet CₙH₂ₙ₊₁ oder OCₙH₂ₙ₊₁) | |
| 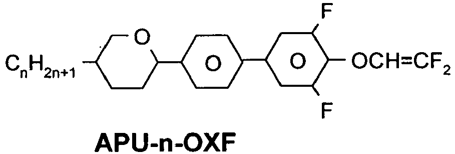 | |
| 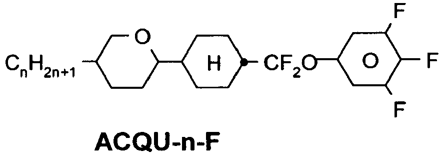 | 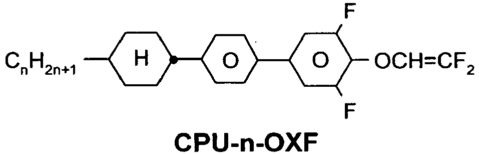 |
| 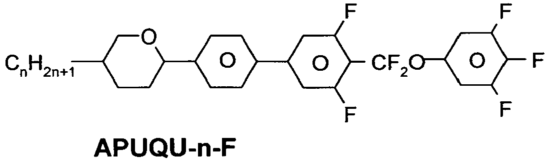 | |
| 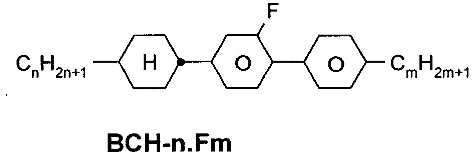 | 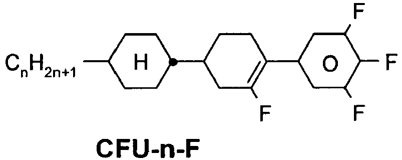 |
| 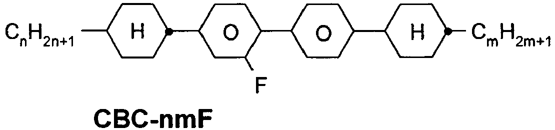 | |
| 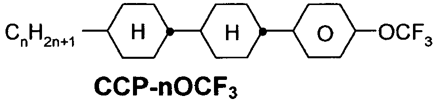 | |
| 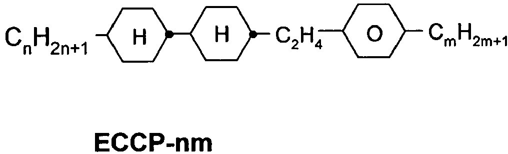 | 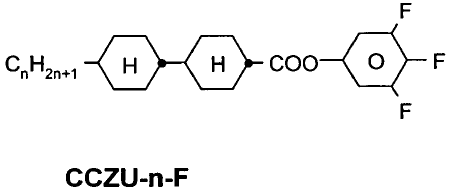 |
| 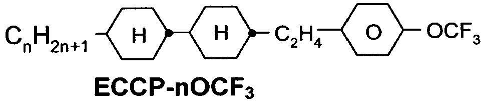 | |
| 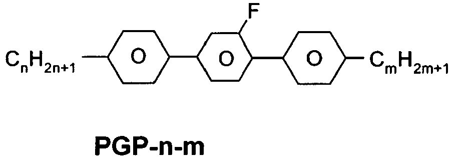 | 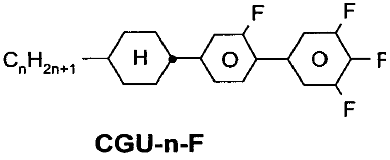 |
| 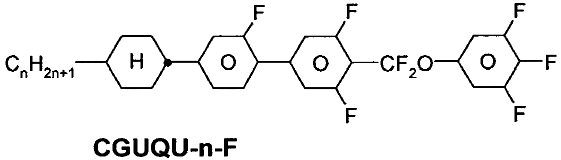 | |
| 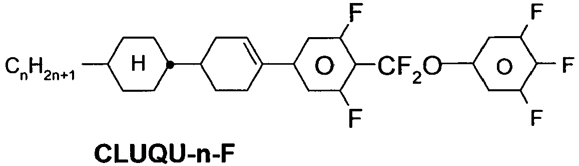 | |
| 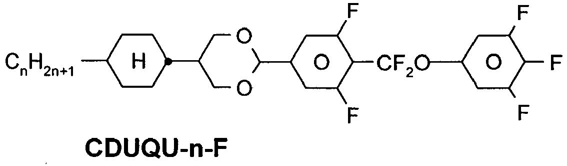 | |
| 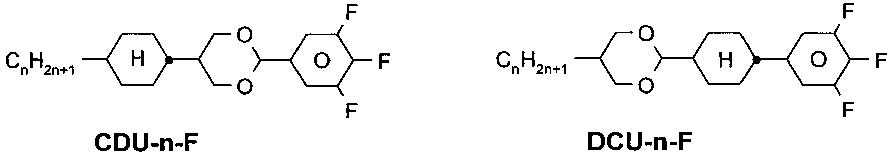 | |
| 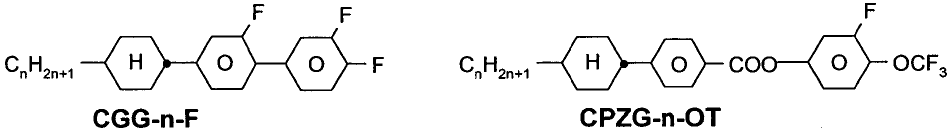 | |
| 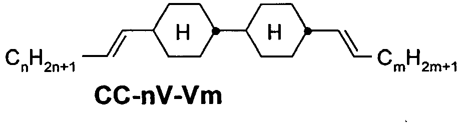 | |
| 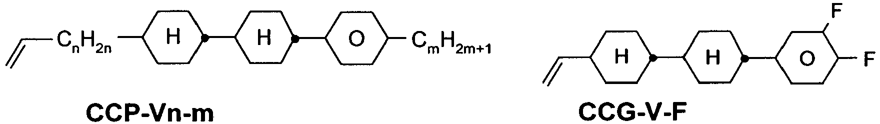 | |
| 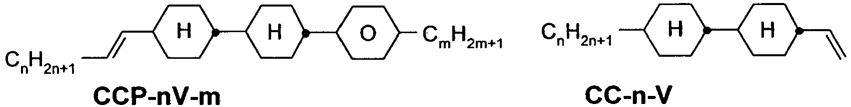 | |
| 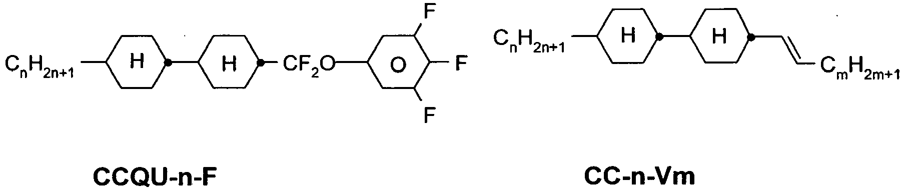 | |
| 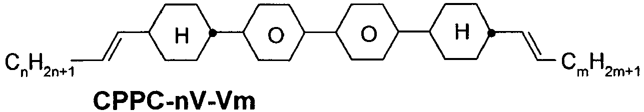 | |
| 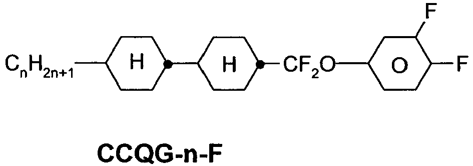 | 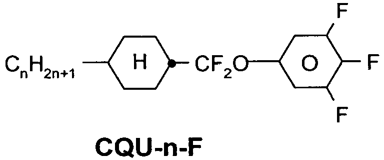 |
| 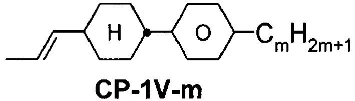 | |
| 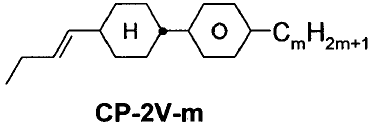 | 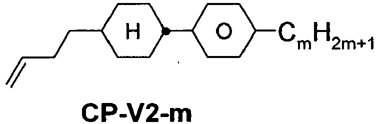 |
| 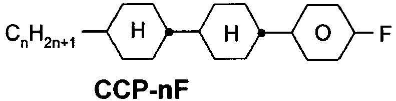 | 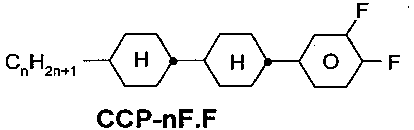 |
| 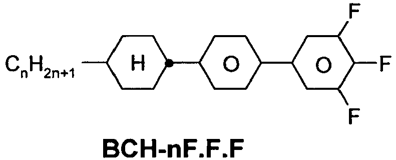 | 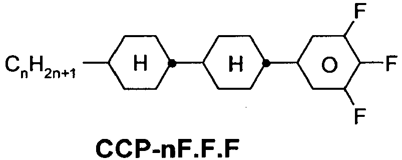 |
| 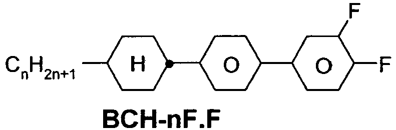 | |
| 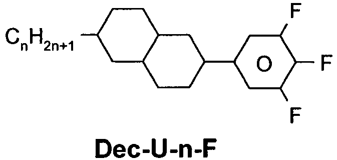 | 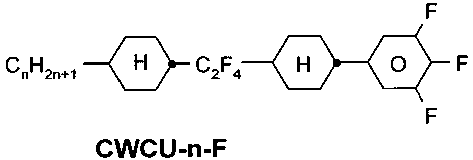 |
| 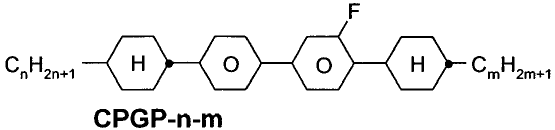 | |
| 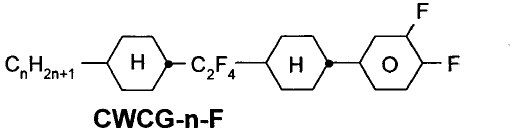 | |
| 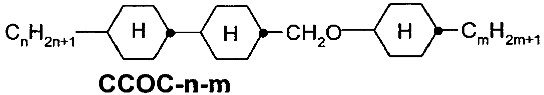 | |
| 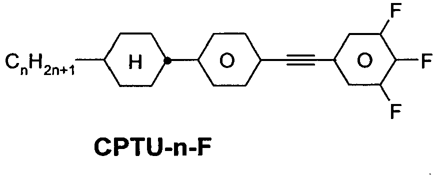 | 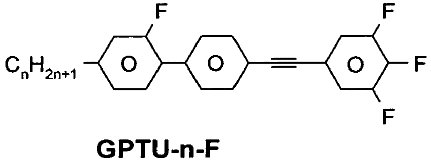 |
| 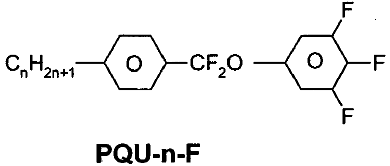 | 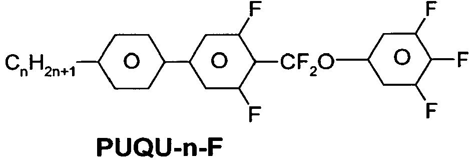 |
| 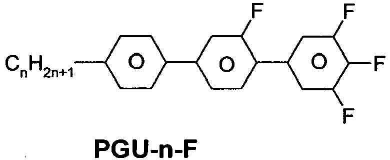 | 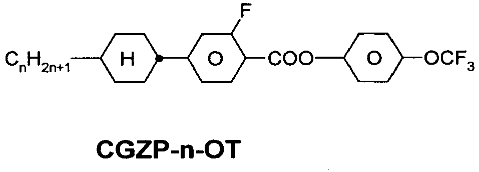 |
| 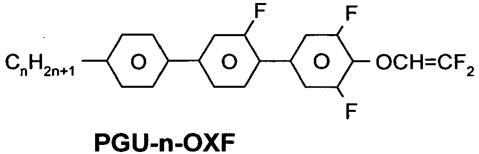 | |
| 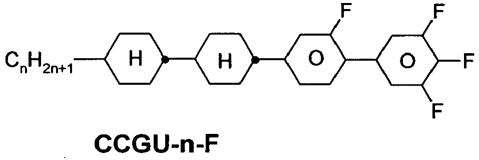 | |
| 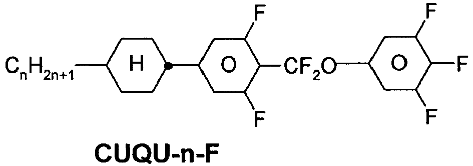 | |
| 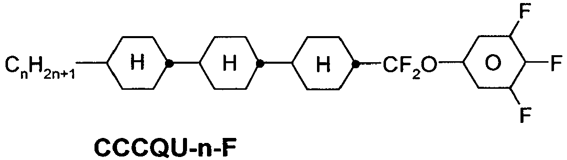 | |
| 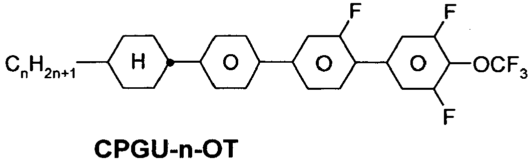 | |
| 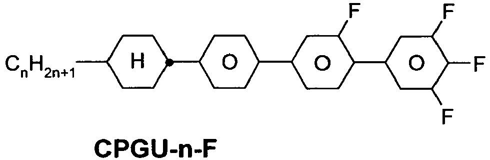 | |
| 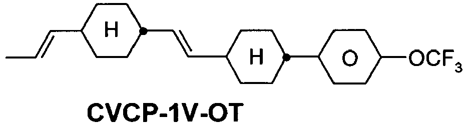 | 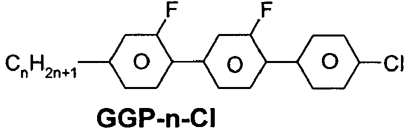 |
| 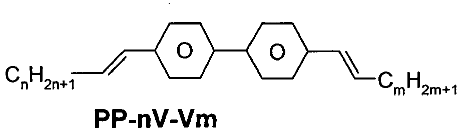 | 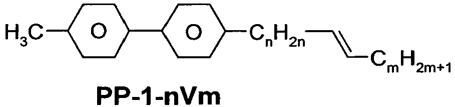 |
| 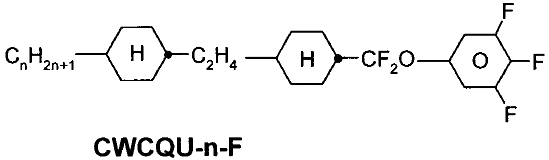 | |
| 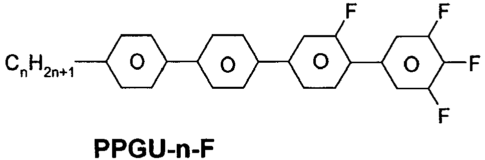 | |
| 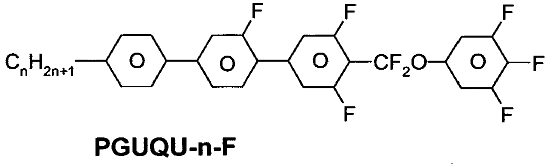 | |
| 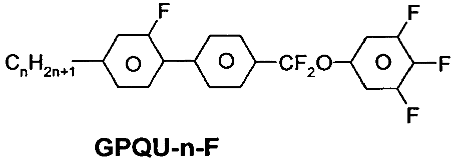 | 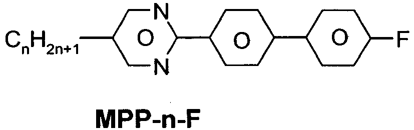 |
| 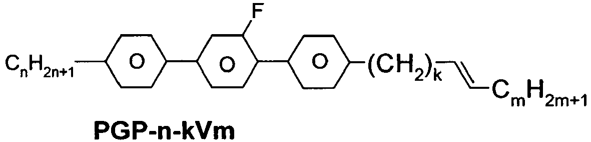 | |
| 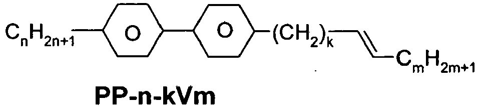 | |
| 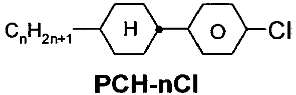 | 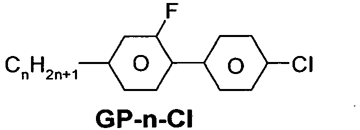 |
| 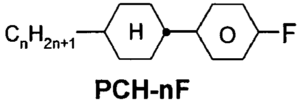 | 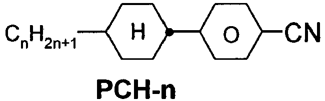 |
| 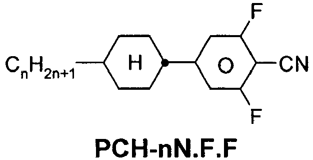 | |
| 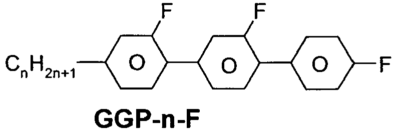 | 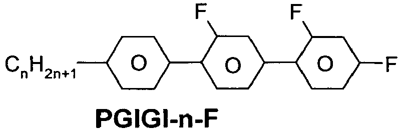 |
| 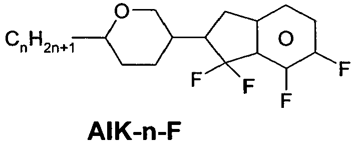 | |
| 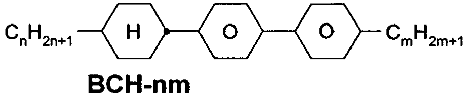 | 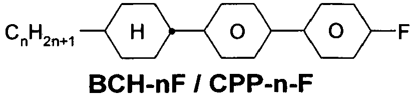 |
| 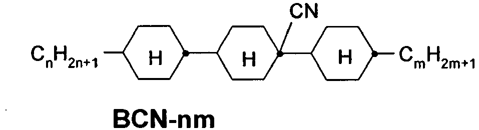 | 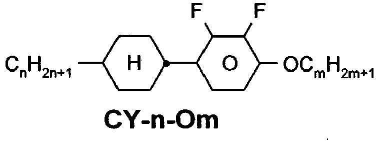 |
| 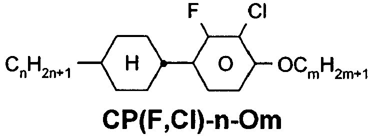 | 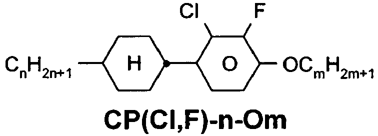 |
| 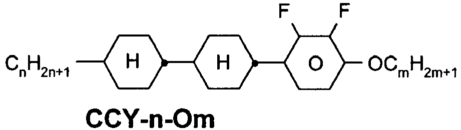 | 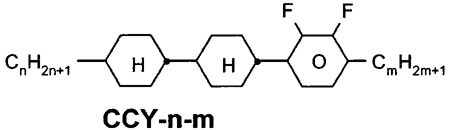 |
| 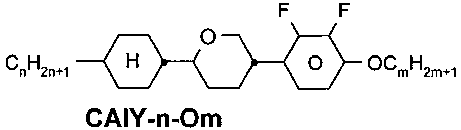 | 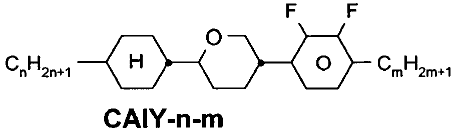 |
| 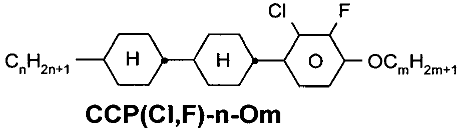 | 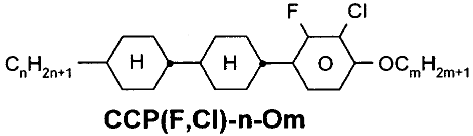 |
| 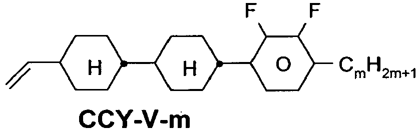 | 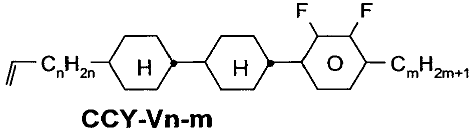 |
| 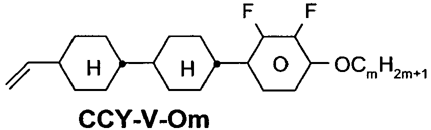 | 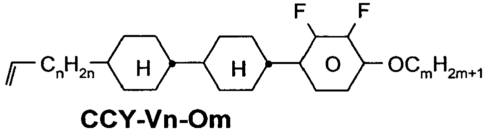 |
| 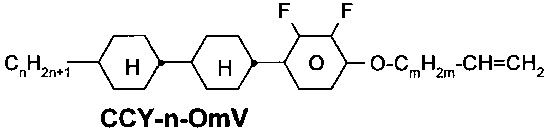 | |
| 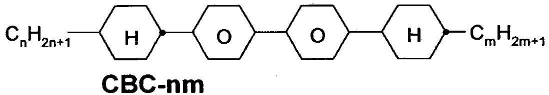 | |
| 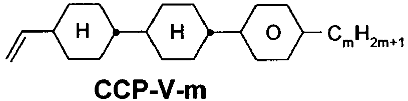 | |
| 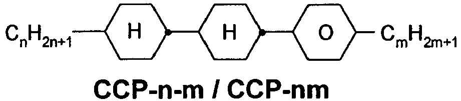 | |
| 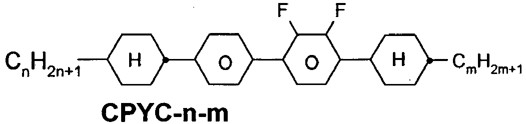 | |
| 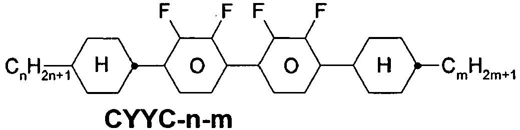 | |
| 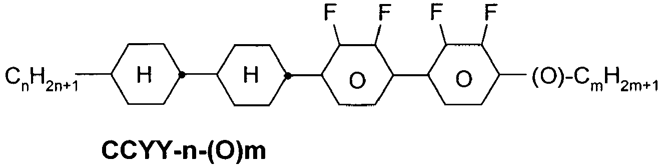 | |
| 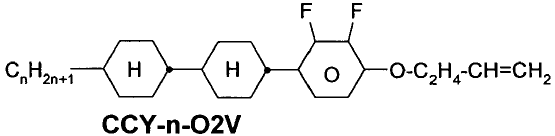 | |
| 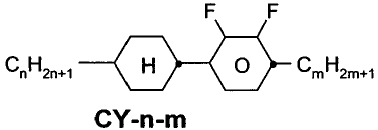 | |
| 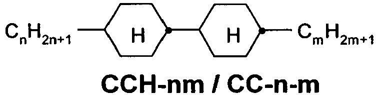 | 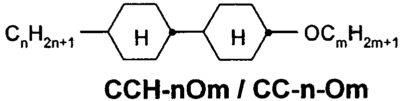 |
| 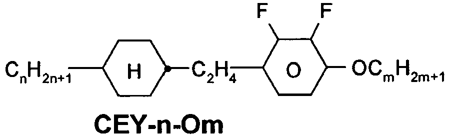 | 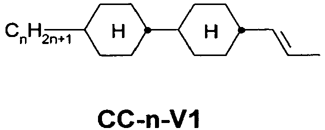 |
| 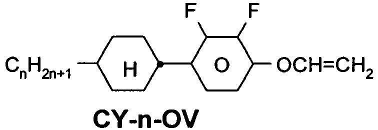 | 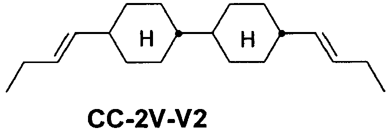 |
| 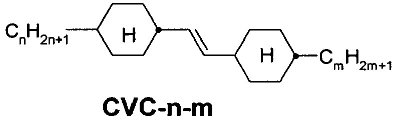 | 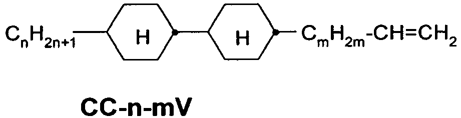 |
| 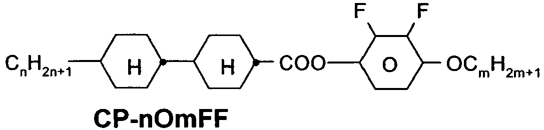 | |
| 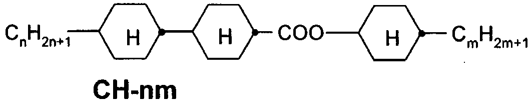 | |
| 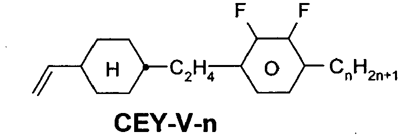 | 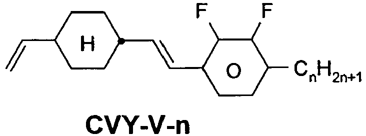 |
| 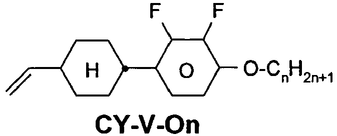 | 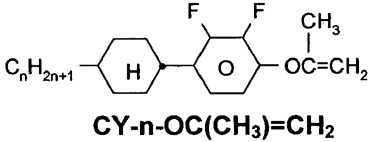 |
| 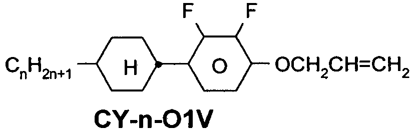 | 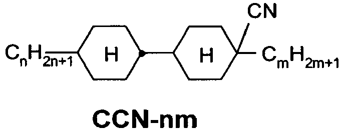 |
| 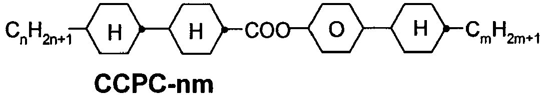 | |
| 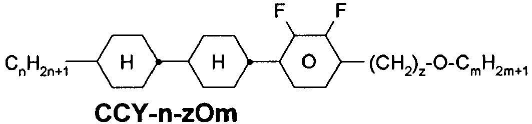 | |
| 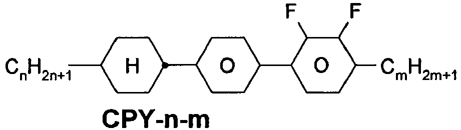 | |
| 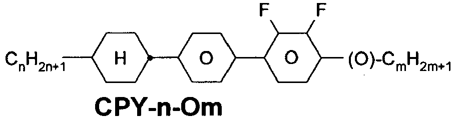 | |
| 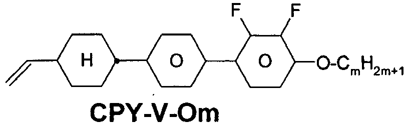 | 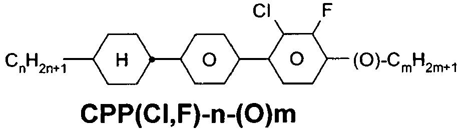 |
| 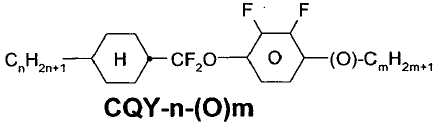 | 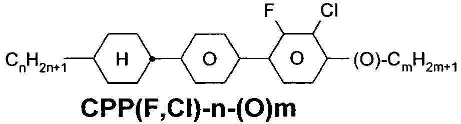 |
| 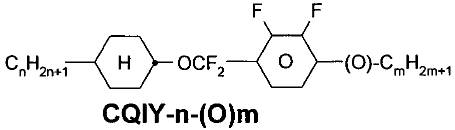 | |
| 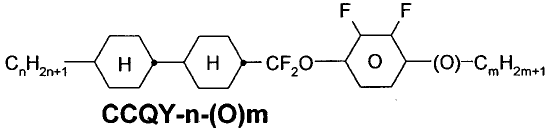 | |
| 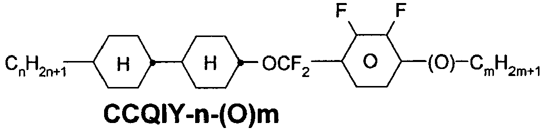 | |
| 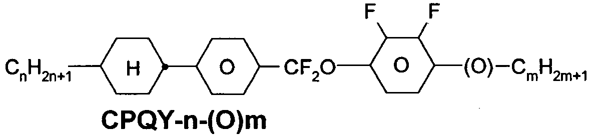 | |
| 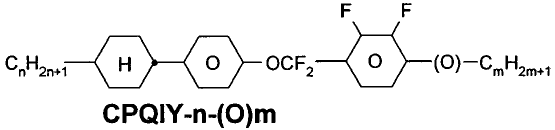 | |
| 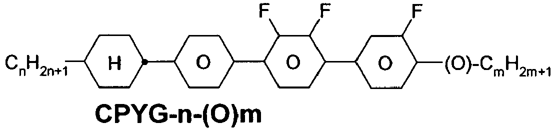 | |
| 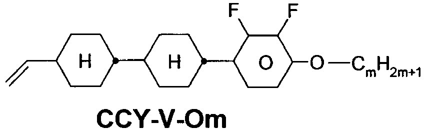 | 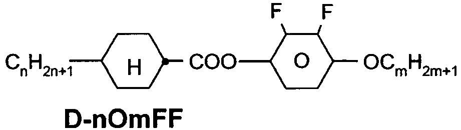 |
| 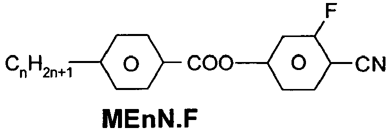 | |
| 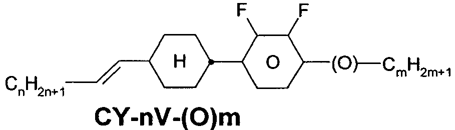 | 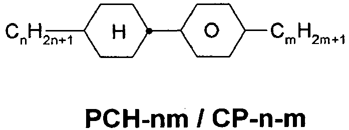 |
| 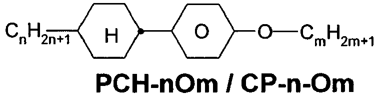 | |
| 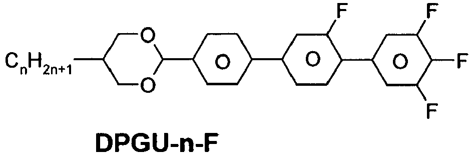 | |
| 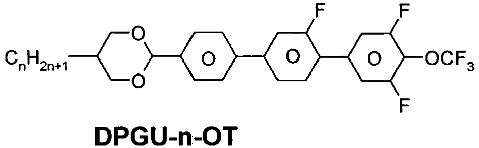 | |
| 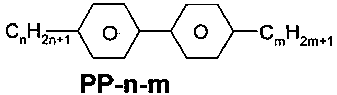 | |
| 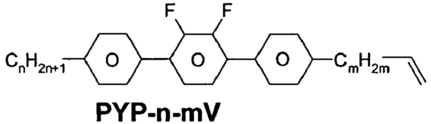 | 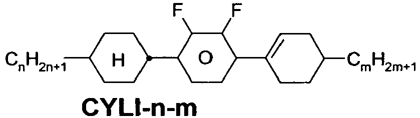 |
| 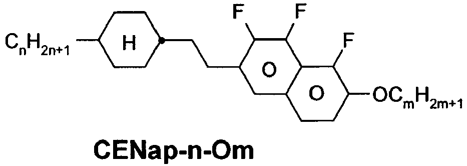 | 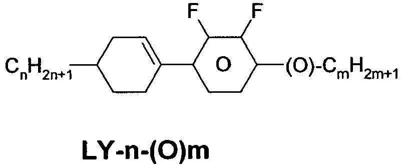 |
| 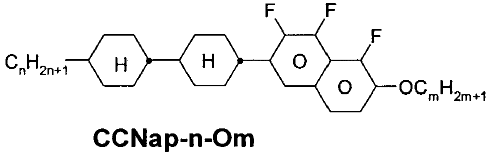 | |
| 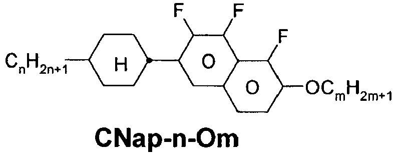 | 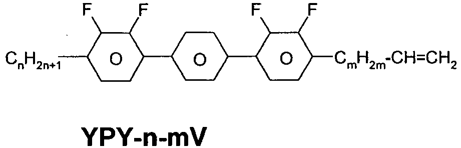 |
| 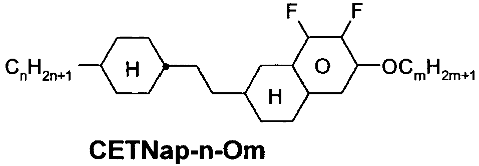 | |
| 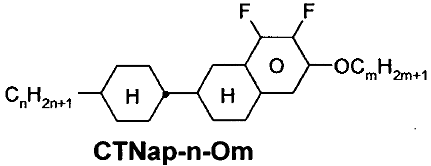 | 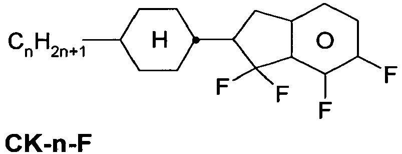 |
| 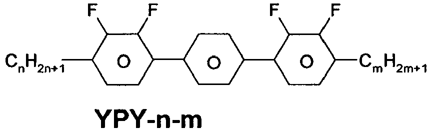 | 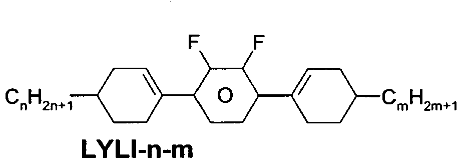 |
| 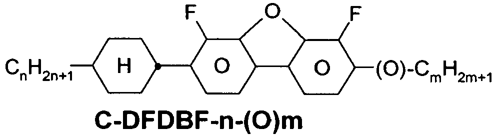 | |
| 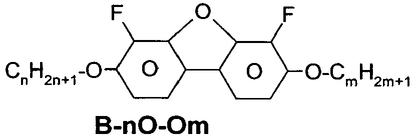 | |
| 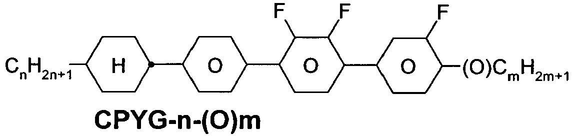 | |
| 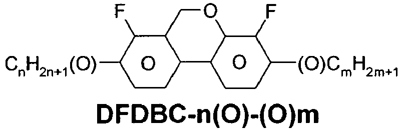 | |
| 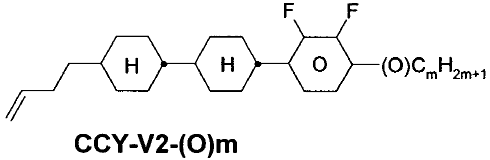 | |
| 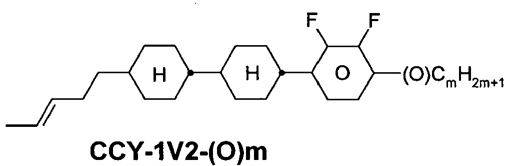 | |
| 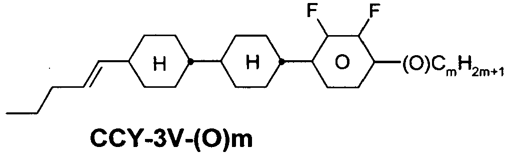 | |
| 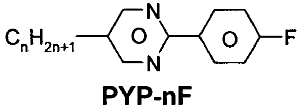 | |
| 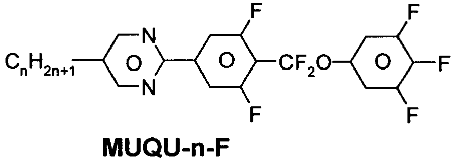 | 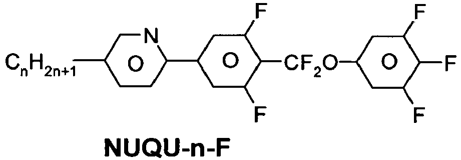 |
| 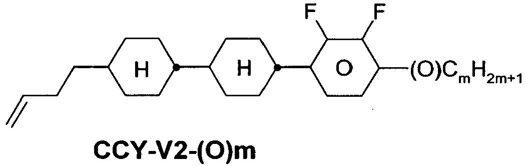 | |
| 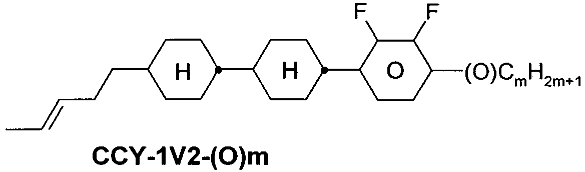 | |
| 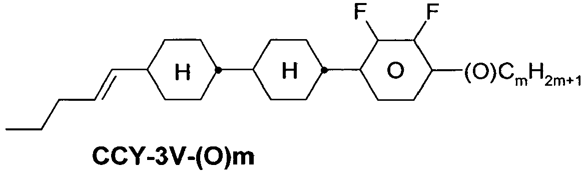 | |
| 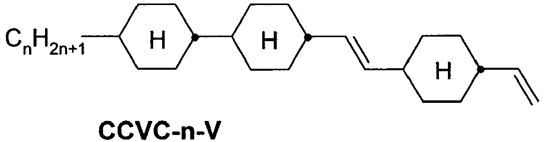 | |
| 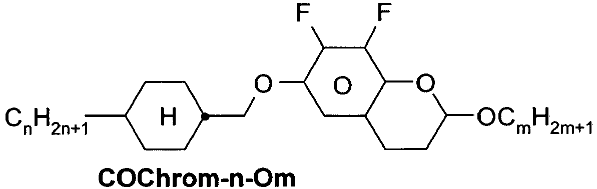 | |
| 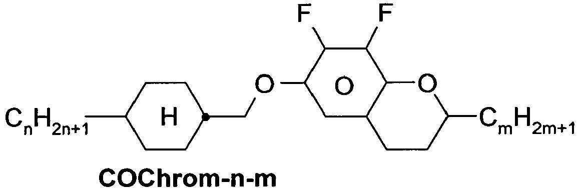 | |
| 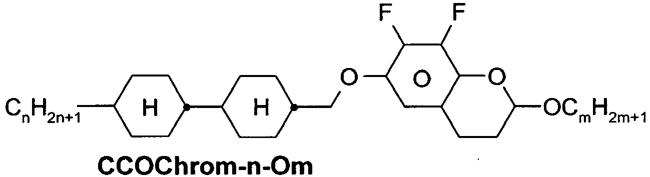 | |
| 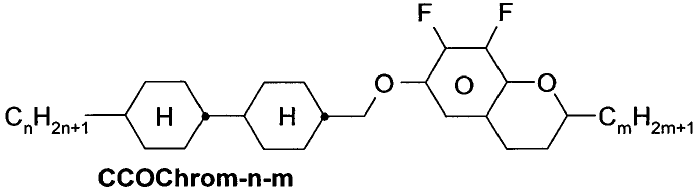 | |
| 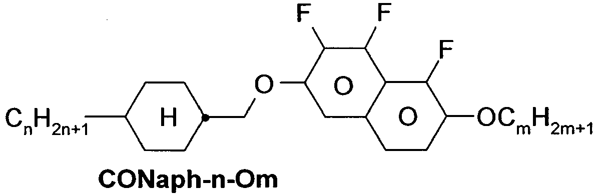 | |
| 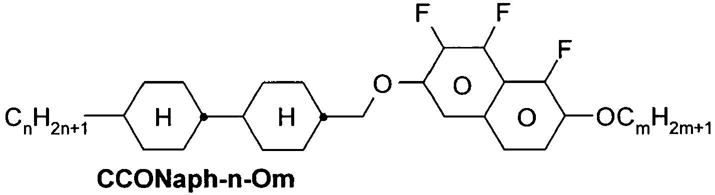 | |
| 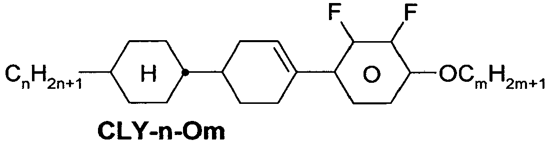 | |
| 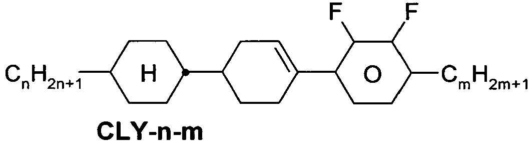 | |
| 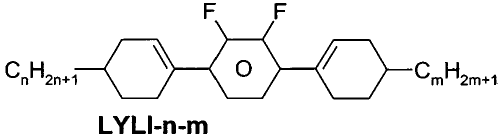 | |
| 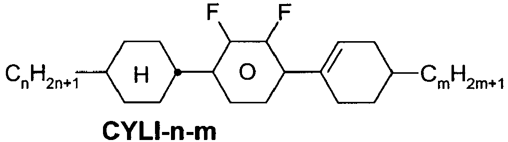 | |
| 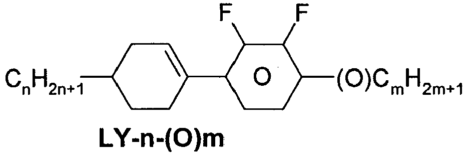 | |
| 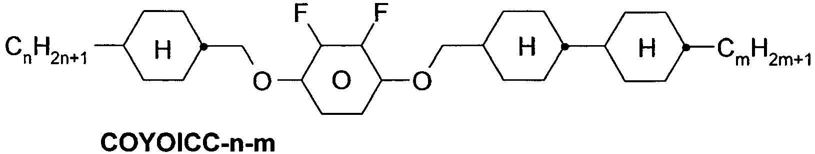 | |
| 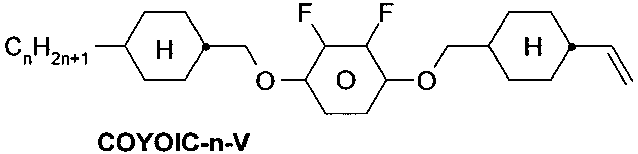 | |
| 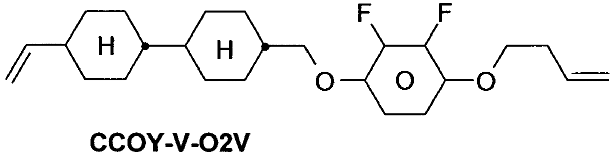 | |
| 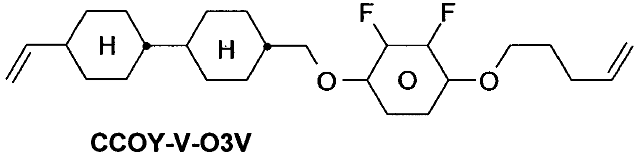 | |
| 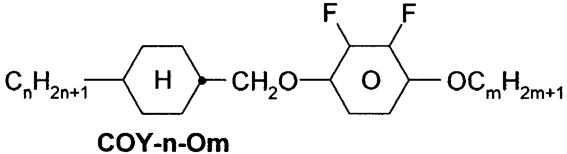 | |
| 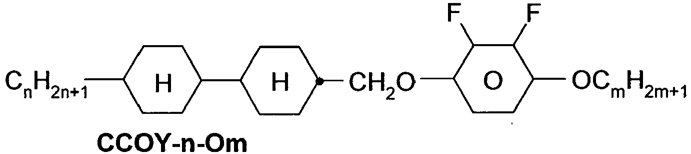 | |
| 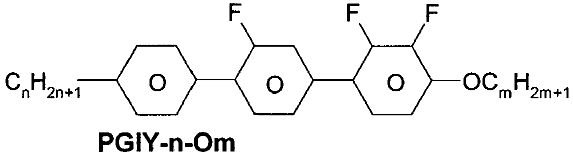 | |
| 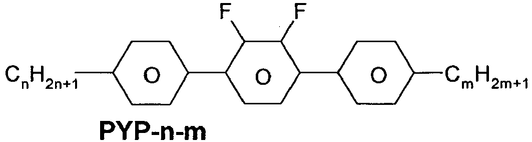 | |
| 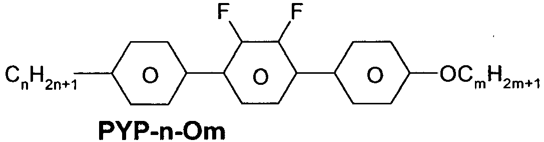 | |
| 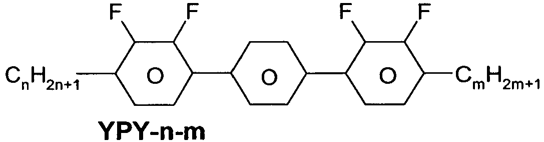 | |
| 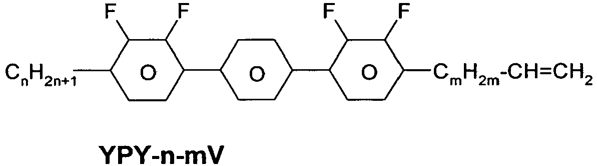 | |
| 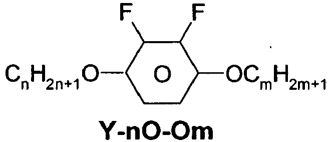 | |
| 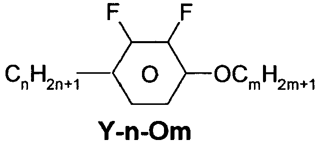 | |
| 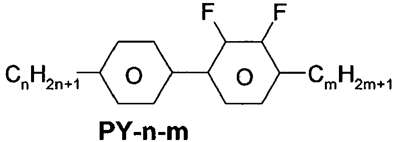 | |
| 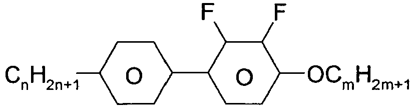 | |
| 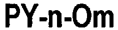 | |
| 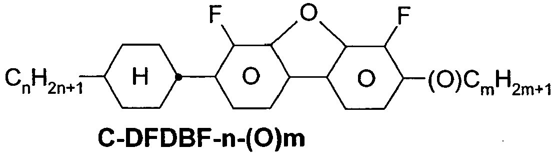 | |
| 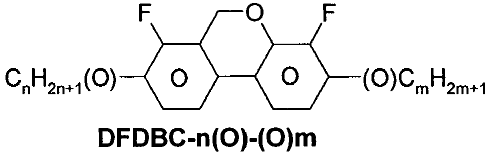 | |
| 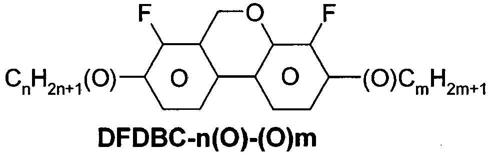 | |
| 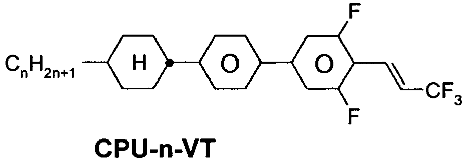 | 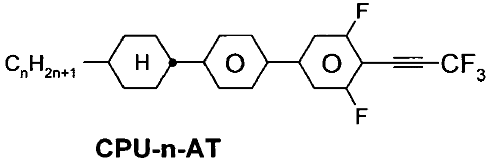 |
| 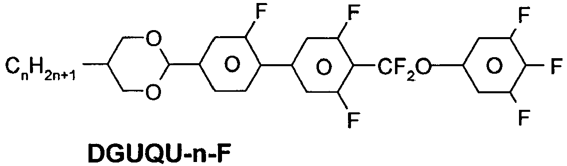 | |
| 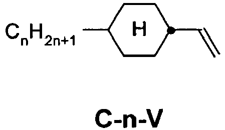 | 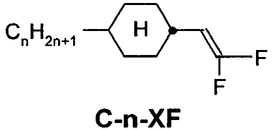 |
| 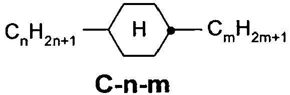 | |
| 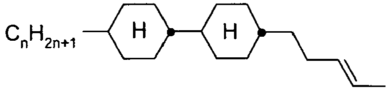 | |
| 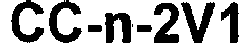 | |
| 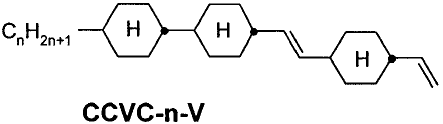 | |
| 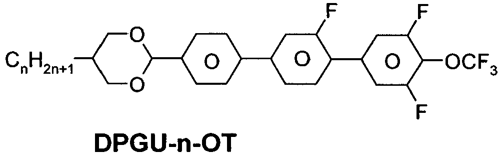 | |
| 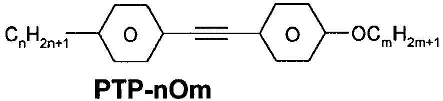 | 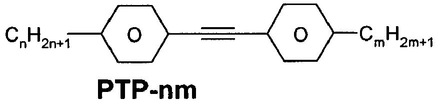 |
| 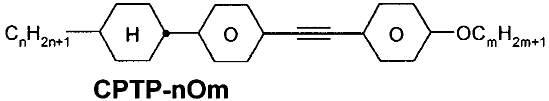 | |
| 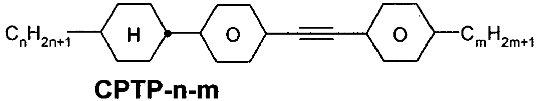 | |
| 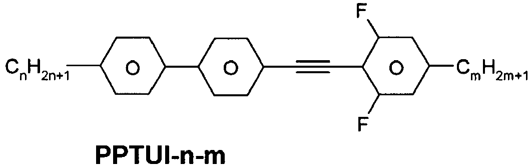 | |

Besonders bevorzugt sind flüssigkristalline Mischungen, die neben einer oder mehreren Verbindungen der Formel I mindestens ein, zwei, drei, vier oder mehr Verbindungen aus der Tabelle B enthalten.

**Tabelle C**

| | |
|---|---|
| In der Tabelle C werden mögliche Dotierstoffe angegeben, die in der Regel den flüssigkristallinen Mischungen zugesetzt werden. Vorzugsweise enthalten die Mischungen 0-10 Gew.%, insbesondere 0,01-5 Gew.% und besonders bevorzugt 0,01-3 Gew.% an Dotierstoffen. | |
| 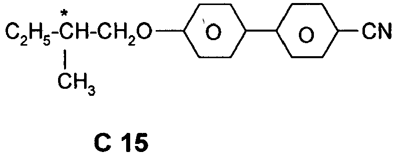 | 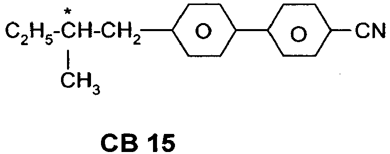 |
| 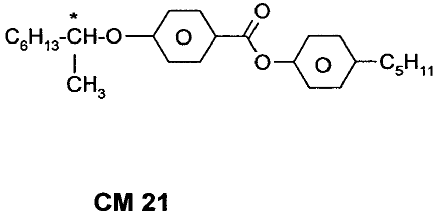 | 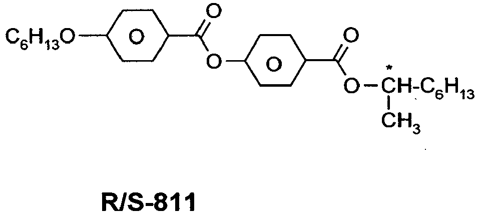 |
| 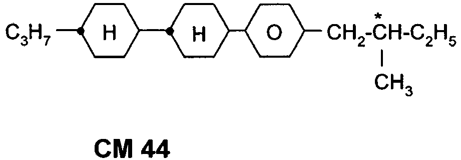 | 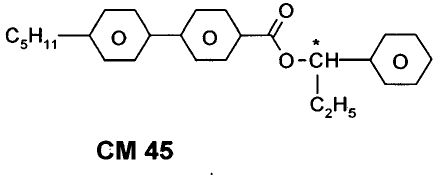 |
| 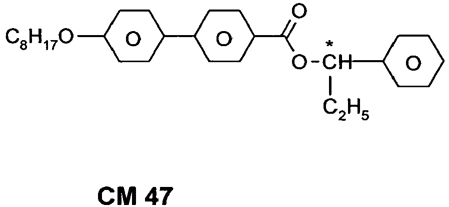 | 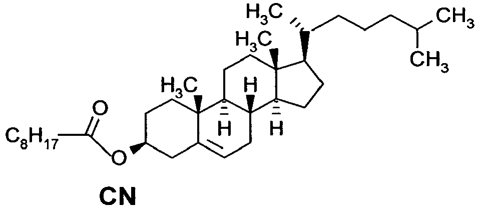 |
| 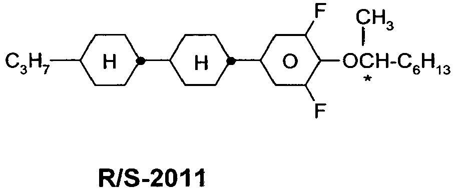 | 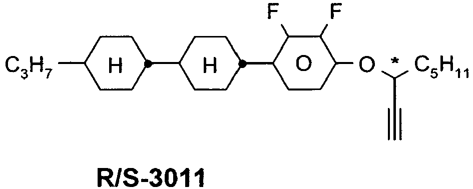 |
| 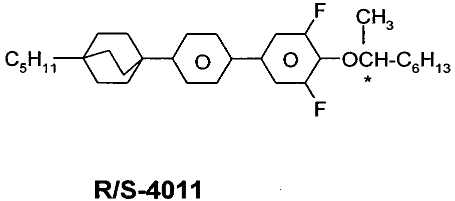 | 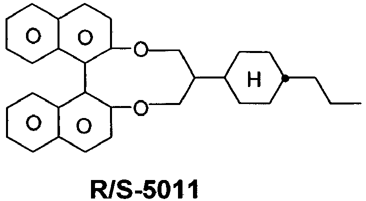 |
| 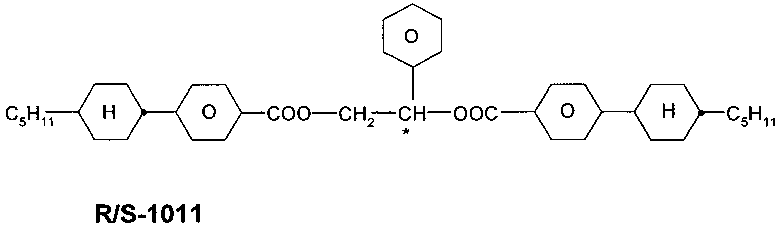 | |

**Tabelle D**

| | |
|---|---|
| Stabilisatoren, die beispielsweise den flüssigkristallinen Mischungen in Mengen von 0-10 Gew.% zugesetzt werden können, werden nachfolgend genannt. | |
| (n = 1-12) | |
| 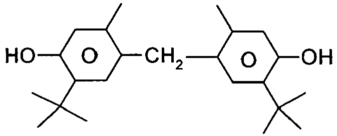 | 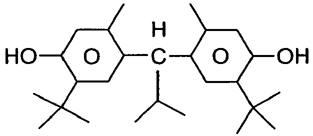 |
| 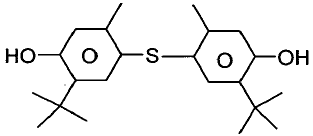 | 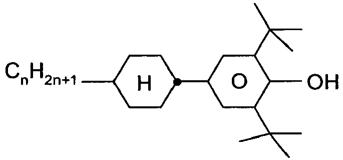 |
| | n = 1, 2, 3, 4, 5, 6 or 7 |
| 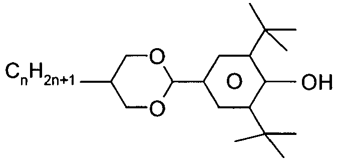 | |
| n = 1, 2, 3, 4, 5, 6 or 7 | |
| 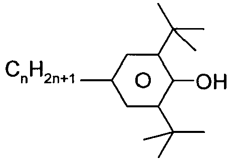 | 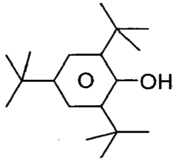 |
| n = 1, 2, 3, 4, 5, 6 oder 7 | |
| 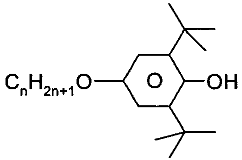 | 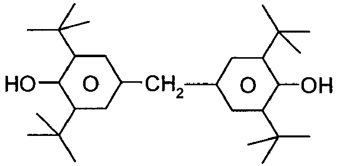 |
| 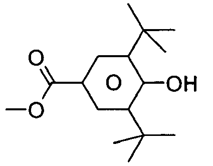 | 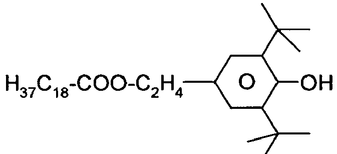 |
| 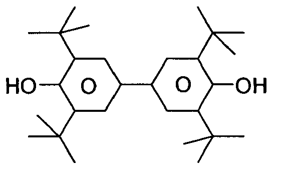 | 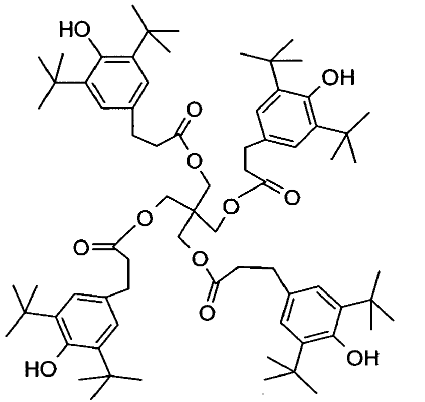 |
| 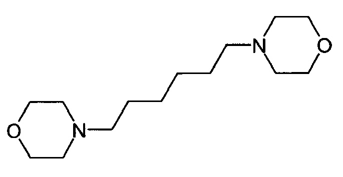 | |
| 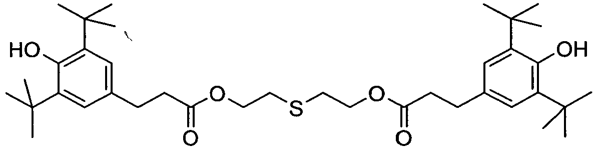 | |
| 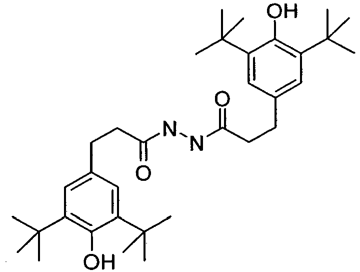 | 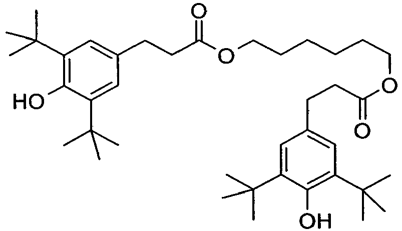 |
| 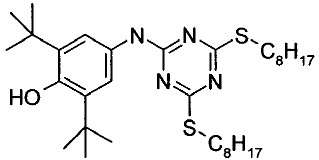 | 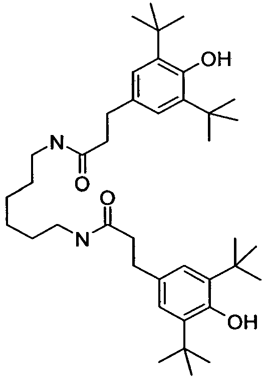 |
| 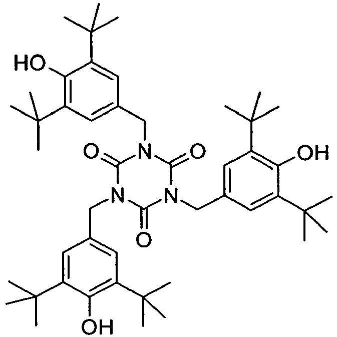 | 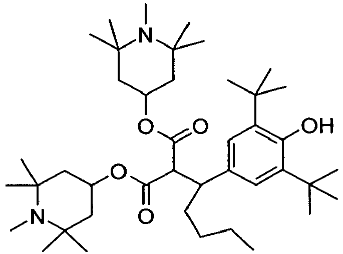 |
| 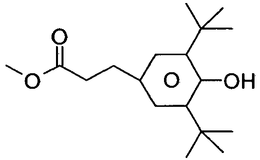 | 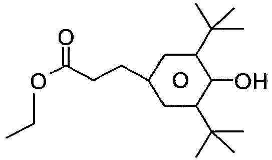 |
| 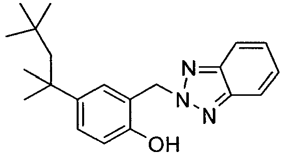 | 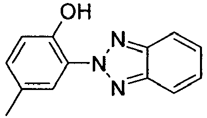 |
| 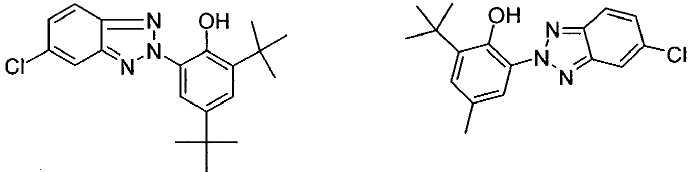 | |
| 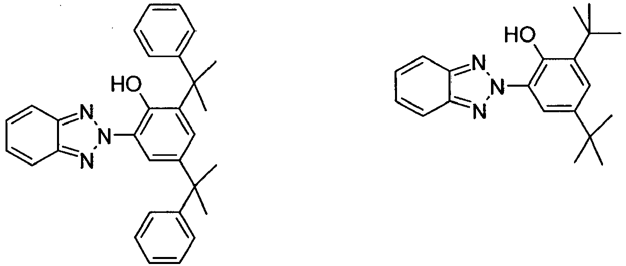 | |
| 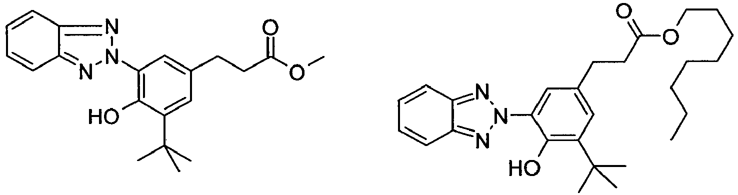 | |
| 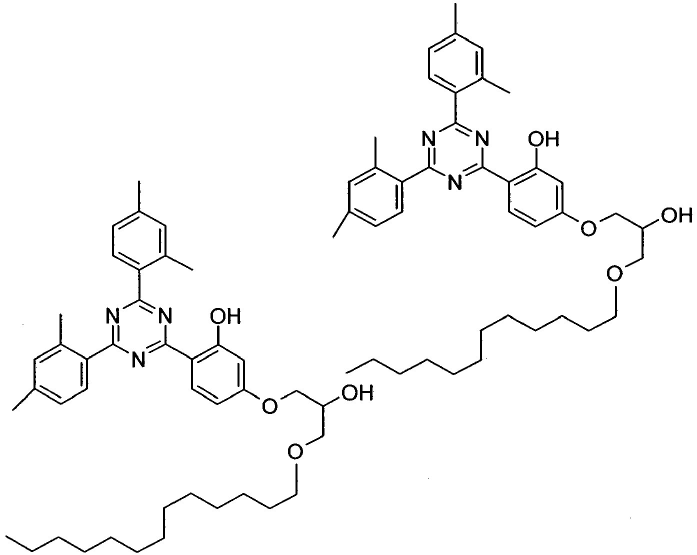 | |
| 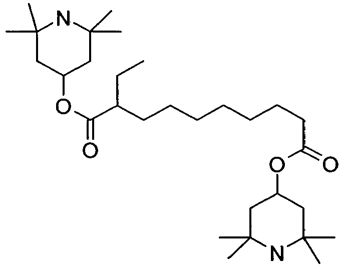 | |
| 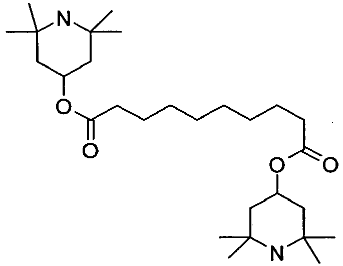 | 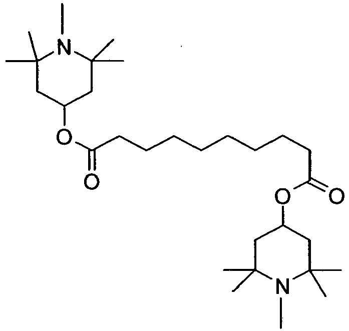 |
| 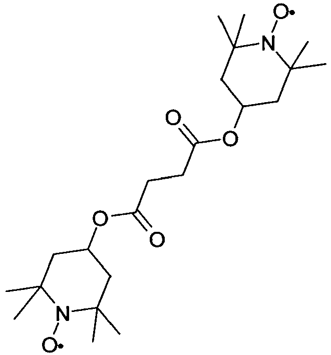 | 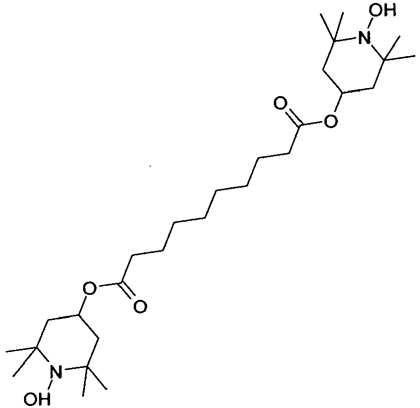 |

Geeignete polymerisierbare Verbindungen (reaktive Mesogene) für den Einsatz in den erfindungsgemäßen Mischungen, vorzugsweise in PSA- und PS-VA-Anwendungen oder PS-IPS/FFS-Anwendungen, werden nachfolgend in Tabelle E genannt:

**Tabelle E**

| |
|---|
| In der Tabelle E sind Beispielverbindungen zusammengestellt, die in den flüssigkristallinen Mischungen vorzugsweise als reaktive mesogene Verbindungen verwendet werden können. Sofern die flüssigkristallinen Mischungen ein oder mehrere reaktive Verbindungen enthalten, werden sie vorzugsweise in Mengen von 0,01-5 Gew.% eingesetzt. Gegebenenfalls muss für die Polymerisation noch ein Initiator oder ein Gemisch aus zwei oder mehr Initiatoren zugesetzt werden. Der Initiator oder das Initiatorgemisch wird vorzugsweise in Mengen von 0,001-2 Gew.% bezogen auf die Mischung zugesetzt. Ein geeigneter Initiator ist z. B. Irgacure (Fa. BASF) oder Irganox (Fa. BASF). |
| 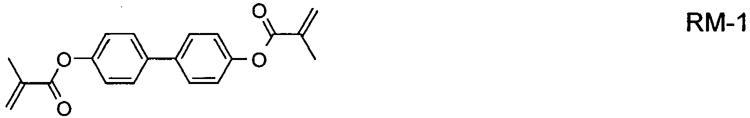 |
| 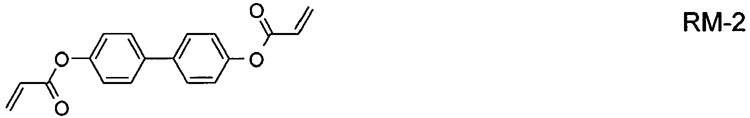 |
| 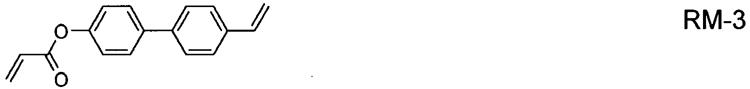 |
| 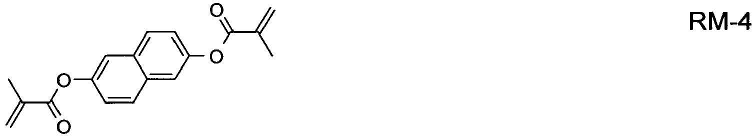 |
| 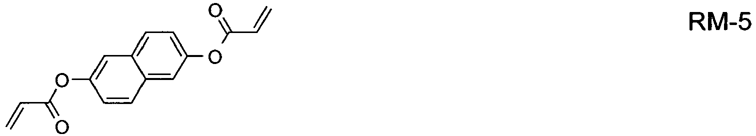 |
| 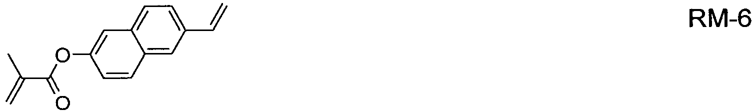 |
| 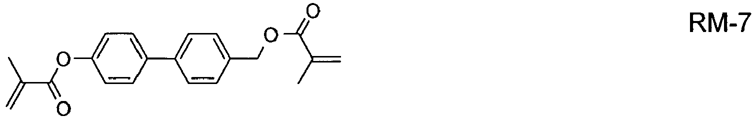 |
| 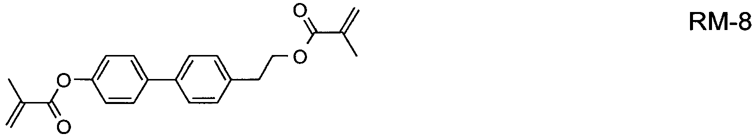 |
| 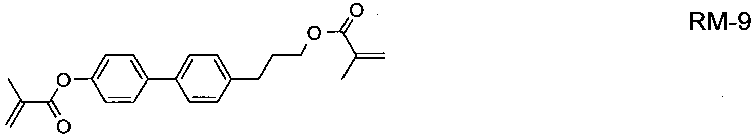 |
| 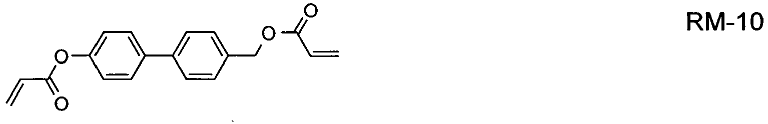 |
| 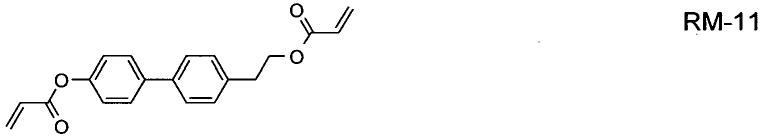 |
| 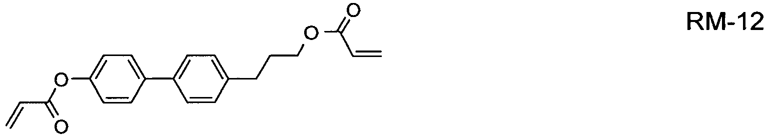 |
| 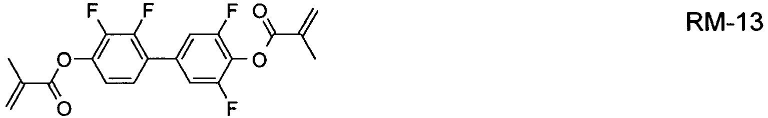 |
| 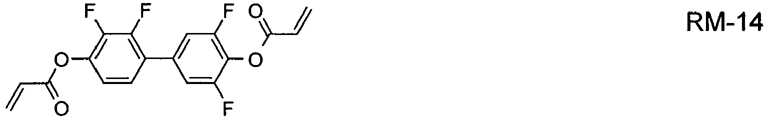 |
| 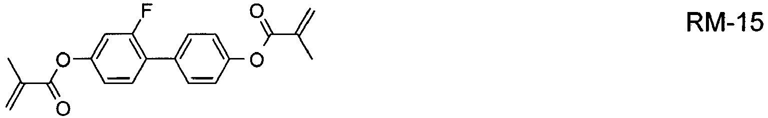 |
| 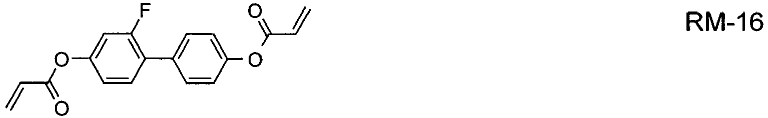 |
| 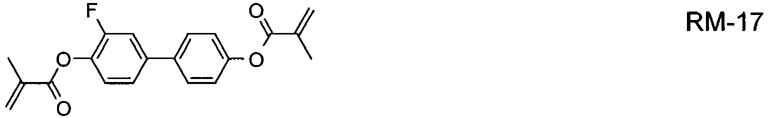 |
| 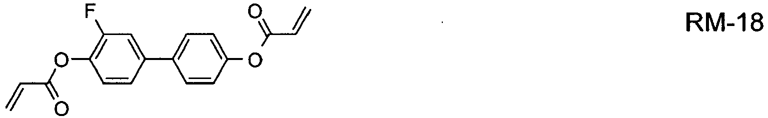 |
| 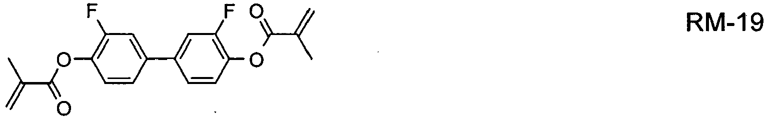 |
| 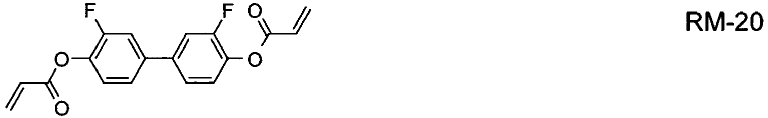 |
| 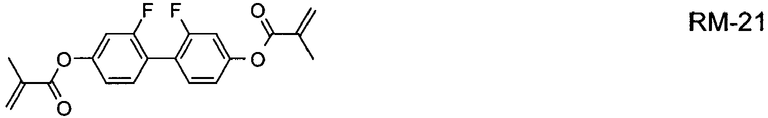 |
| 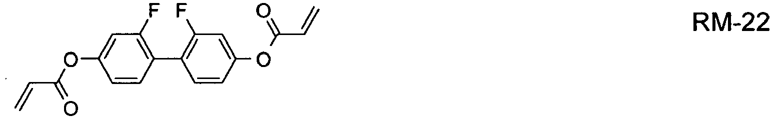 |
| 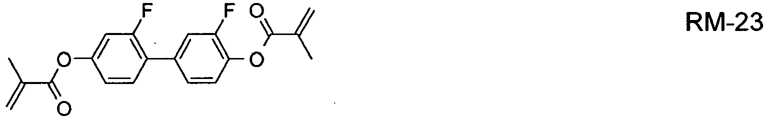 |
| 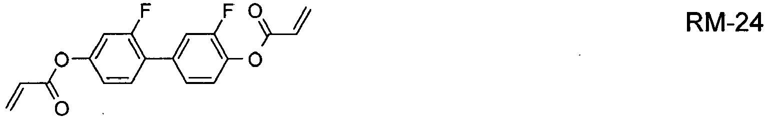 |
| 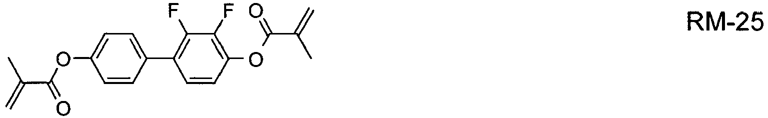 |
| 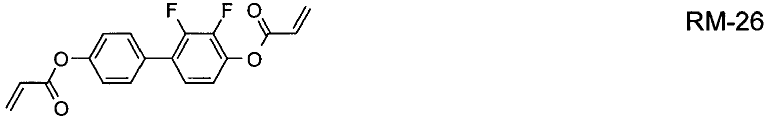 |
| 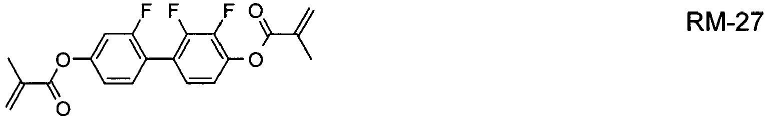 |
| 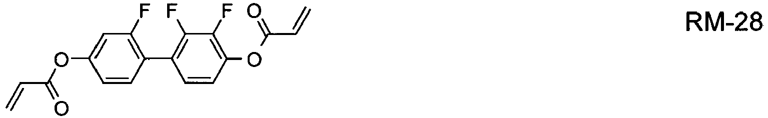 |
| 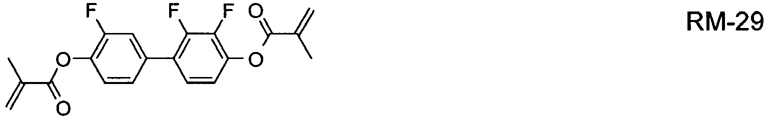 |
| 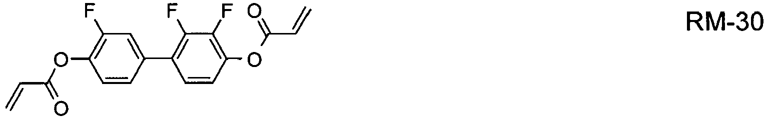 |
| 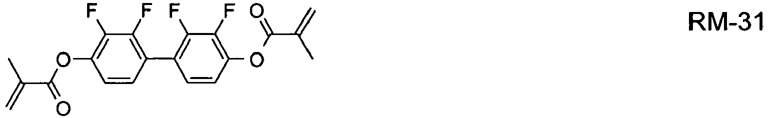 |
| 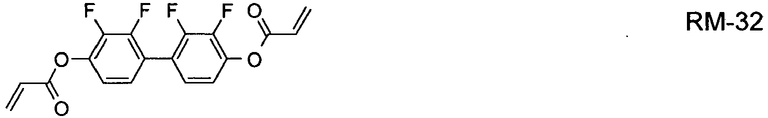 |
| 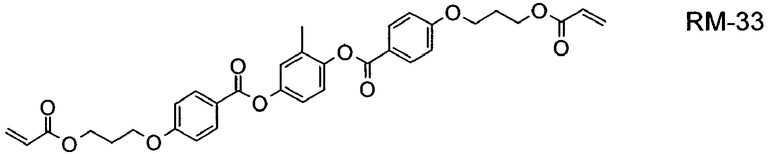 |
| 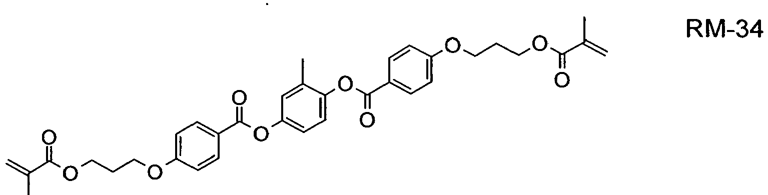 |
| 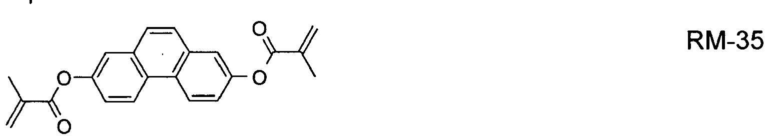 |
| 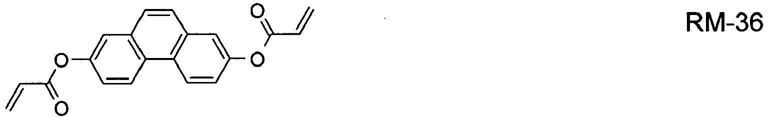 |
| 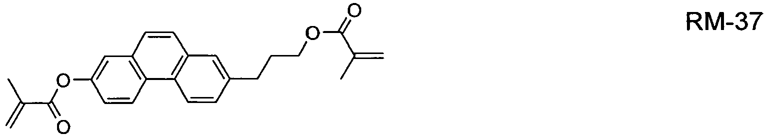 |
| 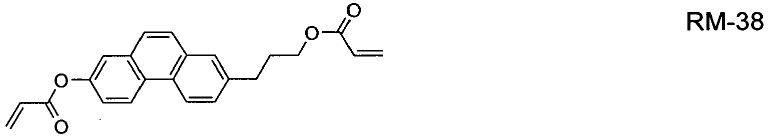 |
| 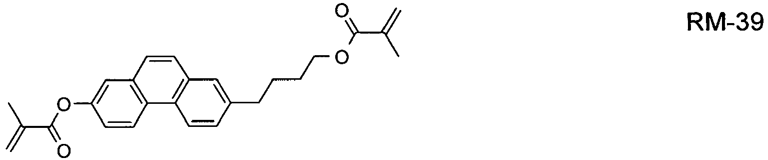 |
| 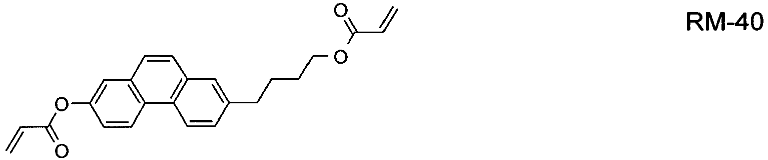 |
| 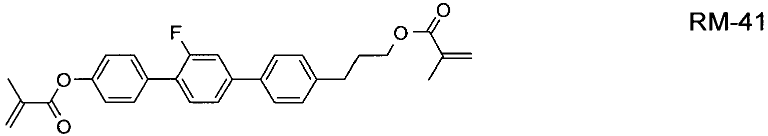 |
| 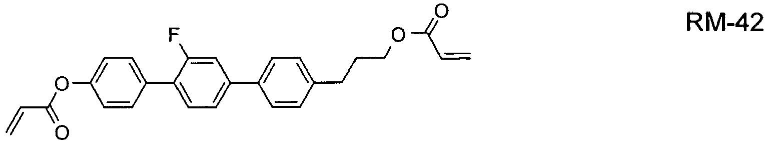 |
| 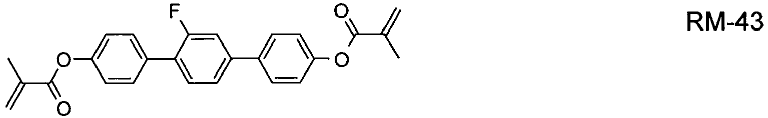 |
| 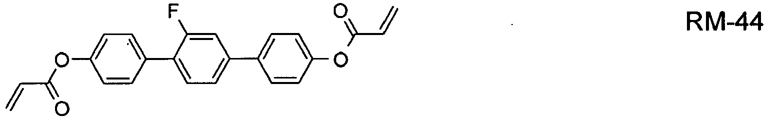 |
| 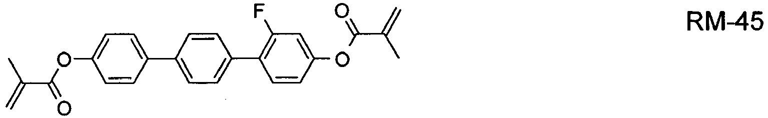 |
| 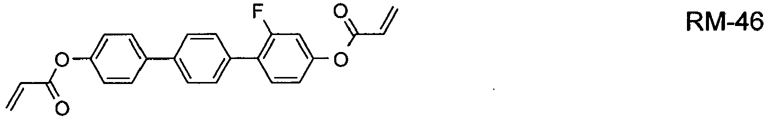 |
| 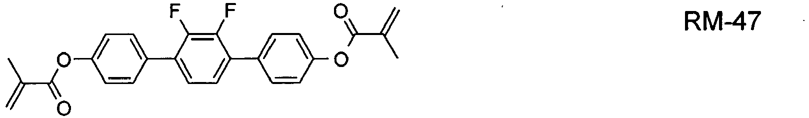 |
| 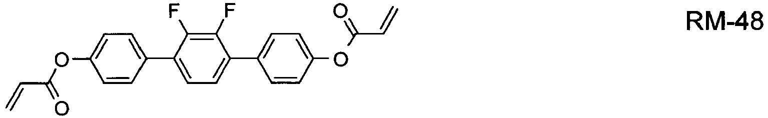 |
| 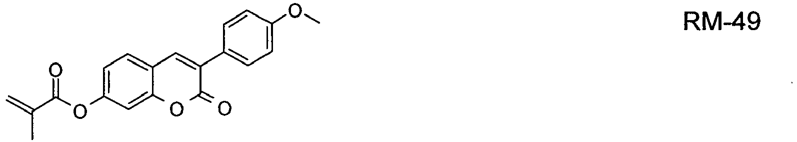 |
| 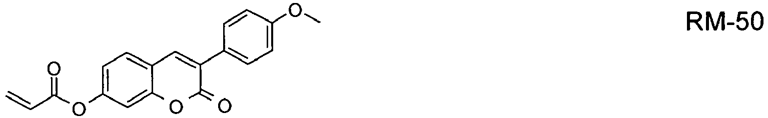 |
| 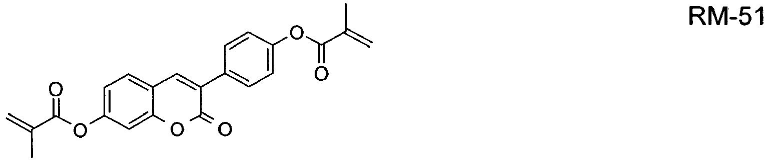 |
| 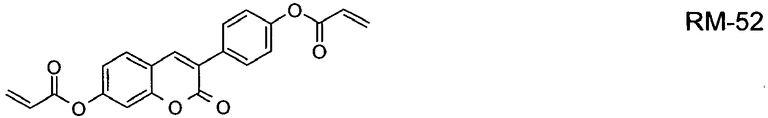 |
| 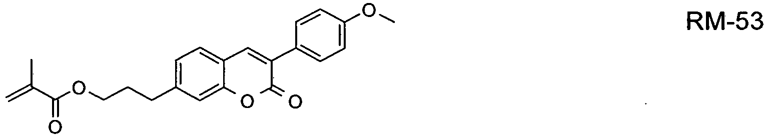 |
| 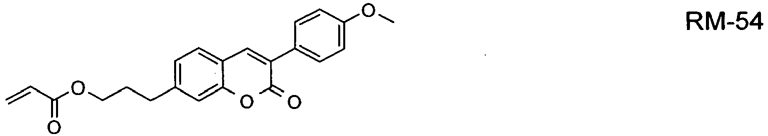 |
| 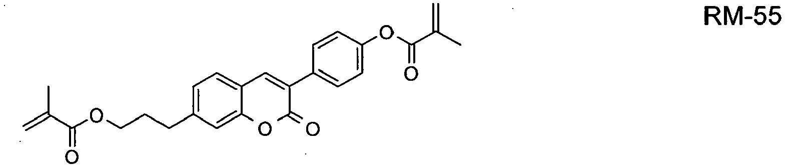 |
| 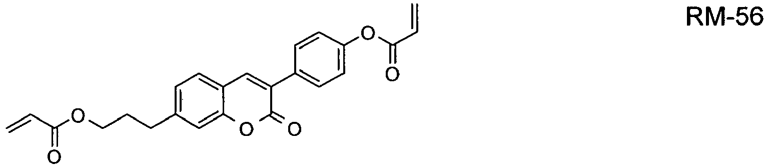 |
| 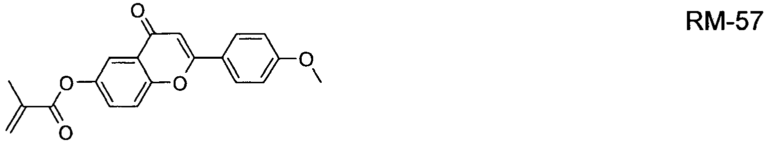 |
| 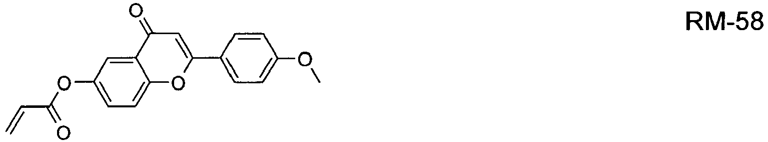 |
| 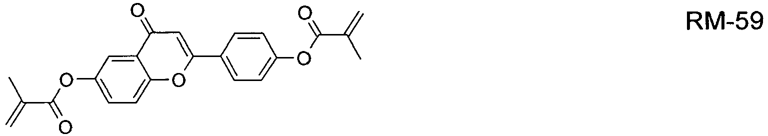 |
| 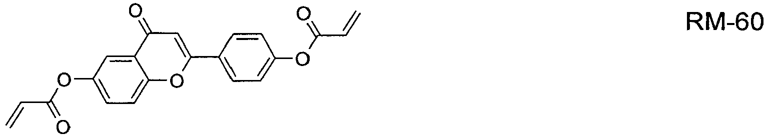 |
| 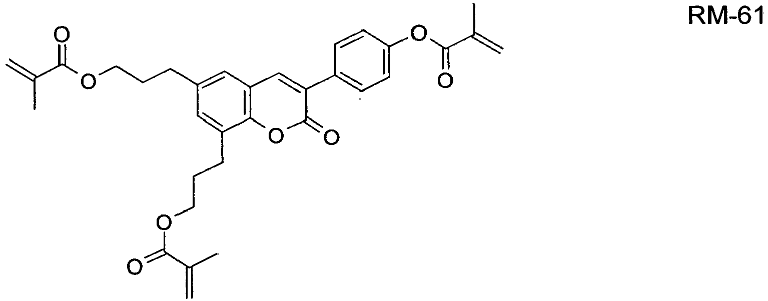 |
| 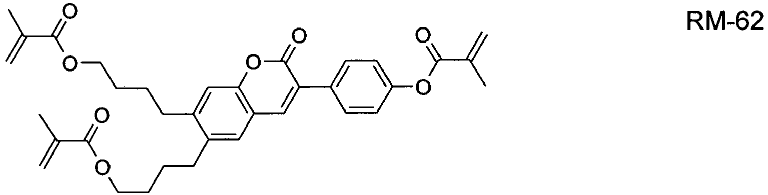 |
| 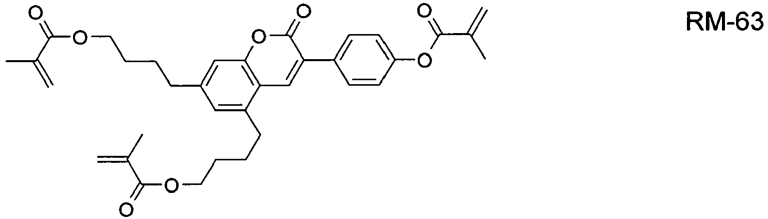 |
| 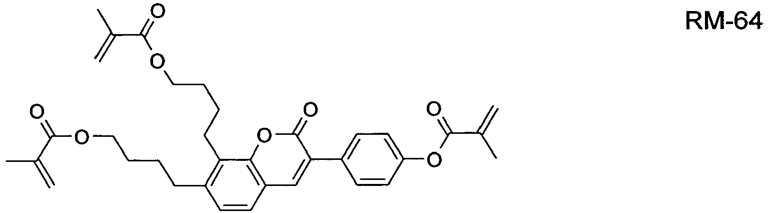 |
| 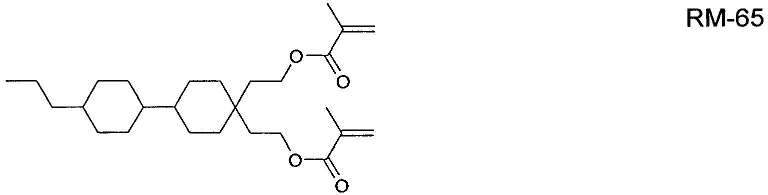 |
| 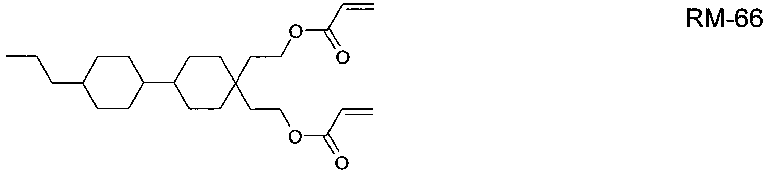 |
| 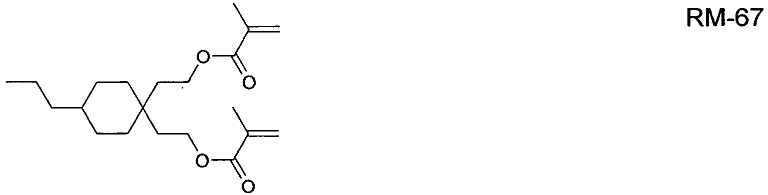 |
| 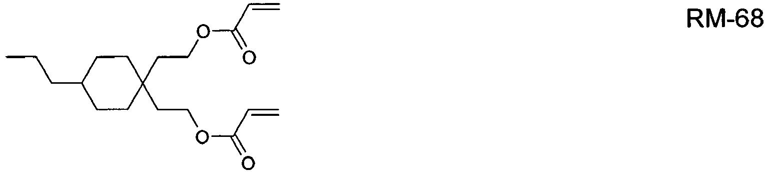 |
| 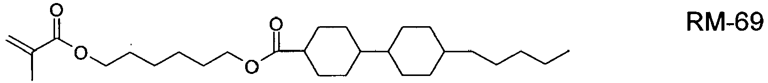 |
| 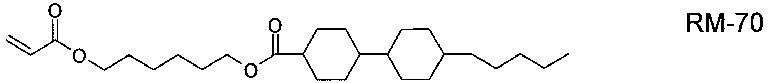 |
| 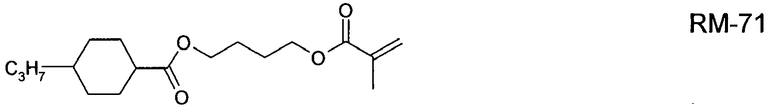 |
| 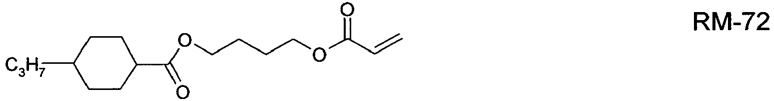 |
| 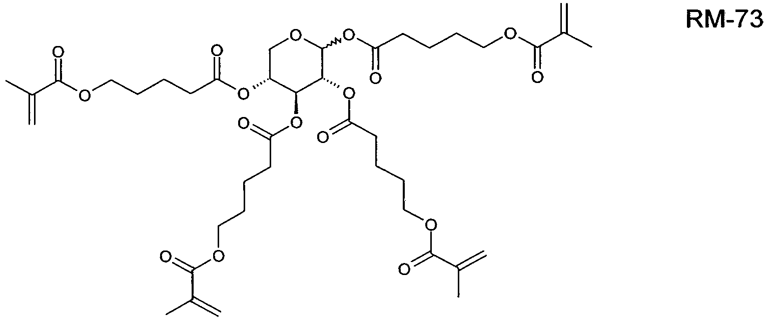 |
| 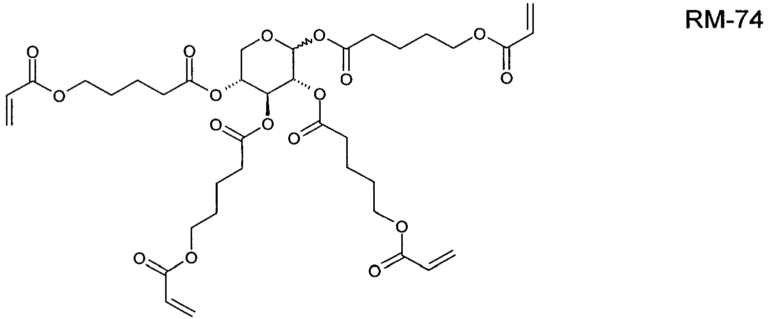 |
| 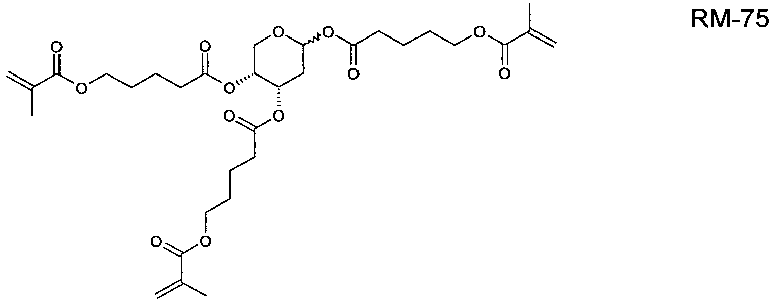 |
| 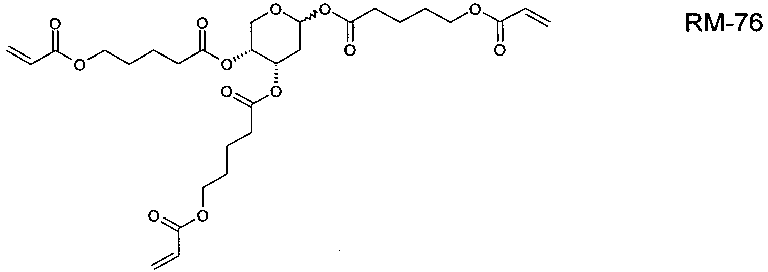 |
| 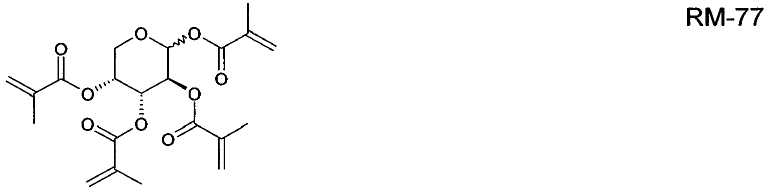 |
| 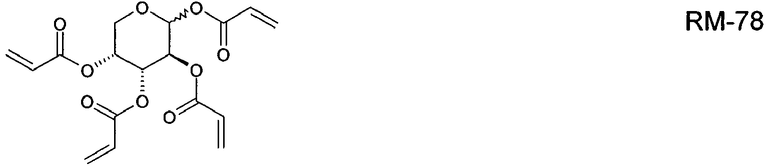 |
| 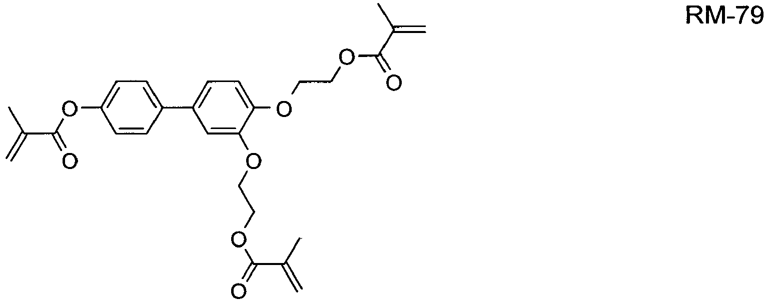 |
| 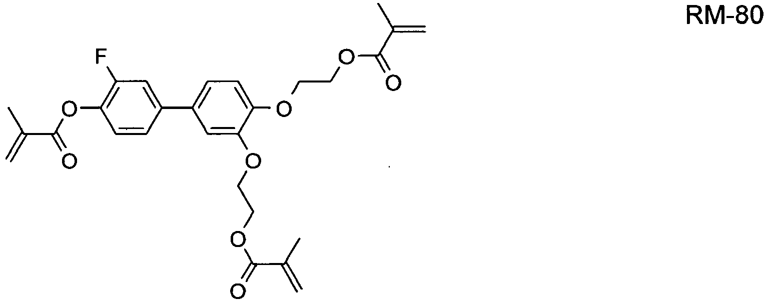 |
| 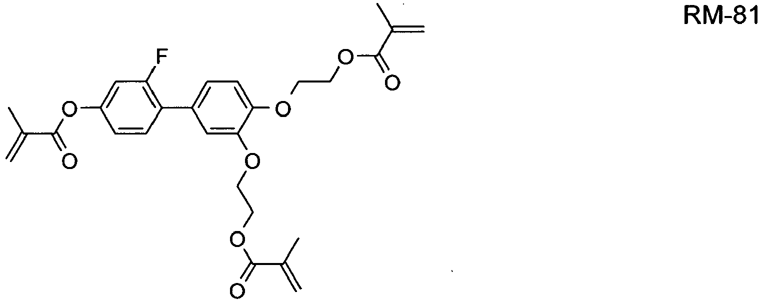 |
| 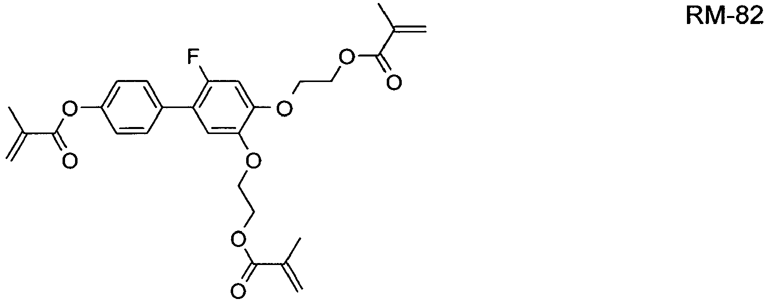 |
| 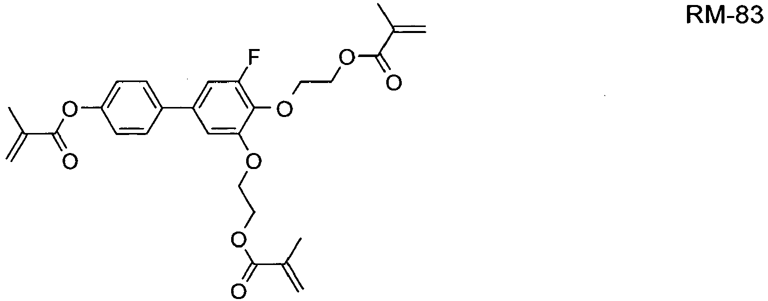 |
| 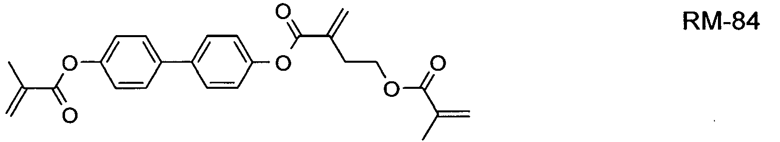 |
| 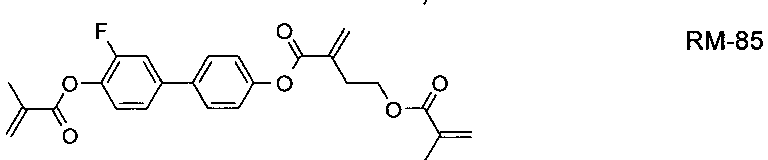 |
| 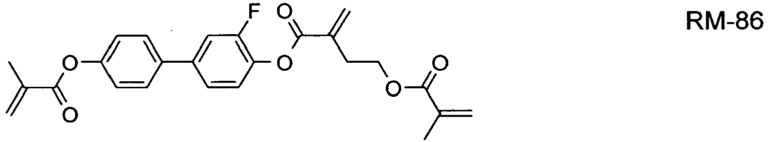 |
| 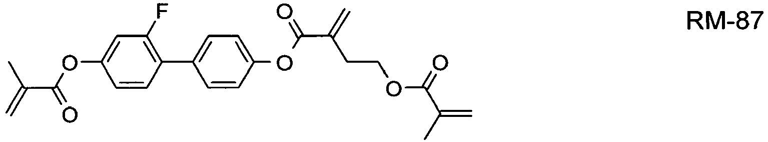 |
| 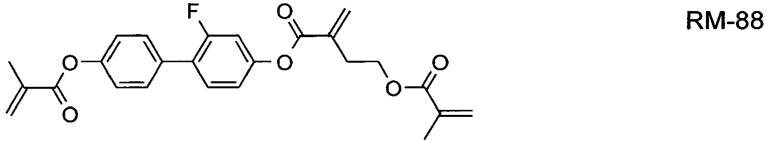 |
| 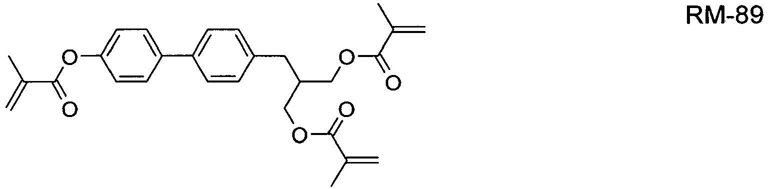 |
| 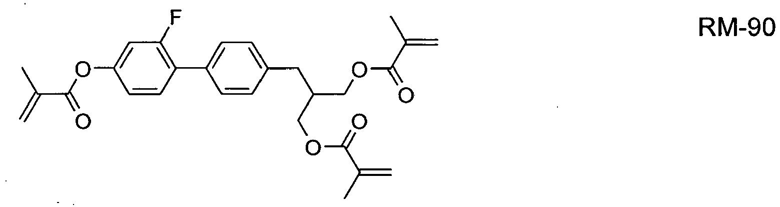 |
| 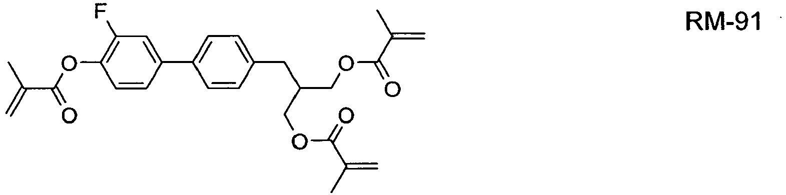 |
| 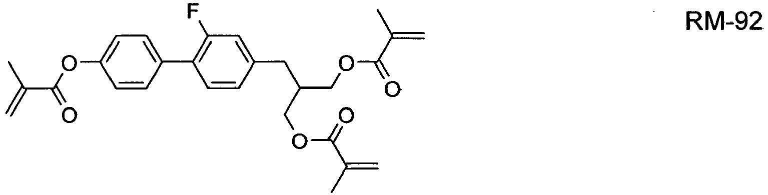 |
| 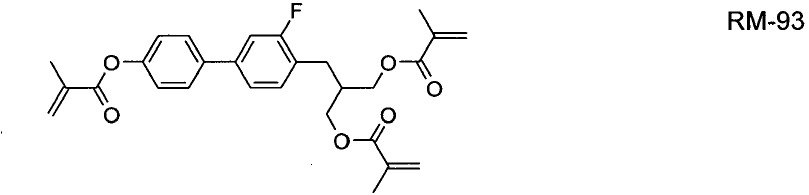 |
| 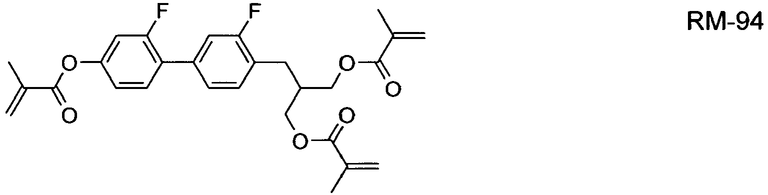 |
| 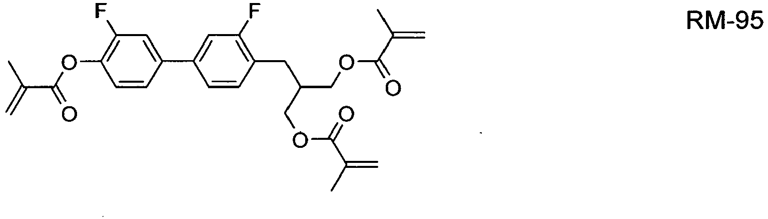 |

In einer bevorzugten Ausführungsform enthalten die flüssigkristallinen Mischungen eine oder mehrere Verbindungen ausgewählt aus der Gruppe der Verbindungen der Tabelle E.

### Beispiele

Die folgenden Ausführungsbeispiele sollen die Erfindung erläutern, ohne sie zu begrenzen.

Vor- und nachstehend bedeuten Prozentangaben Gewichtsprozent. Alle Temperaturen sind in Grad Celsius angegeben. Fp. bedeutet Schmelzpunkt, Kp. = Klärpunkt. Ferner bedeuten K = kristalliner Zustand, N = nematische Phase, S = smektische Phase und I = isotrope Phase. Die Angaben zwischen diesen Symbolen stellen die Übergangstemperaturen dar. Weiterhin bedeutet
- Vₒ: Schwellenspannung, kapazitiv [V] bei 20 °C
- Δn: die optische Anisotropie gemessen bei 20 °C und 589 nm
- Δε: die dielektrische Anisotropie bei 20 °C und 1 kHz
- cp.: Klärpunkt [°C]
- K₁: elastische Konstante, "Splay"-Deformation bei 20 °C, [pN]
- K₃: elastische Konstante, "Bend"-Deformation bei 20 °C, [pN]
- γ₁: Rotationsviskosität gemessen bei 20 °C [mPa·s], bestimmt nach dem Rotationsverfahren in einem magnetischen Feld
- LTS: Tieftemperaturstabilität [Low temperature stability (nematische Phase)], bestimmt in Testzellen.

Vor- und nachstehend bedeuten Prozentangaben Gewichtsprozent. Alle Temperaturen sind in Grad Celsius angegeben.

### Ausführungsbeispiele

### Beispiel 1

Bei der Herstellung einer VA-Mischung werden die nachfolgend genannten Einzelsubstanzen Nr. 1-10 in die erfindungsmäße Mischvorrichtung gemäß Abb. 1 gegeben und 60 Minuten bei Raumtemperatur homogenisiert. Man erhält 15 kg einer flüssigkristallinen Mischung, die aus einem Auslassventil am Boden der Mischtrommel direkt abgefüllt werden kann.

| Nr. | Substanz | Menge in 15 kg Mischung | Aggregatzustand bei 23 °C (RT) | Phase | Schmelzpunkt |
|---|---|---|---|---|---|
| 1 | CY-3-O2 | 2,40 kg | fest | kristallin | 60 °C |
| 2 | CY-5-O2 | 2,10 kq | fest | kristallin | 49 °C |
| 3 | CCY-3-O2 | 1,80 kg | fest | kristallin | 79 °C |
| 4 | CCY-5-O2 | 1,65 kg | fest | kristallin | 66 °C |
| 5 | CCY-2-1 | 1,35 kg | fest | kristallin | 58 °C |
| 6 | CCY-3-1 | 1,20 kg | fest | kristallin | 67 °C |
| 7 | CC-3-4 | 1,20 kg | flüssig | smektisch | -5 °C |
| 8 | CC-3-5 | 1,35 kg | flüssig | smektisch | 22 °C |
| 9 | CP-5-3 | 1,05 kq | flüssig | isotrop | -8 °C |
| 10 | CP-3-O1 | 0,90 kg | fest | kristallin | 33 °C |

### Beispiel 2

Zu Herstellung einer PS-VA-Mischung (PS = polymer stabilized) werden die Einzelsubstanzen aus Beispiel 1 mit dem reaktiven Mesogen der Formel A analog Beispiel 1 gemischt und 90 Minuten bei Raumtemperatur homogenisiert. Man erhält eine flüssigkristalline Mischung, die aus einem Auslassventil am Boden der Mischtrommel direkt abgefüllt werden kann.

| Nr. | Substanz | Menge in 15 kg Mischung | Aggregatzustand bei 23 °C (RT) | Phase | Schmelzpunkt |
|---|---|---|---|---|---|
| 1 | reaktives Mesogen der Formel A | 0,04 kg | fest | kristallin | 147 °C |
| 2 | Mischung von Beispiel 1 | 14,96 kg | flüssig | nematisch | <-30 °C |

Das reaktive Mesogen der Formel A (RM-2) besitzt folgende Struktur:

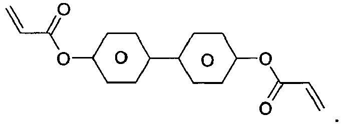

### Beispiel 3

Bei der Herstellung einer TN-TFT-Mischung werden die nachfolgend genannten Einzelsubstanzen Nr. 1-14 und ein chiraler Dotierstoff Nr. 15 in die erfindungsgemäße Mischvorrichtung gegeben und 60 Minuten bei Raumtemperatur homogenisiert. Man erhält 11,01 kg einer homogenen flüssigkristallinen Mischung, die aus einem Auslassventil am Boden der Mischtrommel direkt in Gebinde abgefüllt wird.

| Nr. | Substanz | Menge in 11,0 kg Mischung | Aggregatzustand bei 23 °C (RT) | Phase | Schmelzpunkt |
|---|---|---|---|---|---|
| 1 | BCH-3F.F | 1,32 kg | fest | kristallin | 66 °C |
| 2 | BCH-5F.F | 1,10 kg | fest | kristallin | 55 °C |
| 3 | ECCP-30CF₃ | 0,55 kg | fest | kristallin | 60 °C |
| 4 | ECCP-50CF₃ | 0,55 kg | fest | kristallin | 44 °C |
| 5 | CBC-33F | 0,22 kg | fest | kristallin | 133 °C |
| 6 | CBC-53F | 0,22 kg | fest | kristallin | 86 °C |
| 7 | CBC-55F | 0,22 kg | fest | kristallin | 85 °C |
| 8 | PCH-6F | 0,88 kg | fest | kristallin | 35 °C |
| 9 | PCH-7F | 0,66 kg | fest | kristallin | 36 °C |
| 10 | CCP-20CF₃ | 0,88 kg | fest | kristallin | 42 °C |
| 11 | CCP-30CF₃ | 1,32 kg | fest | kristallin | 39 °C |
| 12 | CCP-40CF₃ | 0,77 kg | fest | kristallin | 62 °C |
| 13 | CCP-50CF₃ | 1,21 kg | fest | kristallin | 52 °C |
| 14 | PCH-5F | 1,10 kg | fest | kristallin | 34 °C |
| 15 | S-2011 | 0,01 kg | flüssig | smektisch | 19 °C |

### Beispiel 4

Zu Herstellung einer PS-VA-Mischung (PS = polymer stabilized) werden die Einzelsubstanzen aus Beispiel 1 mit einem reaktiven Mesogen der Formel B in einem Schwingungsmischer, z.B. ein biaxialer Mischer der Fa. Collomix, gegeben und 90 Minuten bei Raumtemperatur homogenisiert. Man erhält eine flüssigkristalline Mischung, die aus einem Auslassventil am Boden der Mischtrommel direkt in Gebinde abgefüllt wird.

| Nr. | Substanz | Menge in 15 kg Mischung | Aggregatzustand bei 23 °C (RT) | Phase | Schmelzpunkt |
|---|---|---|---|---|---|
| 1 | reaktives Mesogen der Formel B | 0,04 kg | fest | kristallin | 152 °C |
| 2 | Mischung von Beispiel 1 | 14,96 kg | flüssig | nematisch | <-30 °C |

Das reaktive Mesogen der Formel B (RM-1) besitzt folgende Struktur:

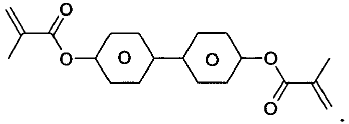

Analog der Beispiele 1-4 werden die folgenden flüssigkristallinen Mischungen, die für alle Display-Anwendungen geeignet sind, in der erfindungsgemäßen Mischvorrichtung hergestellt.

### Beispiel 5

| | |
|---|---|
| CCH-35 | 9,47 % |
| CCH-501 | 4,99 % |
| CCY-2-1 | 9,47 % |
| CCY-3-1 | 10,47 % |
| CCY-3-O2 | 10,47 % |
| CCY-5-O2 | 9,47 % |
| CPY-2-O2 | 11,96 % |
| CY-3-O4 | 8,97 % |
| CY-5-O4 | 10,97 % |
| RM-1 | 0,30 % |
| PCH-53 | 13,46 % |

Die Mischung gemäß Beispiel 5 ist vorzugsweise für PS-VA- und PS-FFS-Anwendungen geeignet.

### Beispiel 6

| | |
|---|---|
| BCH-32 | 7,48 % |
| CCH-23 | 21,93 % |
| CCH-34 | 3,49 % |
| CCY-3-O3 | 6,98 % |
| CCY-4-O2 | 7,98 % |
| CPY-2-O2 | 10,97 % |
| CPY-3-O2 | 10,97 % |
| CY-3-O2 | 15,45 % |
| RM-1 | 0,30 % |
| PCH-301 | 12,46 % |
| PCH-302 | 1,99 % |

Die Mischung gemäß Beispiel 6 ist vorzugsweise für PS-VA- und PS-FFS-Anwendungen geeignet.

### Beispiel 7

| | |
|---|---|
| CC-3-V1 | 7,98 % |
| CCH-23 | 17,95 % |
| CCH-34 | 3,99 % |
| CCH-35 | 6,98 % |
| CCP-3-1 | 4,99 % |
| CCY-3-O2 | 12,46 % |
| CPY-2-O2 | 7,98 % |
| CPY-3-O2 | 10,97 % |
| CY-3-O2 | 15,45 % |
| RM-1 | 0,30 % |
| PY-3-O2 | 10,97 % |

Die Mischung gemäß Beispiel 7 ist vorzugsweise für PS-VA und PS-FFS-Anwendungen geeignet.

### Beispiel 8

| | |
|---|---|
| CC-3-V1 | 8,97 % |
| CCH-23 | 12,96 % |
| CCH-34 | 6,23 % |
| CCH-35 | 7,73 % |
| CCP-3-1 | 3,49 % |
| CCY-3-O2 | 12,21 % |
| C PY-2-O2 | 6,73 % |
| CPY-3-O2 | 11,96 % |
| CY-3-O2 | 11,47 % |
| RM-1 | 0,30 % |
| PP-1-2V1 | 4,24 % |
| PY-3-O2 | 13,71 % |

Die Mischung gemäß Beispiel 8 ist vorzugsweise für PS-VA- und PS-FFS-Anwendungen geeignet.

### Beispiel 9

| | |
|---|---|
| CBC-33 | 3,50 % |
| CC-3-V | 38,00 % |
| CC-3-V1 | 10,00 % |
| CCP-V-1 | 3,00 % |
| CCP-V2-1 | 9,00 % |
| PGP-2-3 | 5,00 % |
| PGP-2-4 | 5,00 % |
| PGU-2-F | 8,00 % |
| PGU-3-F | 9,00 % |
| PUQU-3-F | 9,50 % |

Die Mischung gemäß Beispiel 9 ist vorzugsweise für TN-TFT-Anwendungen geeignet.

### Beispiel 10

| | |
|---|---|
| APUQU-3-F | 4,50 % |
| CC-3-V | 44,00 % |
| CC-3-V1 | 12,00 % |
| CCP-V-1 | 11,00 % |
| CCP-V2-1 | 9,00 % |
| PGP-2-3 | 6,00 % |
| PGUQU-3-F | 6,00 % |
| PP-1-2V1 | 7,00 % |
| PPGU-3-F | 0,50 % |

Die Mischung gemäß Beispiel 10 ist vorzugsweise für IPS- oder FFS-Anwendungen geeignet.

### Beispiel 11

| | |
|---|---|
| APUQU-3-F | 8,00 % |
| CBC-33 | 3,00 % |
| CC-3-V | 34,00 % |
| CC-3-V1 | 2,50 % |
| CCGU-3-F | 4,00 % |
| CCP-30CF₃ | 4,00 % |
| CCP-3F.F.F | 4,50 % |
| CCP-50CF₃ | 3,00 % |
| CCP-V-1 | 10,00 % |
| CCQU-3-F | 10,00 % |
| CPGU-3-OT | 6,00 % |
| PGUQU-3-F | 4,00 % |
| PUQU-3-F | 7,00 % |

Die Mischung gemäß Beispiel 11 ist vorzugsweise für IPS- oder FFS-Anwendungen geeignet.

### Beispiel 12

| | |
|---|---|
| APUQU-2-F | 5,00 % |
| APUQU-3-F | 7,50 % |
| BCH-3F.F.F | 7,00 % |
| CC-3-V | 40,50 % |
| CC-3-V1 | 6,00 % |
| CCP-V-1 | 9,50 % |
| CPGU-3-OT | 5,00 % |
| PGP-2-3 | 6,00 % |
| PGP-2-4 | 6,00 % |
| PPGU-3-F | 0,50 % |
| PUQU-3-F | 7,00 % |

Die Mischung gemäß Beispiel 12 ist vorzugsweise für IPS- oder FFS-Anwendungen geeignet.

### Beispiel 13

| | |
|---|---|
| APUQU-2-F | 8,00 % |
| APUQU-3-F | 8,00 % |
| BCH-32 | 7,00 % |
| CC-3-V | 43,00 % |
| CCP-V-1 | 9,00 % |
| PGP-2-3 | 7,00 % |
| PGP-2-4 | 6,00 % |
| PUQU-2-F | 5,00 % |
| PUQU-3-F | 7,00 % |

Die Mischung gemäß Beispiel 13 ist vorzugsweise für TN-TFT-Anwendungen geeignet.

### Beispiel 14

| | |
|---|---|
| BCH-5F.F | 8,00 % |
| CBC-33F | 3,00 % |
| CC-3-V | 22,00 % |
| CCGU-3-F | 6,00 % |
| CCP-3F.F.F | 8,00 % |
| CCP-5F.F.F | 4,00 % |
| CCP-V-1 | 13,00 % |
| CCP-V2-1 | 11,00 % |
| CCQU-3-F | 5,00 % |
| CCQU-5-F | 4,00 % |
| PUQU-3-F | 16,00 % |

Die Mischung gemäß Beispiel 14 ist vorzugsweise für TN-TFT-Anwendungen geeignet.

### Beispiel 15

| | |
|---|---|
| CBC-33F | 3,00 % |
| CBC-53F | 3,00 % |
| CC-3-V | 17,00 % |
| CC-3-V1 | 4,00 % |
| CCP-3F.F.F | 8,00 % |
| CCPC-33 | 3,00 % |
| CCPC-34 | 3,00 % |
| CCP-V-1 | 5,00 % |
| CCP-V2-1 | 2,00 % |
| CCQU-2-F | 1,50 % |
| CCQU-3-F | 10,00 % |
| CCQU-5-F | 10,00 % |
| CGU-3-F | 6,00 % |
| PGP-2-3 | 7,50 % |
| PP-1-2V1 | 7,00 % |
| PUQU-3-F | 10,00 % |

Die Mischung gemäß Beispiel 15 ist vorzugsweise für TN-TFT-Anwendungen geeignet.

### Beispiel 16

| | |
|---|---|
| APUQU-2-F | 1,00 % |
| BCH-3F.F.F | 15,00 % |
| CC-3-V | 33,50 % |
| CC-3-V1 | 2,00 % |
| CCGU-3-F | 1,00 % |
| CCPC-33 | 2,00 % |
| CCP-V-1 | 4,50 % |
| CPP-2-F | 5,00 % |
| CPP-3-F | 5,00 % |
| PGP-2-3 | 8,50 % |
| PGUQU-3-F | 7,80 % |
| PP-1-2V1 | 11,00 % |
| PPGU-3-F | 0,20 % |
| PUQU-3-F | 3,50 % |

Die Mischung gemäß Beispiel 16 ist vorzugsweise für TN-TFT-Anwendungen geeignet.

### Beispiel 17

| | |
|---|---|
| APUQU-2-F | 2,00 % |
| APUQU-3-F | 6,00 % |
| CC-3-V | 42,00 % |
| CCP-3-1 | 3,00 % |
| CCP-3-3 | 3,00 % |
| CCP-3F.F.F | 8,00 % |
| CCP-V-1 | 1,50 % |
| CCQU-3-F | 7,00 % |
| CCQU-5-F | 3,00 % |
| CPGU-3-OT | 6,50 % |
| PGUQU-3-F | 5,00 % |
| PGUQU-4-F | 4,00 % |
| PGUQU-5-F | 4,00 % |
| PPGU-3-F | 0,50 % |
| PUQU-3-F | 4,50 % |

Die Mischung gemäß Beispiel 17 ist vorzugsweise für IPS- oder FFS-Anwendungen geeignet.

### Beispiel 18

| | |
|---|---|
| CC-3-V | 49,50 % |
| CCP-3-1 | 1,50 % |
| CCP-V-1 | 6,00 % |
| CPGU-3-OT | 7,00 % |
| PGP-2-3 | 8,50 % |
| PGP-2-4 | 5,50 % |
| PGUQU-3-F | 7,00 % |
| PGUQU-4-F | 4,00 % |
| PP-1-2V1 | 2,50 % |
| PPGU-3-F | 0,50 % |
| PUQU-3-F | 8,00 % |

Die Mischung gemäß Beispiel 18 ist vorzugsweise für TN-TFT-Anwendungen geeignet.

### Beispiel 19

| | |
|---|---|
| BCH-32 | 6,00 % |
| CCH-23 | 18,00 % |
| CCH-34 | 8,00 % |
| CCP-3-1 | 12,00 % |
| CCP-3-3 | 3,00 % |
| CCY-3-O2 | 6,00 % |
| CPY-2-O2 | 6,00 % |
| CPY-3-O2 | 7,00 % |
| CY-3-O2 | 14,00 % |
| CY-3-O4 | 8,00 % |
| CY-5-O2 | 9,00 % |
| PYP-2-3 | 3,00 % |

Die Mischung gemäß Beispiel 19 ist vorzugsweise für VA- und FFS-Anwendungen geeignet.

### Beispiel 20

| | | | |
|---|---|---|---|
| CC-3-V | 22,50 % | Klärpunkt [°C]: | 74,7 |
| CC-3-V1 | 10,00 % | Δn [589 nm, 20 °C]: | 0,0981 |
| CCH-35 | 6,50 % | Δε [1 kHz, 20 °C]: | -3,5 |
| CCP-3-1 | 1,00 % | ε_{\|\|} [1 kHz, 20 °C]: | 3,5 |
| CCY-3-O1 | 3,00 % | ε_{⊥} [1 kHz, 20°C]: | 7,0 |
| CCY-3-O2 | 12,50 % | K₁ [pN, 20 °C]: | 14,2 |
| CCY-4-O2 | 3,50 % | K₃ [pN, 20 °C]: | 16,7 |
| CPY-3-O2 | 12,50 % | γ₁ [mPa·s, 20 °C]: | 98 |
| CY-3-O2 | 15,00 % | V₀ [20 °C, V]: | 2,30 |
| PYP-3-O2 | 12,00 % | | |
| PYP-2-3 | 1,50 % | | |

### Beispiel 20a

Die Mischung aus Beispiel 20 wird zusätzlich mit 0,001 % Irganox® 1076 (Octadecyl-3-(3,5-di-tert. butyl-4-hydroxyphenyl)-proprionat, Fa. BASF) und 0,3 % RM-1 versetzt.

### Beispiel 21

| | | | |
|---|---|---|---|
| CC-3-V | 20,00 % | Klärpunkt [°C]: | 74,6 |
| CC-3-V1 | 10,50 % | Δn [589 nm, 20 °C]: | 0,1090 |
| CCP-3-1 | 3,50 % | Δε [1 kHz, 20 °C]: | -3,8 |
| CCY-3-O1 | 9,00 % | ε_{∥} [1 kHz, 20 °C]: | 3,7 |
| CCY-3-O2 | 8,00 % | ε_{⊥} [1 kHz, 20°C]: | 7,5 |
| CPY-2-O2 | 4,00 % | K₁ [pN, 20 °C]: | 13,5 |
| CPY-3-O2 | 8,00 % | K₃ [pN, 20 °C]: | 15,9 |
| PY-3-O2 | 9,00 % | γ₁ [mPa·s, 20 °C]: | 112 |
| CY-3-O2 | 15,00 % | V₀ [20 °C, V]: | 2,16 |
| PGIY-2-O4 | 8,00 % | | |
| PCH-301 | 5,00 % | | |

### Beispiel 21a

Die Mischung aus Beispiel 22 wird zusätzlich mit 0,25 % RM-17 versetzt.

### Beispiel 22

| | | | |
|---|---|---|---|
| CY-3-O2 | 15,00 % | Klärpunkt [°C]: | 80,5 |
| CY-3-O4 | 4,00 % | Δn [589 nm, 20 °C]: | 0,1025 |
| CY-5-O2 | 6,50 % | Δε [1 kHz, 20 °C]: | -3,4 |
| CCY-3-O1 | 5,00 % | ε_{∥} [1 kHz, 20 °C]: | 3,5 |
| CCY-3-O3 | 2,00 % | ε_{⊥} [1 kHz, 20°C]: | 6,9 |
| CCY-4-O2 | 6,00 % | K₁ [pN, 20 °C]: | 14,0 |
| CPY-2-O2 | 7,00 % | K₃ [pN, 20 °C]: | 14,1 |
| CPY-3-O2 | 7,00 % | γ₁ [mPa·s, 20 °C]: | 141 |
| CCY-2-1 | 6,00 % | V₀ [20°C, V]: | 2,16 |
| CCY-3-1 | 6,00 % | | |
| CCH-23 | 15,50 % | | |
| CCH-34 | 5,00 % | | |
| BCH-32 | 13,00 % | | |
| PP-1-4 | 2,00 % | | |

### Beispiel 22a

Die Mischung aus Beispiel 22 wird zusätzlich mit 0,25 % RM-80 versetzt.

### Beispiel 23

| | | | |
|---|---|---|---|
| CC-3-V | 32,50 % | Klärpunkt [°C]: | 74,6 |
| CC-3-V1 | 5,00 % | Δn [589 nm, 20 °C]: | 0,1074 |
| CCP-3-1 | 6,00 % | Δε [1 kHz, 20 °C]: | -2,4 |
| CCY-3-O2 | 9,00 % | ε_{∥} [1 kHz, 20 °C]: | 3,4 |
| CCY-4-O2 | 5,50 % | ε_{⊥} [1 kHz, 20°C]: | 5,8 |
| CCY-2-O2 | 8,00 % | K₁ [pN, 20 °C]: | 13,0 |
| CPY-2-O2 | 9,00 % | K₃ [pN, 20 °C]: | 14,0 |
| PP-1-2V1 | 6,00 % | γ₁ [mPa·s, 20 °C]: | 65 |
| PY-3-O2 | 8,00 % | V₀ [20 °C, V]: | 2,58 |
| PYP-2-3 | 6,00 % | | |
| Y-4O-O4 | 5,00 % | | |

### Beispiel 23a

Die Mischung aus Beispiel 23 wird zusätzlich mit 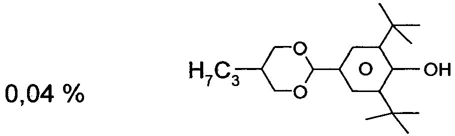 und 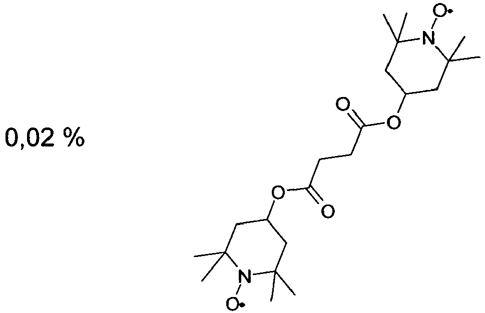 stabilisiert.

### Beispiel 24

| | | | |
|---|---|---|---|
| CC-3-V | 32,50 % | Klärpunkt [°C]: | 74,6 |
| CC-3-V1 | 5,00 % | Δn [589 nm, 20 °C]: | 0,1074 |
| CCP-3-1 | 6,00 % | Δε [1 kHz, 20 °C]: | -2,4 |
| CCY-3-O2 | 9,00 % | ε_{∥} [1 kHz, 20 °C]: | 3,4 |
| CCY-4-O2 | 5,50 % | ε_{⊥} [1 kHz, 20°C]: | 5,8 |
| CPY-2-O2 | 8,00 % | K₁ [pN, 20 °C]: | 13,0 |
| CPY-3-O2 | 9,00 % | K₃ [pN, 20 °C]: | 14,0 |
| PP-1-2V1 | 6,00 % | γ₁ [mPa·s, 20 °C]: | 65 |
| PY-3-O2 | 8,00 % | V₀ [20 °C, V]: | 2,58 |
| PYP-2-3 | 6,00 % | | |
| Y-4O-O4 | 5,00 % | | |

### Beispiel 24a

Die Mischung aus Beispiel 24 wird zusätzlich mit 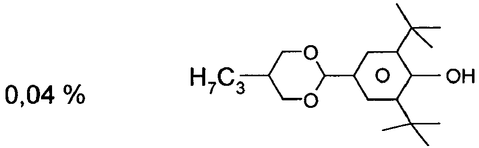 und 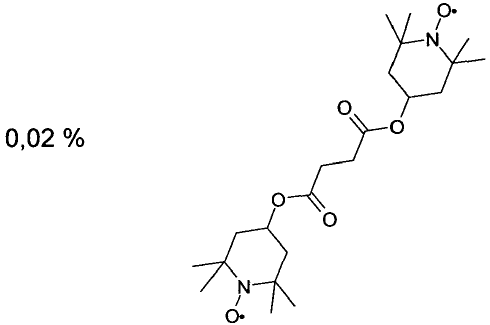 stabilisiert.

### Beispiel 25

| | | | |
|---|---|---|---|
| BCH-32 | 0,50 % | Klärpunkt [°C]: | 75,1 |
| CC-3-V | 15,50 % | Δn [589 nm, 20 °C]: | 0,1039 |
| CC-3-V1 | 11,00 % | Δε [1 kHz, 20 °C]: | -3,7 |
| CCH-23 | 5,50 % | ε_{∥} [1 kHz, 20 °C]: | 3,5 |
| CCH-35 | 7,00 % | ε_{⊥} [1 kHz, 20°C]: | 7,2 |
| CCY-3-O1 | 10,00 % | K₁ [pN, 20 °C]: | 15,4 |
| CCY-3-O2 | 11,00 % | K₃ [pN, 20 °C]: | 17,2 |
| CPY-3-O2 | 11,00 % | γ₁ [mPa·s, 20 °C]: | 106 |
| CY-3-O2 | 7,50 % | V₀ [20 °C, V]: | 1,12 |
| PY-1-O4 | 3,50 % | | |
| PY-3-O2 | 14,50 % | | |
| PYP-2-3 | 3,00 % | | |

### Beispiel 25a

Die Mischung aus Beispiel 25 wird zusätzlich mit 0,001 % Irganox® 1076 (Octadecyl-3-(3,5-di-tert. butyl-4-hydroxyphenyl)-proprionat, Fa. BASF) und 0,3 % RM-1 versetzt.

### Beispiel 26

| | | | |
|---|---|---|---|
| CY-3-O2 | 15,00 % | Klärpunkt [°C]: | 80,4 |
| CY-5-O2 | 12,50 % | Δn [589 nm, 20 °C]: | 0,1038 |
| CCY-3-O1 | 2,50 % | Δε [1 kHz, 20 °C]: | -3,3 |
| CCY-4-O2 | 5,00 % | ε_{∥} [1 kHz, 20 °C]: | 3,5 |
| CPY-2-O2 | 8,00 % | ε_{⊥} [1 kHz, 20°C]: | 6,8 |
| CPY-3-O2 | 8,00 % | K₁ [pN, 20 °C]: | 14,2 |
| CCY-2-1 | 6,00 % | K₃ [pN, 20 °C]: | 14,2 |
| CCY-3-1 | 6,00 % | γ₁ [mPa·s, 20 °C]: | 137 |
| CCH-23 | 15,00 % | V₀ [20 °C, V]: | 2,18 |
| CCH-34 | 5,00 % | LTS [Bulk, -20 °C]: | > 1000 h |
| CCH-301 | 1,50 % | | |
| BCH-32 | 15,50 % | | |

### Beispiel 26a

Die Mischung aus Beispiel 26 wird zusätzlich mit 0,25 % RM-41 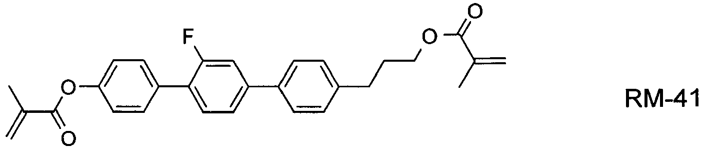 versetzt.

### Beispiel 27

| | | | |
|---|---|---|---|
| APUQU-2-F | 8,50 % | Klärpunkt [°C]: | 79,7 |
| APUQU-3-F | 15,00 % | Δn [589 nm, 20 °C]: | 0,1017 |
| PCH-302 | 5,00 % | Δε [1 kHz, 20 °C]: | 5,9 |
| PCH-53 | 26,00 % | ε_{∥} [1 kHz, 20 °C]: | 9,6 |
| CC-3-V1 | 12,00 % | ε_{⊥} [1 kHz, 20°C]: | 3,7 |
| CCP-V-1 | 5,50 % | K₁ [pN, 20 °C]: | 15,0 |
| BCH-32 | 3,00 % | K₃ [pN, 20 °C]: | 16,1 |
| CCP-3-1 | 15,00 % | γ₁ [mPa·s, 20 °C]: | 116 |
| CY-3-O2 | 4,00 % | V₀ [20 °C, V]: | 1,68 |
| CCY-3-O2 | 6,00 % | | |

### Beispiel 28

| | | | |
|---|---|---|---|
| CPGP-4-3 | 3,00 % | Klärpunkt [°C]: | 120,5 |
| CPGP-5-2 | 5,00 % | Δn [589 nm, 20 °C]: | 0,2183 |
| CPGP-5-3 | 5,00 % | Δε [1 kHz, 20 °C]: | 11,6 |
| DPGU-4-F | 8,00 % | ε_{∥} [1 kHz, 20 °C]: | 15,7 |
| ME2N.F | 5,00 % | ε_{⊥} [1 kHz, 20°C]: | 4,1 |
| PCH-302 | 18,00 % | γ₁ [mPa·s, 20 °C]: | 271 |
| PGIGI-3-F | 5,00 % | | |
| PGP-1-2V | 12,00 % | | |
| PGP-2-2V | 13,00 % | | |
| PGP-3-2V | 12,00 % | | |
| PGUQU-5-F | 4,00 % | | |
| PUQU-3-F | 10,00 % | | |

### Beispiel 29

| | | | |
|---|---|---|---|
| CC-3-V | 39,00 % | Klärpunkt [°C]: | 84,7 |
| CCY-3-O1 | 6,00 % | Δn [589 nm, 20 °C]: | 0,0969 |
| CCY-3-O2 | 3,50 % | Δε [1 kHz, 20 °C]: | -3,3 |
| CCY-4-O2 | 4,00 % | ε_{∥} [1 kHz, 20 °C]: | 3,4 |
| C LY-3-O2 | 5,00 % | ε_{⊥} [1 kHz, 20°C]: | 6,7 |
| CLY-3-O3 | 7,00 % | K₁ [pN, 20 °C]: | 13,5 |
| CPY-2-O2 | 9,00 % | K₃ [pN, 20 °C]: | 14,9 |
| CPY-3-O2 | 10,00 % | γ₁ [mPa·s, 20 °C]: | 83 |
| CY-5-O2 | 9,50 % | V₀ [20 °C, V]: | 2,26 |
| PY-1-O4 | 7,00 % | | |

### Beispiel 29a

Die Mischung aus Beispiel 29 wird zusätzlich mit 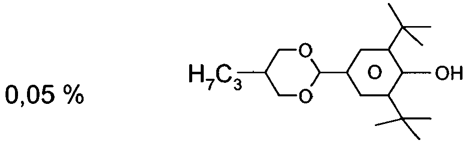 und 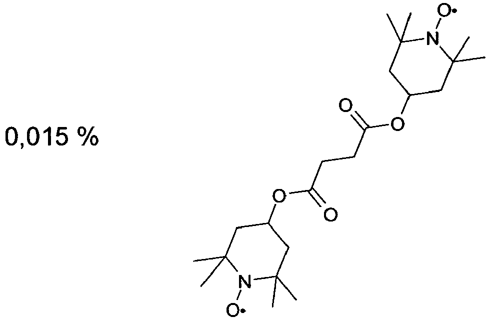 stabilisiert.

### Beispiel 30

| | | | |
|---|---|---|---|
| PUQU-3-F | 4,00 % | Klärpunkt [°C]: | 86,9 |
| APUQU-2-F | 5,00 % | Δn [589 nm, 20 °C]: | 0,1024 |
| APUQU-3-F | 5,00 % | Δε [1 kHz, 20 °C]: | 6,8 |
| CDUQU-3-F | 8,00 % | K₁ [pN, 20 °C]: | 13,3 |
| PGU-3-F | 6,00 % | K₃ [pN, 20 °C]: | 15,1 |
| CC-3-V | 37,50 % | γ₁ [mPa·s, 20 °C]: | 84 |
| CCP-V-1 | 12,00 % | V₀ [20 °C, V]: | 1,48 |
| CCP-V2-1 | 8,00 % | | |
| PGP-2-2V | 4,00 % | | |
| PPGU-3-F | 0,50 % | | |
| CY-3-O2 | 5,00 % | | |
| CCY-3-O2 | 5,00 % | | |

### Beispiel 31

| | | | |
|---|---|---|---|
| PUQU-3-F | 8,00% | Klärpunkt [°C]: | 86,9 |
| CCQU-3-F | 8,00 % | Δn [589 nm, 20 °C]: | 0,1015 |
| CCGU-3-F | 4,00 % | Δε [1 kHz, 20 °C]: | 6,6 |
| BCH-3F.F.F | 8,00 % | K₁ [pN, 20 °C]: | 13,1 |
| APUQU-2-F | 4,00 % | K₃ [pN, 20 °C]: | 15,1 |
| APUQU-3-F | 4,00 % | γ₁ [mPa·s, 20 °C]: | 83 |
| CC-3-V | 36,00 % | V₀ [20 °C, V]: | 1,49 |
| CCP-V-1 | 6,00 % | | |
| CCP-V2-1 | 6,00 % | | |
| PGP-2-2V | 5,50 % | | |
| PPGU-3-F | 0,50 % | | |
| CCY-2-1 | 5,00 % | | |
| CCY-3-1 | 5,00 % | | |

### Beispiel 32

| | | | |
|---|---|---|---|
| APUQU-3-F | 5,00 % | Klärpunkt [°C]: | 90,2 |
| CC-3-V1 | 7,50 % | Δn [589 nm, 20 °C]: | 0,1044 |
| CC-4-V | 10,00 % | Δε [1 kHz, 20 °C]: | 7,1 |
| CC-5-V | 8,50 % | ε_{∥} [1 kHz, 20 °C]: | 10,4 |
| CCGU-3-F | 7,00 % | ε_{⊥} [1 kHz, 20 °C]: | 3,3 |
| CCH-34 | 4,50 % | K₁ [pN, 20 °C]: | 12,9 |
| CCP-30CF₃ | 3,00 % | K₃ [pN, 20 °C]: | 15,1 |
| CCP-V-1 | 14,50 % | γ₁ [mPa·s, 20 °C]: | 71 |
| CCP-V2-1 | 8,00 % | V₀ [20 °C, V]: | 1,42 |
| PCH-301 | 11,50 % | | |
| PGP-2-2V | 1,00 % | | |
| PGUQU-3-F | 6,00 % | | |
| PPGU-3-F | 1,50 % | | |
| PUQU-3-F | 12,00 % | | |

### Beispiel 33

| | | | |
|---|---|---|---|
| PUQU-3-F | 8,00 % | Klärpunkt [°C]: | 85,3 |
| CCQU-3-F | 8,00 % | Δn [589 nm, 20 °C]: | 0,1030 |
| CCGU-3-F | 4,00 % | Δε [1 kHz, 20 °C]: | 6,6 |
| BCH-3F.F.F | 8,00 % | K₁ [pN, 20 °C]: | 12,9 |
| APUQU-2-F | 4,00 % | K₃ [pN, 20 °C]: | 14,7 |
| APUQU-3-F | 4,00 % | γ₁ [mPa·s, 20 °C]: | 69 |
| CC-3-V | 40,00 % | V₀ [20 °C, V]: | 1,47 |
| CCP-V-1 | 8,00 % | | |
| CCP-V2-1 | 8,00 % | | |
| PGP-2-2V | 7,50 % | | |
| PPGU-3-F | 0,50 % | | |

### Beispiel 34

| | | | |
|---|---|---|---|
| PUQU-3-F | 12,00 % | Klärpunkt [°C]: | 80,3 |
| APUQU-3-F | 5,50 % | Δn [589 nm, 20 °C]: | 0,1037 |
| CCGU-3-F | 4,00 % | Δε [1 kHz, 20 °C]: | 6,4 |
| BCH-3F.F.F | 8,00 % | K₁ [pN, 20 °C]: | 12,0 |
| BCH-3F.F | 4,00 % | K₃ [pN, 20 °C]: | 14,3 |
| CCG-V-F | 4,00 % | γ₁ [mPa·s, 20 °C]: | 66 |
| CC-3-V | 40,00 % | V₀ [20 °C, V]: | 1,44 |
| CCP-V-1 | 8,00 % | | |
| CCP-V2-1 | 8,00 % | | |
| PGP-2-2V | 6,00 % | | |
| PPGU-3-F | 0,50 % | | |

### Beispiel 35

| | | | |
|---|---|---|---|
| PGUQU-3-F | 6,00 % | Klärpunkt [°C]: | 101 |
| PGUQU-4-F | 10,00 % | Δn [589 nm, 20 °C]: | 0,1939 |
| PGUQU-5-F | 10,00 % | Δε [1 kHz, 20 °C]: | 37,0 |
| PUQU-3-F | 17,00 % | ε_{∥} [1 kHz, 20 °C]: | 42,9 |
| PGU-2-F | 10,00 % | ε_{⊥} [1 kHz, 20°C]: | 6,0 |
| PGU-3-F | 11,00 % | γ₁ [mPa·s, 20 °C]: | 415 |
| CPGU-3-OT | 8,00 % | | |
| CCGU-3-F | 8,00 % | | |
| BCH-3F.F.F | 12,00 % | | |
| CPGP-5-2 | 4,00 % | | |
| CPGP-5-3 | 4,00 % | | |

### Beispiel 36

| | | | |
|---|---|---|---|
| CC-3-V | 15,00 % | Klärpunkt [°C]: | 85 |
| CPGP-4-3 | 2,00 % | Δn [589 nm, 20 °C]: | 0,1981 |
| CPGP-5-2 | 2,00 % | Δε [1 kHz, 20 °C]: | 9,9 |
| CPTP-301 | 6,00 % | ε_{∥} [1 kHz, 20 °C]: | 13,6 |
| DGUQU-4-F | 3,00 % | ε_{⊥} [1 kHz, 20°C]: | 3,7 |
| PCH-301 | 7,00 % | K₁ [pN, 20 °C]: | 15,1 |
| PGP-2-2V | 14,50 % | K₃ [pN, 20 °C]: | 15,1 |
| PGUQU-3-F | 7,50 % | | |
| PGUQU-4-F | 7,00 % | | |
| PGUQU-5-F | 6,00 % | | |
| PP-1-2V1 | 12,00 % | | |
| PTP-102 | 6,00 % | | |
| PTP-201 | 6,00 % | | |
| PUQU-3-F | 6,00 % | | |

### Beispiel 37

| | | | |
|---|---|---|---|
| APUQU-3-F | 14,00 % | Klärpunkt [°C]: | 79,3 |
| CDUQU-3-F | 10,00 % | Δn [589 nm, 20 °C]: | 0,1022 |
| PCH-302 | 6,00 % | Δε [1 kHz, 20 °C]: | 5,8 |
| PCH-53 | 26,00 % | ε_{∥} [1 kHz, 20 °C]: | 9,5 |
| CC-3-V1 | 12,00 % | ε_{⊥} [1 kHz, 20 °C]: | 3,7 |
| CCP-V-1 | 7,00 % | K₁ [pN, 20 °C]: | 15,2 |
| CCP-3-1 | 15,00 % | K₃ [pN, 20 °C]: | 16,6 |
| PY-3-O2 | 4,00 % | γ₁ [mPa·s, 20 °C]: | 118 |
| CPY-3-O2 | 6,00 % | V₀ [20 °C, V]: | 1,71 |

### Beispiel 38

| | | | |
|---|---|---|---|
| PGU-2-F | 4,00 % | Klärpunkt [°C]: | 105,4 |
| PGU-3-F | 8,00 % | Δn [589 nm, 20 °C]: | 0,1710 |
| CGU-2-F | 10,00 % | Δε [1 kHz, 20 °C]: | 10,8 |
| CGU-3-F | 12,00 % | ε_{∥}[1 kHz, 20 °C]: | 15,3 |
| CCP-3F.F.F | 9,00 % | ε_{⊥} [1 kHz, 20°C]: | 4,5 |
| BCH-2F.F | 13,00 % | | |
| BCH-3F.F | 13,00 % | | |
| CCGU-3-F | 3,00 % | | |
| CPGP-5-2 | 8,00 % | | |
| CPGP-5-3 | 8,00 % | | |
| PGP-2-3 | 6,00 % | | |
| PGIGI-3-F | 7,00 % | | |

### Beispiel 38a

Die Mischung aus Beispiel 38 wird zusätzlich mit 5 % RM-41 versetzt.

### Beispiel 39

| | | | |
|---|---|---|---|
| CC-3-V | 20,00 % | Klärpunkt [°C]: | 75,1 |
| CC-3-V1 | 8,00 % | Δn [589 nm, 20 °C]: | 0,1094 |
| CCH-34 | 8,00 % | Δε [1 kHz, 20 °C]: | -3,8 |
| CCP-3-1 | 2,50 % | ε_{∥} [1 kHz, 20 °C]: | 3,6 |
| CLY-3-O2 | 10,00 % | ε_{⊥} [1 kHz, 20 °C]: | 7,4 |
| CLY-3-O3 | 4,00 % | K₁ [pN, 20 °C]: | 14,9 |
| CPY-2-O2 | 10,00 % | K₃ [pN, 20 °C]: | 15,8 |
| CPY-3-O2 | 10,50 % | γ₁ [mPa·s, 20 °C]: | 105 |
| CY-3-O2 | 11,00 % | V₀ [20 °C, V]: | 2,16 |
| PY-3-O2 | 16,00 % | | |

### Beispiel 39a

Die Mischung aus Beispiel 39 wird zusätzlich mit 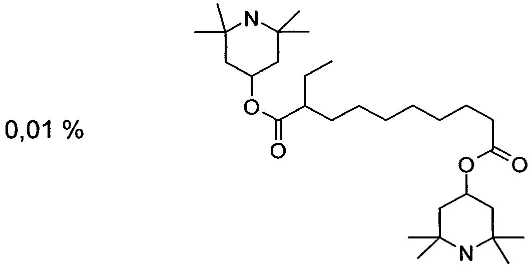 stabilisiert.

### Beispiel 40

| | | | |
|---|---|---|---|
| CY-3-O2 | 15,00 % | Klärpunkt [°C]: | 85 |
| CY-5-O2 | 15,00 % | Δn [589 nm, 20 °C]: | 0,1110 |
| CCY-3-O3 | 7,00 % | Δε [1 kHz, 20 °C]: | -4,9 |
| CCY-4-O2 | 7,00 % | ε_{∥} [1 kHz, 20 °C]: | 3,9 |
| CLY-3-O2 | 2,00 % | ε_{⊥} [1 kHz, 20°C]: | 8,7 |
| CLY-3-O3 | 10,00 % | K₁ [pN, 20 °C]: | 14,7 |
| CPY-2-O2 | 9,00 % | K₃ [pN, 20 °C]: | 15,8 |
| CPY-3-O2 | 9,00 % | γ₁ [mPa·s, 20 °C]: | 173 |
| CC-3-V | 16,00 % | V₀ [20 °C, V]: | 1,91 |
| CC-3-V1 | 4,00 % | | |
| PGP-2-5 | 6,00 % | | |

### Beispiel 41

| | | | |
|---|---|---|---|
| ME2N.F | 2,00 % | Klärpunkt [°C]: | 73 |
| ME3N.F | 3,00 % | Δn [589 nm, 20 °C]: | 0,1521 |
| ME4N.F | 2,50 % | | |
| PCH-3N.F.F | 9,00 % | | |
| PCH-3 | 6,50 % | | |
| PCH-301 | 12,00 % | | |
| CC-4-V | 13,50 % | | |
| CC-3-V1 | 7,00 % | | |
| CCP-V-1 | 9,50 % | | |
| PTP-102 | 5,00 % | | |
| PTP-201 | 5,00 % | | |
| PTP-301 | 5,00 % | | |
| CPTP-301 | 5,00 % | | |
| CPTP-3-1 | 5,00 % | | |
| CPTP-3-2 | 5,00 % | | |
| CPTP-4-1 | 5,00 % | | |

### Beispiel 42

| | | | |
|---|---|---|---|
| CCP-20CF₃ | 5,00 % | Klärpunkt [°C]: | 82,3 |
| CCP-30CF₃ | 5,00 % | Δn [589 nm, 20 °C]: | 0,0885 |
| BCH-3F.F.F | 12,00 % | Δε [1 kHz, 20 °C]: | 6,9 |
| CGU-3-F | 8,00 % | ε_{∥} [1 kHz, 20 °C]: | 10,3 |
| CCP-1F.F.F | 8,00 % | ε_{⊥} [1 kHz, 20 °C]: | 3,4 |
| CCP-2F.F.F | 10,00 % | γ₁ [mPa·s, 20 °C]: | 100 |
| CCP-3F.F.F | 12,00 % | | |
| CC-5-V | 12,00 % | | |
| CCG-V-F | 10,00 % | | |
| CCP-V-1 | 11,00 % | | |
| CC-3-V1 | 7,00 % | | |

### Beispiel 42a

Die Mischung aus Beispiel 42 wird zusätzlich mit 5 % RM-41 versetzt.

### Beispiel 43

| | | | |
|---|---|---|---|
| PGU-2-F | 4,00 % | Klärpunkt [°C]: | 105,4 |
| PGU-3-F | 8,00 % | Δn [589 nm, 20 °C]: | 0,1710 |
| CGU-2-F | 10,00 % | Δε [1 kHz, 20 °C]: | 10,8 |
| CGU-3-F | 12,00 % | ε_{∥} [1 kHz, 20 °C]: | 15,3 |
| CCP-3F.F.F | 9,00 % | ε_{⊥} [1 kHz, 20 °C]: | 4,5 |
| BCH-2F.F | 13,00 % | | |
| BCH-3F.F | 13,00 % | | |
| CCGU-3-F | 3,00 % | | |
| CPGP-5-2 | 8,00 % | | |
| CPGP-5-3 | 8,00 % | | |
| PGP-2-3 | 5,00 % | | |
| PGIGI-3-F | 7,00 % | | |

### Beispiel 43a

Die Mischung aus Beispiel 43 wird zusätzlich mit 5 % RM-41 versetzt.

### Beispiel 44

| | | | |
|---|---|---|---|
| APUQU-2-F | 4,50 % | Klärpunkt [°C]: | 80,5 |
| APUQU-3-F | 12,00 % | Δn [589 nm, 20 °C]: | 0,1013 |
| CC-4-V | 3,50 % | Δε [1 kHz, 20 °C]: | 20,8 |
| CCH-34 | 7,50 % | ε_{∥} [1 kHz, 20 °C]: | 25,6 |
| CCP-3F.F.F | 7,50 % | ε_{⊥} [1 kHz, 20 °C]: | 4,8 |
| CCP-5F.F.F | 5,00 % | K₁ [pN, 20 °C]: | 8,7 |
| CCQU-2-F | 12,00 % | K₃ [pN, 20 °C]: | 13,3 |
| CCQU-3-F | 12,00 % | γ₁ [mPa·s, 20 °C]: | 177 |
| CCQU-5-F | 10,00 % | V₀ [20 °C, V]: | 0,68 |
| PGUQU-3-F | 2,50 % | | |
| PUQU-3-F | 16,50 % | | |
| PGU-3-F | 4,00 % | | |
| CCPC-33 | 3,00 % | | |

### Beispiel 44a

Die Mischung aus Beispiel 44 wird zusätzlich mit 5 % RM-41 versetzt.

### Beispiel 45

| | | | |
|---|---|---|---|
| CY-3-O2 | 15,00 % | Klärpunkt [°C]: | 84,8 |
| CY-3-O4 | 5,00 % | Δn [589 nm, 20 °C]: | 0,1102 |
| CY-5-O2 | 12,00 % | Δε [1 kHz, 20 °C]: | -4,7 |
| CCY-3-O2 | 7,00 % | ε_{∥} [1 kHz, 20 °C]: | 3,9 |
| CCY-4-O2 | 7,00 % | ε_{⊥} [1 kHz, 20°C]: | 8,6 |
| CLY-3-O2 | 4,00 % | K₁ [pN, 20 °C]: | 14,6 |
| CLY-3-O3 | 8,00 % | K₃ [pN, 20 °C]: | 16,2 |
| CPY-2-O2 | 7,00 % | γ₁ [mPa·s, 20 °C]: | 167 |
| CPY-3-O2 | 7,00 % | V₀ [20 °C, V]: | 1,95 |
| CC-3-V | 20,00 % | | |
| PGP-2-5 | 5,00 % | | |
| CPGP-5-3 | 3,00 % | | |

### Beispiel 46

| | | | |
|---|---|---|---|
| CY-3-O2 | 15,00 % | Klärpunkt [°C]: | 85,7 |
| CY-3-O4 | 3,00 % | Δn [589 nm, 20 °C]: | 0,1093 |
| CY-5-O2 | 12,00 % | Δε [1 kHz, 20 °C]: | -4,7 |
| CCY-3-O2 | 8,00 % | ε_{∥} [1 kHz, 20 °C]: | 3,8 |
| CCY-4-O2 | 8,00 % | ε_{⊥} [1 kHz, 20 °C]: | 8,5 |
| C LY-3-O2 | 4,00 % | K₁ [pN, 20 °C]: | 15,0 |
| CLY-3-O3 | 8,00 % | K₃ [pN, 20 °C]: | 17,0 |
| CPY-2-O2 | 7,00 % | γ₁ [mPa·s, 20 °C]: | 164 |
| CPY-3-O2 | 7,00 % | V₀ [20 °C, V]: | 2,01 |
| CC-3-V | 20,00 % | | |
| PP-1-2V1 | 4,00 % | | |
| CPGP-5-2 | 2,00 % | | |
| CPGP-5-3 | 2,00 % | | |

### Beispiel 47

| | | | |
|---|---|---|---|
| PUQU-3-F | 10,00 % | Klärpunkt [°C]: | 101,2 |
| APUQU-2-F | 5,00 % | Δn [589 nm, 20 °C]: | 0,1089 |
| APUQU-3-F | 5,00 % | Δε [1 kHz, 20 °C]: | 8,1 |
| DPGU-4-F | 4,00 % | ε_{∥} [1 kHz, 20 °C]: | 12,1 |
| CCGU-3-F | 6,00 % | ε_{⊥} [1 kHz, 20°C]: | 3,9 |
| BCH-3F.F.F | 6,00 % | K₁ [pN, 20 °C]: | 14,5 |
| CC-3-V | 26,00 % | K₃ [pN, 20 °C]: | 16,2 |
| CCP-V-1 | 16,00 % | γ₁ [mPa·s, 20 °C]: | 116 |
| CCP-V2-1 | 9,50 % | V₀ [20 °C, V]: | 1,12 |
| BCH-32 | 2,00 % | | |
| PPGU-3-F | 0,50 % | | |
| CY-5-O2 | 5,00 % | | |
| CCY-4-O2 | 5,00 % | | |

### Beispiel 48

| | | | |
|---|---|---|---|
| PUQU-3-F | 9,00 % | Klärpunkt [°C]: | 101,8 |
| APUQU-2-F | 6,00 % | Δn [589 nm, 20 °C]: | 0,1096 |
| APUQU-3-F | 6,00 % | Δε [1 kHz, 20 °C]: | 7,9 |
| DPGU-4-F | 3,50 % | ε_{∥} [1 kHz, 20 °C]: | 11,5 |
| CCGU-3-F | 8,00 % | ε_{⊥} [1 kHz, 20 °C]: | 3,6 |
| CC-3-V | 32,00 % | K₁ [pN, 20 °C]: | 14,9 |
| CCP-V-1 | 10,00 % | K₃ [pN, 20 °C]: | 16,3 |
| CCP-V2-1 | 10,00 % | γ₁ [mPa·s, 20 °C]: | 111 |
| PPGU-3-F | 0,50 % | V₀ [20 °C, V]: | 1,49 |
| CCY-2-1 | 5,00 % | | |
| CCY-3-1 | 5,00 % | | |
| PYP-2-4 | 5,00 % | | |

### Beispiel 49

| | | | |
|---|---|---|---|
| CCH-35 | 10,00 % | Klärpunkt [°C]: | 74,9 |
| CCH-501 | 11,00 % | Δn [589 nm, 20 °C]: | 0,0904 |
| CCY-2-1 | 7,00 % | Δε [1 kHz, 20 °C]: | -3,3 |
| CCY-3-1 | 8,00 % | ε_{∥} [1 kHz, 20 °C]: | 3,5 |
| CCY-3-O2 | 9,00 % | ε_{⊥} [1 kHz, 20 °C]: | 6,7 |
| CCY-5-O2 | 6,00 % | K₁ [pN, 20 °C]: | 14,1 |
| C PY-2-O2 | 9,00 % | K₃ [pN, 20 °C]: | 13,7 |
| CPY-3-O2 | 8,00 % | γ₁ [mPa·s, 20 °C]: | 156 |
| CY-3-O4 | 9,00 % | V₀ [20 °C, V]: | 2,16 |
| CY-5-O4 | 9,00 % | | |
| PCH-53 | 14,00 % | | |

### Beispiel 49a

Die Mischung aus Beispiel 49 wird zusätzlich mit 0,4 % RM-1 versetzt.

### Beispiel 50

| | | | |
|---|---|---|---|
| CC-3-V | 38,00 % | Klärpunkt [°C]; | 75,6 |
| CCY-3-O1 | 8,00 % | Δn [589 nm, 20 °C]: | 0,0974 |
| CCY-3-O2 | 3,00 % | K₁ [pN, 20 °C]: | 13,3 |
| C LY-3-O2 | 7,00 % | K₃ [pN, 20 °C]: | 15,1 |
| CPY-2-O2 | 10,00 % | V₀ [20 °C, V]: | 2,28 |
| CPY-3-O2 | 10,00 % | | |
| CY-3-O2 | 13,00 % | | |
| CY-3-O4 | 5,00 % | | |
| PP-1-2V1 | 3,00 % | | |
| PYP-2-4 | 3,00 % | | |

### Beispiel 50a

Die Mischung aus Beispiel 50 wird zusätzlich mit 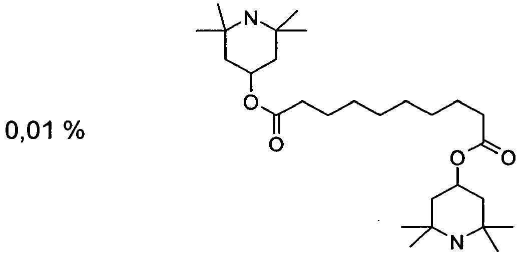 stabilisiert.

### Beispiel 51

| | | | |
|---|---|---|---|
| CC-3-V | 36,00 % | Klärpunkt [°C]: | 74,9 |
| CC-3-V1 | 2,50 % | Δn [589 nm, 20 °C]: | 0,1009 |
| CCY-3-O1 | 8,00 % | Δε [1 kHz, 20 °C]: | -3,5 |
| CCY-4-O2 | 4,50 % | K₁ [pN, 20 °C]: | 13,1 |
| CCY-5-O2 | 2,50 % | K₃ [pN, 20 °C]: | 14,4 |
| CLY-3-O2 | 6,50 % | γ₁ [mPa·s, 20 °C]: | 95 |
| CLY-3-O3 | 5,00 % | V₀ [20 °C, V]: | 2,14 |
| CPY-2-O2 | 7,50 % | | |
| CPY-3-O2 | 5,00 % | | |
| CY-3-O2 | 5,00 % | | |
| PY-3-O2 | 12,50 % | | |
| PY-1-O4 | 5,00 % | | |

### Beispiel 51a

Die Mischung aus Beispiel 51 wird zusätzlich mit 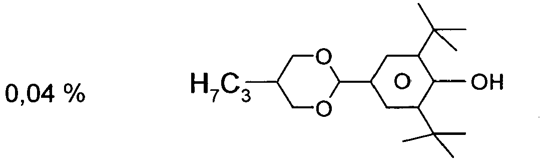 und 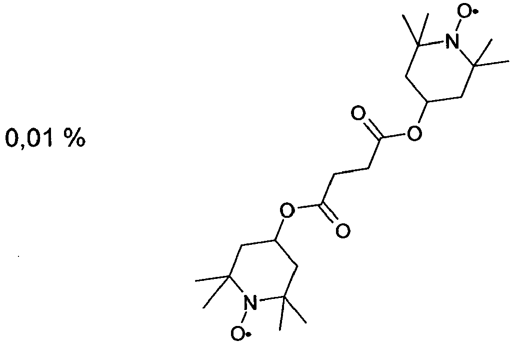 stabilisiert.

### Beispiel 52

| | | | |
|---|---|---|---|
| BCH-32 | 6,00 % | Klärpunkt [°C]: | 85,1 |
| CC-3-V | 14,50 % | Δn [589 nm, 20 °C]: | 0,1123 |
| CC-3-V1 | 6,00 % | Δε [1 kHz, 20 °C]: | -4,7 |
| CCY-3-O1 | 6,00 % | ε_{∥} [1 kHz, 20 °C]: | 4,1 |
| CCY-3-O2 | 7,00 % | ε_{⊥} [1 kHz, 20°C]: | 8,8 |
| CCY-3-O3 | 3,00 % | | |
| CCY-4-O3 | 6,50 % | | |
| CLY-3-O2 | 7,00 % | | |
| CLY-3-O3 | 7,00 % | | |
| CPY-2-O2 | 7,00 % | | |
| CPY-3-O2 | 7,00 % | | |
| PY-3-O2 | 6,00 % | | |
| PY-4-O2 | 7,00 % | | |
| PYP-2-3 | 1,00 % | | |
| Y-4O-O4 | 9,00 % | | |

### Beispiel 52a

Die Mischung aus Beispiel 52 wird zusätzlich mit 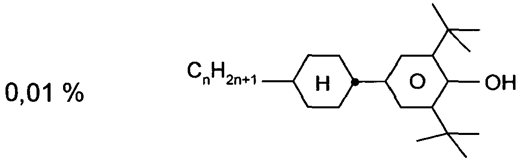 stabilisiert.

### Beispiel 52b

Die Mischung aus Beispiel 52 wird zusätzlich mit 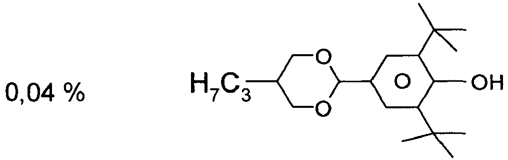 und 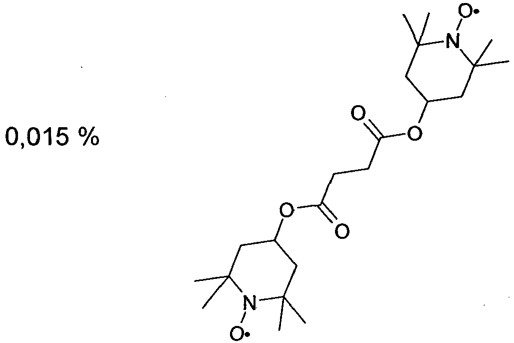 stabilisiert.

### Beispiel 53

| | |
|---|---|
| CC-3-V | 25,00 % |
| CCH-34 | 12,00 % |
| PY-3-O2 | 9,00 % |
| CEY-3-O2 | 9,00 % |
| CCP-31 | 4,50 % |
| CCY-V-O1 | 4,50 % |
| CCY-V-O2 | 11,00 % |
| CCP-301 | 2,00 % |
| CCP-33 | 6,50 % |
| CAIY-3-O2 | 9,00 % |
| CCY-V-O4 | 7,50 % |

### Beispiel 53a

Die Mischung aus Beispiel 53 wird zusätzlich mit 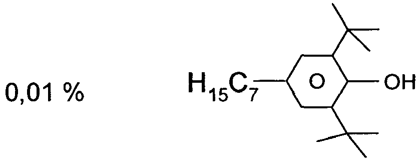 stabilisiert.

### Beispiel 54

| | | | |
|---|---|---|---|
| CDUQU-3-F | 5,00 % | Klärpunkt [°C]: | 100 |
| DGUQU-4-F | 1,50 % | Δn [589 nm, 20 °C]: | 0,1147 |
| DPGU-4-F | 1,00 % | Δε [1 kHz, 20 °C]: | 4,8 |
| PGUQU-3-F | 3,50 % | ε_{∥} [1 kHz, 20 °C]: | 7,6 |
| PGUQU-4-F | 3,00 % | ε_{⊥} [1 kHz, 20°C]: | 2,9 |
| PGUQU-5-F | 2,00 % | K₁ [pN, 20 °C]: | 16,5 |
| CCP-30CF₃ | 6,00 % | K₃ [pN, 20 °C]: | 18,8 |
| CCP-V-1 | 14,50 % | γ₁ [mPa·s, 20 °C]: | 75 |
| CCVC-3-V | 5,00 % | V₀ [20 °C, V]: | 1,95 |
| PGP-1-2V | 3,50 % | | |
| PGP-2-2V | 6,00 % | | |
| PGP-3-2V | 3,00 % | | |
| CC-3-2V1 | 1,50 % | | |
| CC-3-V | 31.00 % | | |
| CC-3-V1 | 8,00 % | | |
| PCH-302 | 2,50 % | | |
| PP-1-2V1 | 3,00 % | | |

### Beispiel 55

| | | | |
|---|---|---|---|
| APUQU-2-F | 2,50 % | Klärpunkt [°C]: | 97,5 |
| APUQU-3-F | 7,00 % | Δn [589 nm, 20 °C]: | 0,1000 |
| PGUQU-3-F | 4,00 % | Δε [1 kHz, 20 °C]: | 8,0 |
| PGUQU-4-F | 4,00 % | ε_{∥} [1 kHz, 20 °C]: | 11,1 |
| PUQU-3-F | 4,00 % | ε_{⊥} [1 kHz, 20 °C]: | 3,1 |
| CCP-V-1 | 6,00 % | K₁ [pN, 20 °C]: | 15,3 |
| CCP-V2-1 | 14,00 % | K₃ [pN, 20 °C]: | 17,6 |
| CCGU-3-F | 3,50 % | γ₁ [mPa·s, 20 °C]: | 93 |
| CCQU-3-F | 10,00 % | V₀ [20 °C, V]: | 1,45 |
| PCH-302 | 6,50 % | | |
| CC-3-V | 25,00 % | | |
| CC-3-V1 | 8,00 % | | |
| CCP-30CF₃ | 5,00 % | | |
| PPGU-n-F | 0,50 % | | |

### Beispiel 55a

Die Mischung aus Beispiel 55 wird zusätzlich mit 0,25 % RM-41 versetzt.

### Beispiel 56

| | | | |
|---|---|---|---|
| PGUQU-3-F | 2,50 % | Klärpunkt [°C]: | 84,8 |
| CCQU-3-F | 7,00 % | Δn [589 nm, 20 °C]: | 0,1035 |
| CCQU-5-F | 4,00 % | Δε [1 kHz, 20 °C]: | 8,0 |
| PUQU-3-F | 4,00 % | ε_{∥} [1 kHz, 20 °C]: | 11,1 |
| APUQU-2-F | 4,00 % | ε_{⊥} [1 kHz, 20 °C]: | 3,1 |
| APUQU-3-F | 6,00 % | K₁ [pN, 20 °C]: | 15,3 |
| CC-3-V | 14,00 % | K₃ [pN, 20 °C]: | 17,6 |
| CC-3-V1 | 3,50 % | γ₁ [mPa·s, 20 °C]: | 93 |
| CCP-V-1 | 10,00 % | V₀ [20 °C, V]: | 1,45 |
| CCP-V2-1 | 6,50 % | | |
| PPGU-3-F | 25,00 % | | |
| BCH-3F.F | 8,00 % | | |
| BCH-2F.F | 5,00 % | | |

### Beispiel 56a

Die Mischung aus Beispiel 56 wird zusätzlich mit 0,25 % RM-35 versetzt. 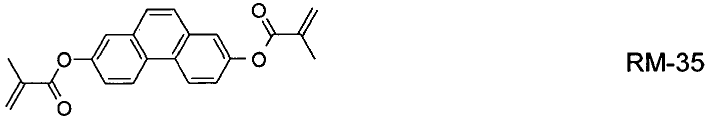 versetzt.

### Beispiel 57

| | | | |
|---|---|---|---|
| APUQU-3-F | 6,00 % | Klärpunkt [°C]: | 112,1 |
| PGUQU-4-F | 4,50 % | Δn [589 nm, 20 °C]: | 0,1001 |
| PUQU-3-F | 3,00 % | Δε [1 kHz, 20 °C]: | 5,9 |
| CCGU-3-F | 6,00 % | ε_{∥} [1 kHz, 20 °C]: | 8,7 |
| CCQU-3-F | 2,50 % | ε_{⊥} [1 kHz, 20 °C]: | 2,8 |
| CCQU-5-F | 5,00 % | K₁ [pN, 20 °C]: | 16,3 |
| CC-3-V | 25,00 % | K₃ [pN, 20 °C]: | 21,1 |
| CC-3-V1 | 8,00 % | γ₁ [mPa·s, 20 °C]: | 105 |
| CCP-V-1 | 17,00 % | V₀ [20 °C, V]: | 1,76 |
| CCP-V2-1 | 14,00 % | | |
| BCH-3F.F | 5,50 % | | |
| PPGU-3-F | 0,50 % | | |
| CCP-30CF₃ | 3,00 % | | |

### Beispiel 57a

Die Mischung aus Beispiel 57 wird zusätzlich mit 0,25 % RM-41 versetzt.

## Patentansprüche

1. Mischvorrichtung (1) zur Herstellung von Flüssigkristallmischungen mit einem Mischbehälter (2), der ein Gehäuse mit einem einen Innenraum (3) umgebenden Mantel (4), mit einem nach außen gewölbten Boden (5) und mit einem Deckel (6) aufweist, mit einem in dem Mischbehälter (2) angeordneten Rührwerk (7) und mit einer an dem Mischbehälter (2) angeordneten Entnahmeöffnung (8), wobei in dem dem Boden (5) gegenüberliegend angeordneten Deckel (6) mindestens eine Behälteröffnung (9) mit einer Schnellanschlusseinrichtung angeordnet ist, wobei das Rührwerk (7) unten seitlich oder von oben in den Innenraum (3) eingeführt ist und wobei die Entnahmeöffnung (8) zentrisch in dem Boden (5) angeordnet ist und ein Bodenablaufventil (10) aufweist, **dadurch gekennzeichnet, dass** am Boden (5) mindestens ein Stromstörer (11) angebracht ist.

2. Mischvorrichtung (1) nach Anspruch 1, **dadurch gekennzeichnet, dass** die Mischvorrichtung (1) eine haftungsmindernde Innenbeschichtung aufweist.

3. Mischvorrichtung (1) nach Anspruch 1 oder 2, **dadurch gekennzeichnet, dass** im Innenraum (3) der Mischvorrichtung (1) Heiz- und/oder Kühlelemente angeordnet sind.

4. Mischvorrichtung (1) nach einem oder mehreren der Ansprüche 1 bis 3, **dadurch gekennzeichnet, dass** das Gehäuse einen Thermostatisierungsmantel aufweist.

5. Mischvorrichtung (1) nach einem oder mehreren der Ansprüche 1 bis 4, **dadurch gekennzeichnet, dass** die Mischvorrichtung (1) weitere Behälteröffnungen (9) mit Schnellanschlusseinrichtungen für Filter, für Aufreinigungssysteme, für Mittel zur Probeentnahme, für Sicherheitsvorrichtungen und für Inertisierungsmittel im Mantel und/oder im Boden aufweist.

6. Mischvorrichtung (1) nach einem oder mehreren der Ansprüche 1 bis 5, **dadurch gekennzeichnet, dass** in die Mischvorrichtung (1) Mittel zur Temperatur- und/oder Druckmessung eingebracht sind.

7. Mischvorrichtung (1) nach einem oder mehreren der Ansprüche 1 bis 6, **dadurch gekennzeichnet, dass** Griffe (12) und Rollen (13) zum Transport der Mischvorrichtung an Seiten des Mischbehälters (2) angeordnet sind.

8. Mischvorrichtung (1) nach einem oder mehreren der Ansprüche 1 bis 7, **dadurch gekennzeichnet, dass** das Rührwerk (7) mechanisch oder magnetisch betrieben ist.

9. Mischvorrichtung (1) nach einem oder mehreren der Ansprüche 1 bis 9, **dadurch gekennzeichnet, dass** im Deckel (6) ein Mannloch mit Sichtscheibe vorgesehen ist.

10. Mischvorrichtung (1) nach einem oder mehreren der Ansprüche 1 bis 9, **dadurch gekennzeichnet, dass** der Boden (5) konisch ausgestaltet ist.

11. Mischvorrichtung (1) nach einem oder mehreren der Ansprüche 1 bis 10, **dadurch gekennzeichnet, dass** der Mischbehälter (2) aus Edelstahl gefertigt ist.

12. Mischvorrichtung (1) nach einem oder mehreren der Ansprüche 1 bis 11, **dadurch gekennzeichnet, dass** der Deckel (6) flach oder gewölbt ausgestaltet ist.

13. Verwendung einer Mischvorrichtung (1) nach einem oder mehreren der Ansprüche 1 bis 12 zum Mischen von Fluiden, Fluiden mit Flüssigkeiten, Feststoffen und/oder Gasen.

14. Verwendung nach Anspruch 13, wobei die zu mischenden Fluide verschiedene Viskositäten besitzen.

15. Verwendung einer Mischvorrichtung (1) nach Anspruch 13 oder 14 zur Herstellung einer flüssigkristallinen Mischung.

16. Verwendung einer Mischvorrichtung (1) nach Anspruch 15 zur Herstellung einer flüssigkristallinen Mischung, **dadurch gekennzeichnet, dass** zwei oder mehrere organische Substanzen miteinander gemischt werden, die ausgewählt sind aus den Verbindungen der allgemeinen Formel I 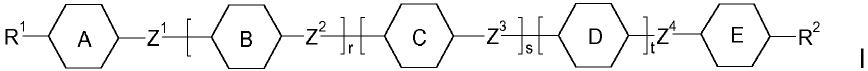 worin
R¹ und R² jeweils unabhängig voneinander H, einen unsubstituierten, einen einfach durch CN oder CF₃ oder mindestens einfach durch Halogen substituierten Alkylrest mit bis zu 15 C-Atomen, wobei in diesen Resten auch eine oder mehrere CH₂-Gruppen durch -O-, -S-, 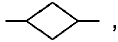 -C≡C-, -CH=CH-, -CF₂O-, -OCF₂-, -OC-O- oder -O-CO- so ersetzt sein können, dass O-Atome nicht direkt miteinander verknüpft sind, und einer der Reste R¹, R² auch F, Cl, CN, SF₅, NCS, SCN, OCN,
Ringe A, B, C, D, E jeweils unabhängig voneinander 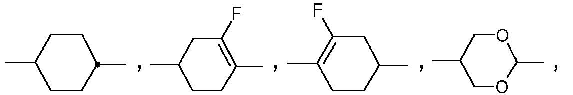 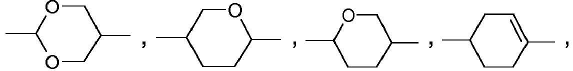 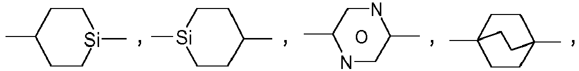 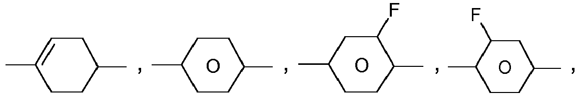 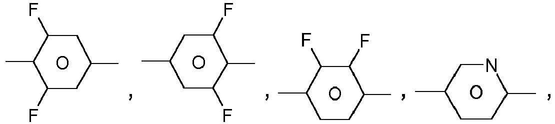 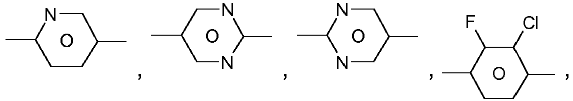 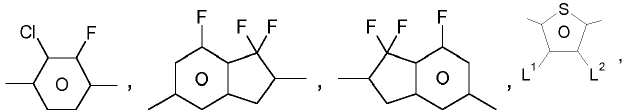 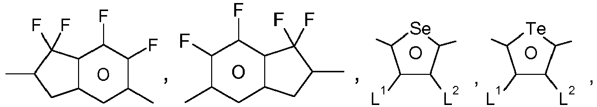 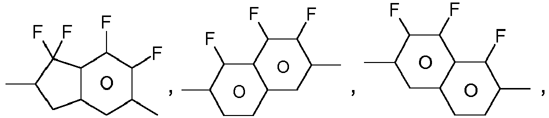 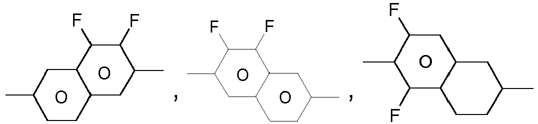 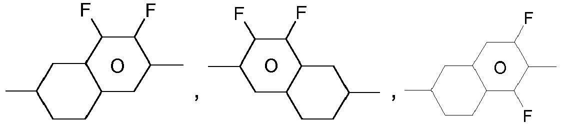 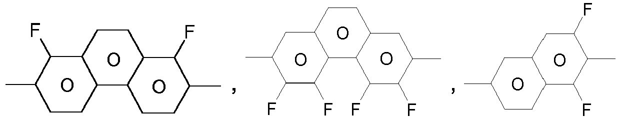 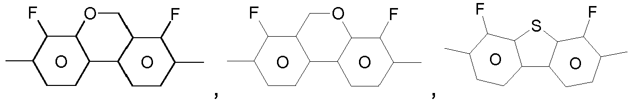 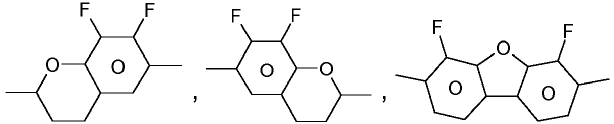
r, s und t jeweils unabhängig voneinander 0, 1, 2 oder 3, wobei r + s+ t ≤ 3 ist,
Z¹⁻⁴ jeweils unabhängig voneinander -CO-O-, -O-CO-, -CF₂O-, -OCF₂-, -CH₂O-, -OCH₂-, -CH₂CH₂-, -(CH₂)₄-, -CH=CH-CH₂O-, -C₂F₄-, -CH₂CF₂-, -CF₂CH₂-, -CF=CF-, -CH=CF-, -CF=CH-, -CH=CH-, -C≡C- oder eine Einfachbindung, und
L¹ und L² jeweils unabhängig voneinander H oder F,
bedeuten.

## Claims

1. Mixing device (1) for the preparation of liquid-crystal mixtures, having a mixing container (2), which has a housing with a jacket (4) surrounding an interior space (3), with a base (5) curved towards the outside and with a lid (6), with a stirrer (7) arranged in the mixing container (2) and with a removal opening (8) arranged on the mixing container (2), where at least one container opening (9) having a quick-fit connector is arranged in the lid (6), which is arranged opposite the base (5), where the stirrer (7) is introduced into the interior space (3) at the bottom from the side or from the top and where the removal opening (8) is arranged centrally in the base (5) and has a base discharge valve (10), **characterised in that** at least one baffle (11) is installed on the base (5).

2. Mixing device (1) according to Claim 1, **characterised in that** the mixing device (1) has an adhesion-reducing internal coating.

3. Mixing device (1) according to Claim 1 or 2, **characterised in that** heating and/or cooling elements are arranged in the interior space (3) of the mixing device (1).

4. Mixing device (1) according to one or more of Claims 1 to 3, **characterised in that** the housing has a thermostatting jacket.

5. Mixing device (1) according to one or more of Claims 1 to 4, **characterised in that** the mixing device (1) has further container openings (9) having quick-fit connectors in the jacket and/or in the base for filters, for cleaning systems, for sampling means, for safety devices and for inertisation media.

6. Mixing device (1) according to one or more of Claims 1 to 5, **characterised in that** means for temperature and/or pressure measurement are introduced into the mixing device (1).

7. Mixing device (1) according to one or more of Claims 1 to 6, **characterised in that** handles (12) and rollers (13) for transport of the mixing device are arranged on the sides of the mixing container (2).

8. Mixing device (1) according to one or more of Claims 1 to 7, **characterised in that** the stirrer (7) is operated mechanically or magnetically

9. Mixing device (1) according to one or more of Claims 1 to 8, **characterised in that** a manhole with inspection window is provided in the lid (6).

10. Mixing device (1) according to one or more of Claims 1 to 9, **characterised in that** the base (5) has a conical shape.

11. Mixing device (1) according to one or more of Claims 1 to 10, **characterised in that** the mixing container (2) is made from stainless steel.

12. Mixing device (1) according to one or more of Claims 1 to 11, **characterised in that** the lid (6) has a flat or curved shape.

13. Use of a mixing device (1) according to one or more of Claims 1 to 12 for mixing fluids, fluids with liquids, solids and/or gases.

14. Use according to Claim 13, where the fluids to be mixed have different viscosities.

15. Use of a mixing device (1) according to Claim 13 or 14 for the preparation of a liquid-crystalline mixture.

16. Use of a mixing device (1) according to Claim 15 for the preparation of a liquid-crystalline mixture, **characterised in that** two or more organic substances selected from the compounds of the general formula I, 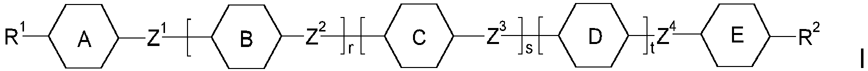 in which
R¹ and R² in each case, independently of one another, denote H, an alkyl radical having up to 15 C atoms which is unsubstituted, monosubstituted by CN or CF₃ or at least monosubstituted by halogen, where, in addition, one or more CH₂ groups in these radicals may be replaced by -O-, -S-, 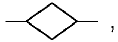 -C≡C-, -CH=CH-, -CF₂O-, -OCF₂-, -OC-O- or -O-CO- in such a way that O atoms are not linked directly to one another, and one of the radicals R¹ and R² also denotes F, Cl, CN, SF₅, NCS, SCN or OCN,
rings A, B, C, D and E in each case, independently of one another, denote 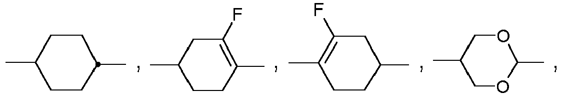 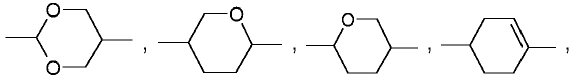 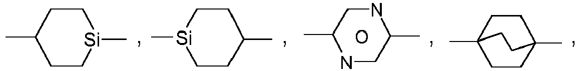 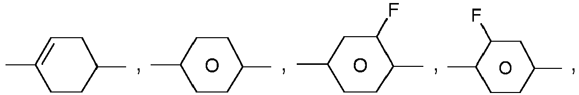 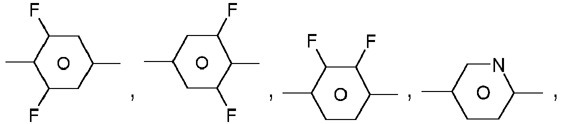 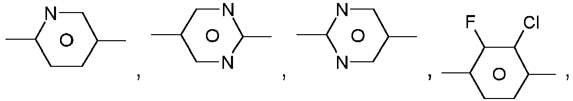 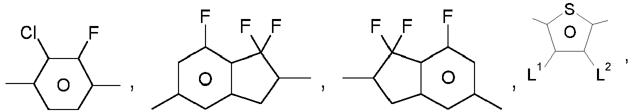 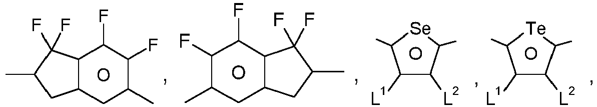 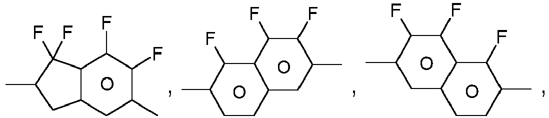 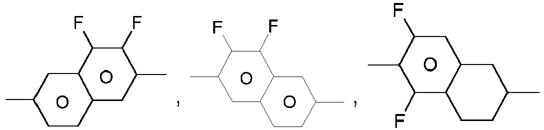 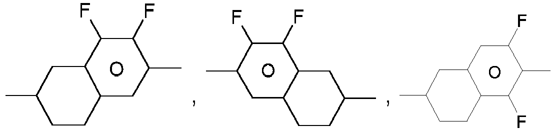 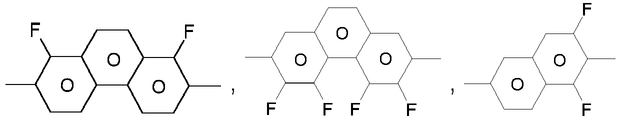 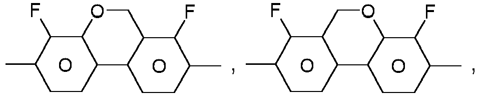 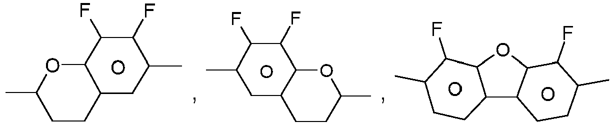
r, s and t in each case, independently of one another, denote 0, 1, 2 or 3, where r + s + t is ≤ 3,
Z¹⁻⁴ in each case, independently of one another, denote -CO-O-, -O-CO-, -CF₂O-, -OCF₂-, -CH₂O-, -OCH₂-, -CH₂CH₂-, -(CH₂)₄-, -CH=CH-CH₂O-, -C₂F₄-, -CH₂CF₂-, -CF₂CH₂-, -CF=CF-, -CH=CF-, -CF=CH-, -CH=CH-, -C≡C- or a single bond, and
L¹ and L² in each case, independently of one another, denote H or F,
are mixed with one another.

## Revendications

1. Dispositif de mélange (1) pour la préparation de mélanges de cristaux liquides, comportant un conteneur de mélange (2), lequel comporte un logement qui comprend une enveloppe (4) qui entoure un espace intérieur (3), une base (5) qui est incurvée en direction de l'extérieur et un couvercle (6), un agitateur (7) qui est agencé dans le conteneur de mélange (2) et une ouverture de prélèvement (8) qui est agencée sur le conteneur de mélange (2), dans lequel au moins une ouverture de conteneur (9) qui comporte un connecteur à ajustement rapide est agencée dans le couvercle (6), laquelle est agencée à l'opposé de la base (5), dans lequel l'agitateur (7) est introduit à l'intérieur de l'espace intérieur (3) au niveau du fond depuis le côté ou depuis le sommet et dans lequel l'ouverture de prélèvement (8) est agencée de façon centrale dans la base (5) et comporte une vanne de décharge de base (10), **caractérisé en ce qu'**au moins une chicane (11) est installée sur la base (5).

2. Dispositif de mélange (1) selon la revendication 1, **caractérisé en ce que** le dispositif de mélange (1) comporte un revêtement interne de réduction d'adhérence.

3. Dispositif de mélange (1) selon la revendication 1 ou 2, **caractérisé en ce que** des éléments de chauffage et/ou de refroidissement sont agencés dans l'espace intérieur (3) du dispositif de mélange (1).

4. Dispositif de mélange (1) selon une ou plusieurs des revendications 1 à 3, **caractérisé en ce que** le logement comporte une enveloppe de thermostatisation.

5. Dispositif de mélange (1) selon une ou plusieurs des revendications 1 à 4, **caractérisé en ce que** le dispositif de mélange (1) comporte en outre des ouvertures de conteneur (9) qui comportent des connecteurs à ajustement rapide dans l'enveloppe et/ou dans la base pour des filtres, pour des systèmes de nettoyage, pour des moyens d'échantillonnage, pour des dispositifs de sécurité et pour des supports d'inertisation.

6. Dispositif de mélange (1) selon une ou plusieurs des revendications 1 à 5, **caractérisé en ce que** des moyens pour la mesure de la température et/ou de la pression sont introduits à l'intérieur du dispositif de mélange (1).

7. Dispositif de mélange (1) selon une ou plusieurs des revendications 1 à 6, **caractérisé en ce que** des poignées (12) et des roulettes (13) pour le transport du dispositif de mélange sont agencés sur les côtés du conteneur de mélange (2).

8. Dispositif de mélange (1) selon une ou plusieurs des revendications 1 à 7, **caractérisé en ce que** l'agitateur (7) est actionné mécaniquement ou magnétiquement

9. Dispositif de mélange (1) selon une ou plusieurs des revendications 1 à 8, **caractérisé en ce qu'**un trou d'homme muni d'une fenêtre d'inspection est prévu dans le couvercle (6).

10. Dispositif de mélange (1) selon une ou plusieurs des revendications 1 à 9, **caractérisé en ce que** la base (5) présente une forme conique.

11. Dispositif de mélange (1) selon une ou plusieurs des revendications 1 à 10, **caractérisé en ce que** le conteneur de mélange (2) est fabriqué à partir d'acier inoxydable.

12. Dispositif de mélange (1) selon une ou plusieurs des revendications 1 à 11, **caractérisé en ce que** le couvercle (6) présente une forme plane ou incurvée.

13. Utilisation d'un dispositif de mélange (1) selon une ou plusieurs des revendications 1 à 12 pour le mélange de fluides, de fluides avec des liquides, des solides et/ou des gaz.

14. Utilisation selon la revendication 13, dans laquelle les fluides qui doivent être mélangés présentent des viscosités différentes.

15. Utilisation d'un dispositif de mélange (1) selon la revendication 13 ou 14 pour la préparation d'un mélange de cristaux liquides.

16. Utilisation d'un dispositif de mélange (1) selon la revendication 15 pour la préparation d'un mélange de cristaux liquides, **caractérisée en ce que** deux substances organiques ou plus qui sont sélectionnées parmi les composés de la formule générale I, 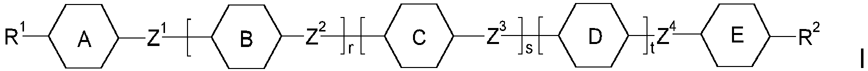 dans laquelle
R¹ et R² représentent dans chaque cas, de manière indépendante l'un de l'autre, H, un radical alkyle qui comporte jusqu'à 15 atomes de C, lequel est non substitué, monosubstitué par CN ou par CF₃ ou au moins monosubstitué par halogène, où, en outre, un ou plusieurs groupe(s) CH₂ dans ces radicaux peut/peuvent être remplacé(s) par -O-, -S-, 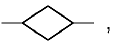 -CH=CH-, -CF₂O-, -OCF₂-, -OC-O- ou -O-CO- de telle sorte que des atomes de O ne soient pas liés directement les uns aux autres, et l'un des radicaux R¹ et R² représente également F, Cl, CN, SF₅, NCS, SCN ou OCN,
les cycles A, B, C, D et E représentent dans chaque cas, de manière indépendante les uns des autres, 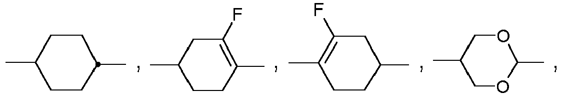 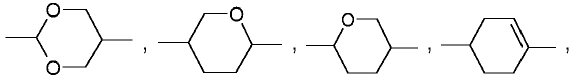 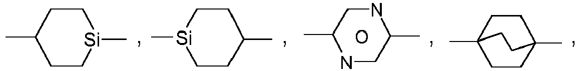 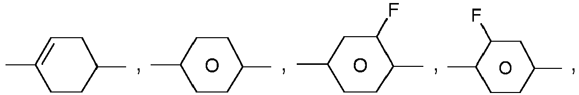 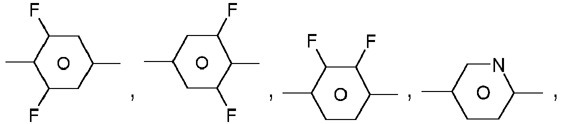 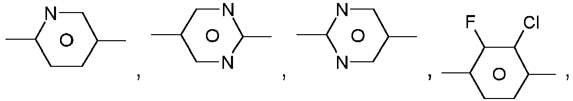 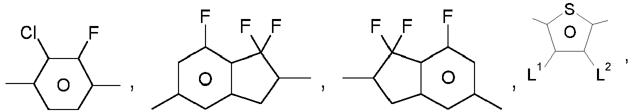 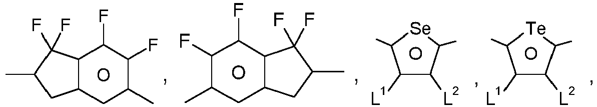 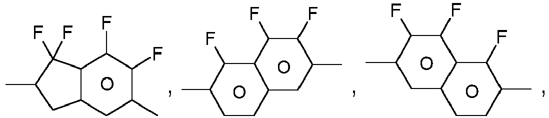 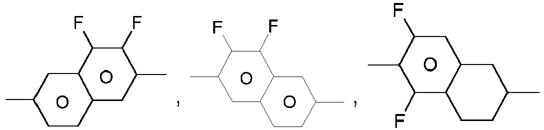 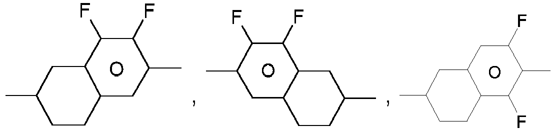 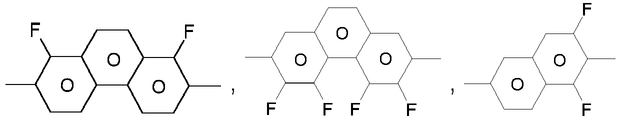 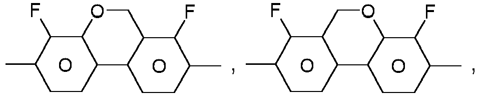 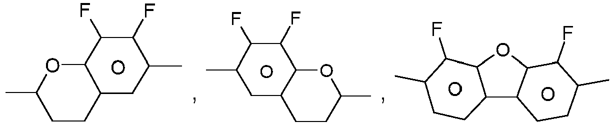
r, s et t représentent dans chaque cas, de manière indépendante les uns des autres, 0, 1, 2 ou 3, où r + s + t est ≤ 3,
Z¹⁻⁴ représentent dans chaque cas, de manière indépendante les uns des autres, -CO-O-, -O-CO-, -CF₂O-, -OCF₂-, -CH₂O-, -OCH₂-, -CH₂CH₂-, -(CH₂)₄-, -CH=CH-CH₂O-, -C₂F₄-, -CH₂CF₂-, -CF₂CH₂-, -CF=CF-, -CH=CF-, -CF=CH-, -CH=CH-, -C≡C- ou une liaison simple, et
L¹ et L² représentent dans chaque cas, de manière indépendante l'un de l'autre, H ou F,
sont mélangées l'une avec l'autre ou les unes avec les autres.
